# EUROPÄISCHE PATENTSCHRIFT

(11) **EP 1 095 105 B1**
(45) Veröffentlichungstag und Bekanntmachung des Hinweises auf die Patenterteilung: **29.01.2003**
(21) Anmeldenummer: 99936477.1
(22) Anmeldetag: 05.07.1999
(51) Int. Cl.: C09B 67/22, C09B 62/513, C09B 62/475

(54) **REAKTIVFARBSTOFFE, DEREN HERSTELLUNG UND DEREN VERWENDUNG**
REACTIVE COLORANTS, PRODUCTION AND USE THEREOF
COLORANTS REACTIFS, LEUR PRODUCTION ET LEUR UTILISATION

(30) Priorität: 13.07.1998 EP 98810659
(43) Veröffentlichungstag der Anmeldung: 02.05.2001
(73) Patentinhaber: Ciba Specialty Chemicals Holding Inc., 4057 Basel (CH)
(72) Erfinder: TZIKAS, Athanassios, CH-4133 Pratteln (CH); DEITZ, Rolf, D-79639 Grenzach-Wyhlen (DE)
(86) Internationale Anmeldenummer: EP9904647
(87) Internationale Veröffentlichungsnummer: WO00004099

(56) Entgegenhaltungen:
- EP-A- 0 568 816
- EP-A- 0 617 089

## Beschreibung

Die vorliegende Erfindung betrifft neue Reaktivfarbstoffe, Verfahren zu ihrer Herstellung und ihre Verwendung.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind somit Verbindungen der Formel (1) 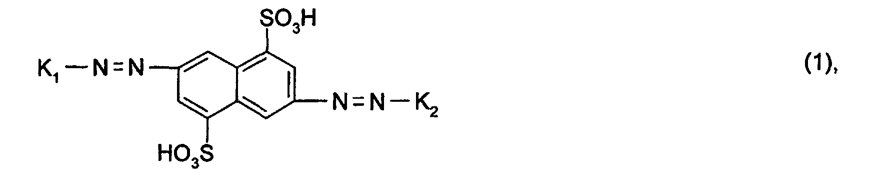 worin
K₁ und K₂ unabhängig voneinander je einen Rest der Formel 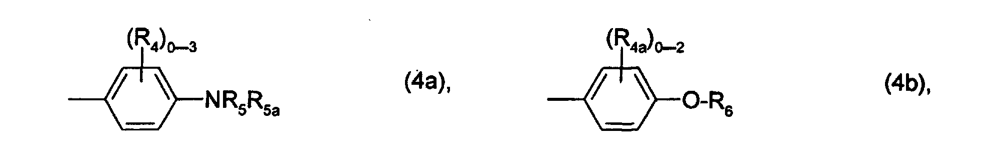 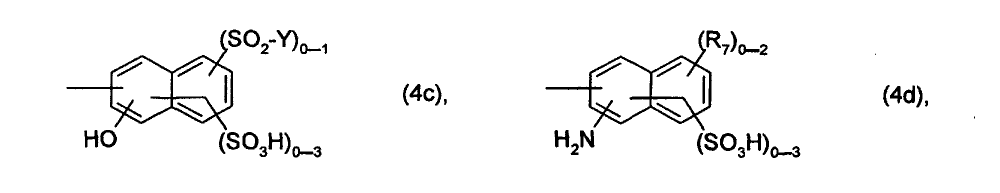 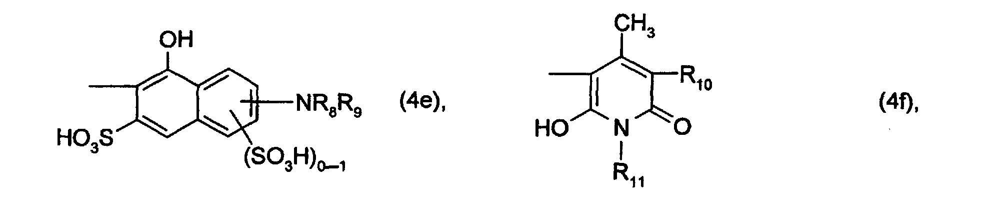 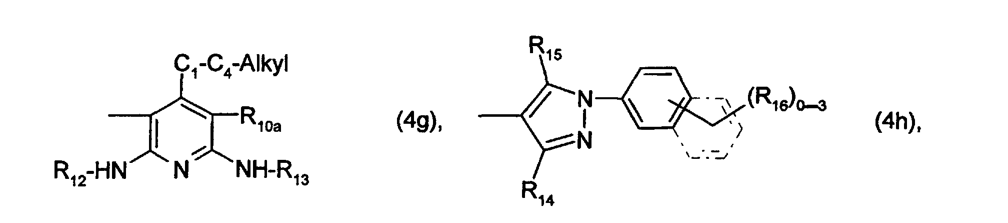 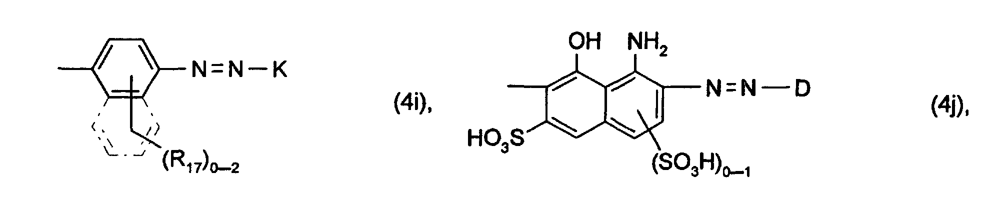 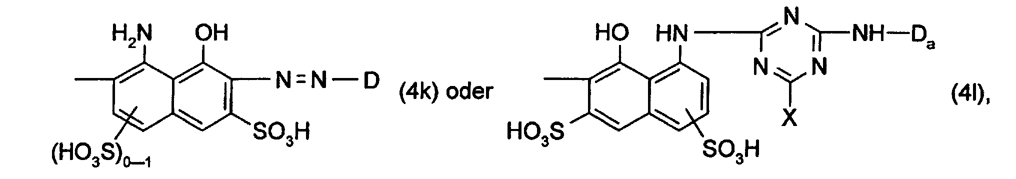 bedeuten, worin
(R₄)₀₋₃ für 0 bis 3 gleiche oder verschiedene Reste ausgewählt aus der Gruppe C₁-C₄-Alkyl, C₁-C₄-Alkoxy, im Alkylteil durch Hydroxy, C₁-C₄-Alkoxy oder Sulfato substituiertes C₁-C₄-Alkoxy, Halogen, Carboxy, Hydroxy, Amino, N-Mono- oder N,N-Di-C₁-C₂-Alkylamino, C₂-C₄-Alkanoylamino, Ureido, Sulfo, C₁-C₄-Alkylsulfonyloxy, C₁-C₄-Alkylsulfonylamino und Reaktivrest der Formel (2e) 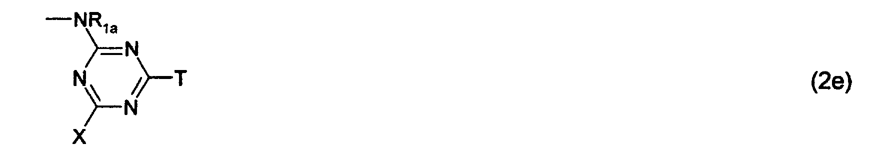 steht, worin
X Halogen, 3-Carboxypyridin-1-yl oder 3-Carbamoylpyridin-1-yl bedeutet,
T unabhängig die Bedeutung von X hat oder für Hydroxy, C₁-C₄-Alkoxy, Phenoxy, C₁-C₄-Alkylthio, Morpholino, gegebenenfalls durch nicht-faserreaktive Reste substituiertes Amino oder für einen faserreaktiven Rest der Formel (3a), (3b), (3c), (3d), (3e) oder (3f) 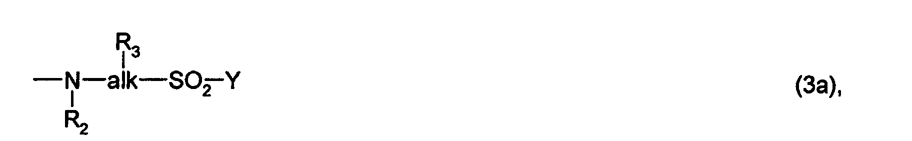 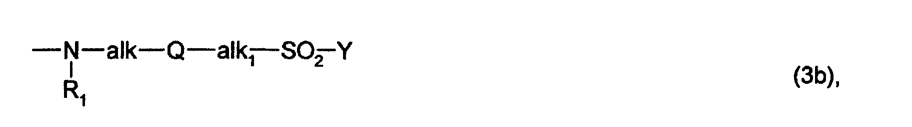 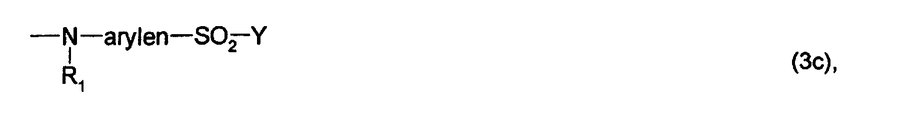 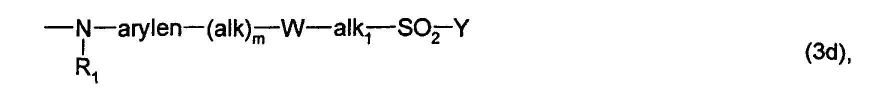 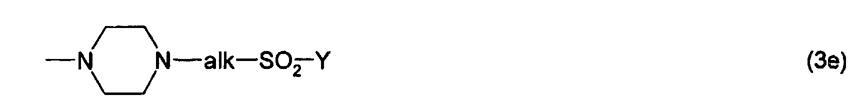 oder 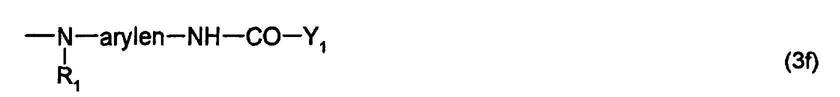 steht,
R₁ und R₁ₐ unabhängig voneinander je Wasserstoff oder C₁-C₄-Alkyl sind,
R₂ Wasserstoff, gegebenenfalls durch Hydroxy, Sulfo, Sulfato, Carboxy oder Cyano substituiertes C₁-C₄-Alkyl oder einen Rest 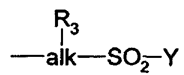 bedeutet,
R₃ Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Y ist,
alk und alk₁ unabhängig voneinander C₁-C₆-Alkylen sind,
arylen einen unsubstituierten oder durch Sulfo, Carboxy, C₁-C₄-Alkyl, C₁-C₄-Alkoxy oder Halogen substituierten Phenylen- oder Naphthylenrest bedeutet,
Y, für eine Gruppe -CH(Hal)-CH₂-Hal oder -C(Hal)=CH₂ steht und Hal Chlor oder Brom bedeutet,
Q ein Rest -O- oder -NR₁-, worin R₁ die oben angegebene Bedeutung hat, ist,
W für eine Gruppe -SO₂-NR₂-, -CONR₂- oder -NR₂CO- steht,
m die Zahl 0 oder 1 ist, und
Y Vinyl oder einen Rest -CH₂-CH₂-U bedeutet und U eine alkalisch abspaltbare Gruppe ist;
(R₄ₐ)₀₋₂ für 0 bis 2 gleiche oder verschiedene Reste ausgewählt aus der Gruppe C₁-C₄-Alkyl, C₁-C₄-Alkoxy, Phenoxy, Halogen, Sulfo und Hydroxy steht;
R₅ Wasserstoff oder C₁-C₄-Alkyl ist;
R₅ₐ unabhängig die Bedeutung von R₅ hat oder für C₂-C₄-Alkanoyl, C₁-C₄-Hydroxyalkyl,
C₁-C₄-Sulfatoalkyl, C₁-C₄-Alkoxyalkyl oder gegebenenfalls durch Methyl, Methoxy, Chlor oder Sulfo substituiertes Phenyl steht;
R₆ Wasserstoff, C₁-C₄-Alkyl oder Phenyl bedeutet;
(R₇)₀₋₂ für 0 bis 2 gleiche oder verschiedene Substituenten ausgewählt aus der Gruppe Hydroxy und faserreaktiver Rest der Formel (2a)

-SO₂-Y (2a),

steht, worin Y die zuvor angegebene Bedeutung hat;
R₈ Wasserstoff oder gegebenenfalls durch Hydroxy, C₁-C₄-Alkoxy, Sulfato, Sulfo, Halogen oder Cyano substituiertes C₁-C₄-Alkyl ist;
R₉ unabhängig die Bedeutung von R₈ hat oder C₂-C₄-Alkanoyl oder Benzoyl ist, oder worin -NR₈R₉ einen faserreaktiven Rest der zuvor angegebenen Formel (2e) bedeutet;
R₁₀ und R₁₀ₐ unabhängig voneinander je Carbamoyl, Sulfomethyl oder Cyano sind;
R₁₁ für Wasserstoff oder C₁-C₄-Alkyl, welches gegebenenfalls durch einen Rest der zuvor angegebenen Formel (2e) substituiert ist, steht;
R₁₂ und R₁₃ unabhängig voneinander je für Wasserstoff oder gegebenenfalls durch Hydroxy, C₁-C₄-Alkoxy, Phenoxy, Sulfato, Sulfo, Carboxy, Amino oder N-Mono- oder N,N-Di-C₁-C₄-Alkylamino, welches seinerseits im Alkylteil durch Hydroxy, C₁-C₄-Alkoxy, Phenoxy, Sulfato, Sulfo, Carboxy oder einen faserreaktiven Rest der zuvor angegebenen Formel (2e) substituiert sein kann, substituiertes und/oder mit Ausnahme von Methyl gegebenenfalls durch -O- unterbrochenes C₁-C₁₂-Alkyl stehen;
R₁₄ Methyl oder Carboxy bedeutet;
R₁₅ Hydroxy oder Amino ist;
(R₁₆)₀₋₃ für 0 bis 3 gleiche oder verschiedene Reste ausgewählt aus der Gruppe Sulfo, Halogen, Hydroxy, C₁-C₄-Alkoxy und C₁-C₄-Alkyl steht;
(R₁₇)₀₋₂ für 0 bis 2 gleiche oder verschiedene Reste ausgewählt aus der Gruppe C₁-C₄-Alkyl, C₁-C₄-Alkoxy, im Alkylteil durch Hydroxy, C₁-C₄-Alkoxy oder Sulfato substituiertes C₁-C₄-Alkoxy, C₂-C₄-Alkanoylamino, Ureido, Halogen und Sulfo steht;
K einen Rest der zuvor angegebenen Formel (4a), (4b), (4c), (4d), (4e), (4f), (4g) oder (4h) oder (4j), (4k) oder (41) und vorzugsweise einen Rest der Formel (4e) bedeutet;
D ein Phenyl- oder 1- oder 2-Naphthylrest ist, der 1 bis 3 gleiche oder verschiedene Reste aus der Gruppe Sulfo, C₁-C₄-Alkyl, C₁-C₄-Alkoxy, Halogen und faserreaktiver Rest der Formel (2a), (2b), (2c) oder (2d)

-SO₂-Y (2a),

-CONR₂-(CH₂)ₙ-SO₂-Y (2b),

-NH-CO-CH(Hal)-CH₂-Hal (2c)

oder

-NH-CO-C(Hal)=CH₂ (2d)

trägt, worin
n eine ganze Zahl von 1 bis 6, und R₂, Hal und Y jeweils die zuvor angegebene Bedeutung haben;
Dₐ der Rest eines Monoazo- oder Disazochromophors ist;
und X und Y jeweils die zuvor angegebene Bedeutung haben;
wobei mindestens einer der Reste K₁ und K₂ eine faserreaktive Gruppe trägt.

Die Reste K₁ und K₂ können farbstoffübliche Substituenten enthalten.

Aus der Reihe der Substituenten seien beispielhaft genannt: Alkylgruppen mit 1 bis 12 Kohlenstoffatomen, insbesondere 1 bis 4 Kohlenstoffatomen, wie Methyl, Aethyl, n- oder iso-Propyl, oder n-, iso-, sec.- oder tert.-Butyl, Alkoxygruppen mit 1 bis 8 Kohlenstoffatomen, insbesondere 1 bis 4 Kohlenstoffatomen, wie Methoxy, Aethoxy, n- oder iso-Propoxy, oder n-, iso-, sec.- oder tert.-Butoxy, im Alkylteil z.B. durch Hydroxy, C₁-C₄-Alkoxy oder Sulfato substituiertes C₁-C₄-Alkoxy wie z.B. 2-Hydroxyethoxy, 3-Hydroxypropoxy, 2-Sulfatoethoxy, 2-Methoxyethoxy oder 2-Ethoxyethoxy, Alkanoylaminogruppen mit 2 bis 8 Kohlenstoffatomen, insbesondere C₂-C₄-Alkanoylaminogruppen wie Acetylamino oder Propionylamino, Benzoylamino oder C₂-C₄-Alkoxycarbonylaminogruppen wie Methoxycarbonylamino oder Ethoxycarbonylamino, Amino, gegebenenfalls im Alkylteil z.B. durch Hydroxy, Sulfo, Sulfato oder C₁-C₄-Alkoxy substituiertes N-Mono- oder N,N-Di-C₁-C₄-Alkylamino, z.B. Methylamino, Ethylamino, N,N-Dimethyl- oder N,N-Diethylamino, Sulfomethylamino, β-Hydroxyethylamino, N,N-Di-(2-hydroxyethylamino), N-β-Sulfatoethylamino, gegebenenfalls im Phenylteil durch Methyl, Methoxy, Halogen oder Sulfo substituiertes Phenylamino, gegebenenfalls im Alkylteil durch Hydroxy, Sulfo oder Sulfato oder im Phenylteil gegebenenfalls durch Methyl, Methoxy, Halogen oder Sulfo substituiertes N-C₁-C₄-Alkyl-N-phenylamino, z.B. N-Methyl-N-phenylamino, N-Ethyl-N-phenylamino, N-β-Hydroxyethyl-N-phenylamino oder N-β-Sulfoethyl-N-phenylamino, gegebenenfalls durch Sulfo substituiertes Naphthylamino, Alkanoylgruppen mit 2 bis 8 Kohlenstoffatomen, insbesondere 2 bis 4 Kohlenstoffatomen, z.B. Acetyl oder Propionyl, Benzoyl, Alkoxycarbonyl mit 1 bis 4 Kohlenstoffatomen im Alkoxyrest, wie Methoxycarbonyl oder Ethoxycarbonyl, Alkylsulfonyl mit 1 bis 4 Kohlenstoffatomen, wie Methylsulfonyl oder Ethylsulfonyl, Phenyl- oder Naphthylsulfonyl, Trifluormethyl, Nitro, Cyano, Hydroxy, Halogen, wie Fluor, Chlor oder Brom, Carbamoyl, N-C₁-C₄-Alkylcarbamoyl, wie N-Methylcarbamoyl oder N-Ethylcarbamoyl, Sulfamoyl, N-C₁-C₄-Alkylsulfamoyl wie N-Methylsulfamoyl, N-Ethylsulfamoyl, N-Propylsulfamoyl, N-lsopropylsulfamoyl oder N-Butylsulfamoyl, N-(β-Hydroxyethyl)-sulfamoyl, N,N-Di-(β-hydroxyethyl)-sulfamoyl, N-Phenylsulfamoyl, Ureido, Carboxy, Sulfomethyl, Sulfo oder Sulfato sowie faserreaktive Reste. Die Alkylreste können zudem durch Sauerstoff (-O-) oder eine Aminogruppe (-NH-, -N(C₁-C₄-Alkyl)-)unterbrochen sein.

Der Begriff Sulfo umfasst hierbei generell sowohl die freie Säure -SO₃H als auch eine beliebige Salzform, z.B. ein Alkali-, Erdalkali- oder Ammoniumsalz oder das Salz eines organischen Amins. Beispiele sind das Natrium-, Kalium-, Lithium- oder Ammoniumsalz oder das Salz des Triethanolamins.

Bevorzugt trägt jeder der Reste K₁ und K₂ in den erfindungsgemässen Verbindungen mindestens eine faserreaktive Gruppe und insbesondere eine faserreaktive Gruppe.

Unter faserreaktiven Resten sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen. Die faserreaktiven Reste sind in der Regel direkt oder über ein Brückenglied an den Farbstoffrest gebunden. Geeignete faserreaktive Reste sind beispielsweise solche, die mindestens einen abspaltbaren Substituenten an einem aliphatischen, aromatischen oder heterocyclischen Rest enthalten oder worin die genannten Reste einen zur Reaktion mit dem Fasermaterial geeigneten Rest, wie z.B. einen Vinylrest, enthalten.

Als Abgangsgruppe U kommt z.B. -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ in Betracht. Bevorzugt ist U eine Gruppe der Formel -Cl, -OSO₃H, -SSO₃H, -OCO-CH₃, -OCO-C₆H₅ oder -OPO₃H₂, insbesondere -Cl oder -OSO₃H und besonders bevorzugt -OSO₃H.

Beispiele für geeignete Reste Y sind dementsprechend Vinyl, β-Brom- oder β-Chlorethyl, β-Acetoxyethyl, β-Benzoyloxyethyl, β-Phosphatoethyt, β-Sulfatoethyl und β-Thiosulfatoethyl. Y steht bevorzugt für Vinyl, β-Chlorethyl oder β-Sulfatoethyl und insbesondere für Vinyl oder β-Sulfatoethyl.

R₁ und R₁ₐ stehen unabhängig voneinander je bevorzugt für Wasserstoff, Methyl oder Ethyl und besonders bevorzugt für Wasserstoff.

R₂ bedeutet vorzugsweise Wasserstoff oder C₁-C₄-Alkyl, wie Methyl, Ethyl, Propyl, Isopropyl, Butyl, Isobutyl, sek.-Butyl oder tert.-Butyl und besonders bevorzugt Wasserstoff, Methyl oder Ethyl. Insbesondere bevorzugt ist R₂ Wasserstoff.

R₃ bedeutet bevorzugt Wasserstoff.

n steht vorzugsweise für die Zahl 2, 3 oder 4, besonders bevorzugt für die Zahl 2 oder 3 und insbesondere für die Zahl 2.

Steht T für gegebenenfalls durch nicht-faserreaktive Reste substituiertes Amino, so kann es sich um Amino, N-C₁-C₄-Alkylamino oder N,N-Di-C₁-C₄-Alkylamino, wobei das Alkyl gegebenenfalls z.B. durch Sulfo, Sulfato, Hydroxy, Carboxy oder Phenyl substituiert ist, Cyclohexylamino, N-C₁-C₄-Alkyl-N-phenylamino oder Phenylamino oder Naphthylamino, wobei das Phenyl oder Naphthyl gegebenenfalls z.B. durch C₁-C₄-Alkyl, C₁-C₄-Alkoxy, C₂-C₄-Alkanoylamino, Carboxy, Sulfo oder Halogen substituiert ist, handeln.

Beispiele für geeignete nicht-faserreaktive Aminoreste T sind Amino, Methylamino, Ethylamino, β-Hydroxyethylamino, N,N-Di-β-Hydroxyethylamino, β-Sulfoethylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Ethyl-N-phenylamino, N-Methyl-N-phenylamino, Methoxy, Ethoxy, n- oder iso-Propoxy sowie Hydroxy.

Als nicht-faserreaktiver Rest hat T vorzugsweise die Bedeutung C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist.

Besonders bevorzugte nicht-faserreaktive Reste T sind Amino, N-Methylamino, N-Ethylamino, Morpholino, Phenylamino, 2-, 3- oder 4-Sulfophenylamino oder N-C₁-C₄-Alkyl-N-phenylamino.

X bedeutet bevorzugt Halogen, z.B. Fluor, Chlor oder Brom und insbesondere bevorzugt Chlor oder Fluor.

Hal bedeutet vorzugsweise Brom.

Bei alk und alk₁ handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk₁ unabhängig voneinander je für einen C₁-C₄-Alkylenrest und insbesondere bevorzugt für einen Ethylenrest oder Propylenrest.

arylen ist vorzugsweise ein unsubstituierter oder z.B. durch Sulfo, Methyl, Methoxy oder Carboxy substituierter 1,3- oder 1,4-Phenylenrest und besonders bevorzugt ein unsubstituierter 1,3- oder 1,4-Phenylenrest.

Q steht vorzugsweise für -NH- oder -O- und insbesondere bevorzugt für -O-.

W bedeutet bevorzugt eine Gruppe der Formel -CONH- oder -NHCO-, insbesondere eine Gruppe der Formel -CONH-.

m steht bevorzugt für die Zahl 0.

Bevorzugt als Reaktivreste der Formeln (3a) bis (3f) sind solche, worin W eine Gruppe der Formel -CONH-, R₁, R₂ und R₃ je Wasserstoff, Q der Rest -O- oder -NH-, alk und alk, unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁ -CHBr-CH₂Br oder -CBr=CH₂ und m die Zahl 0 bedeuten.

Ein in K₁ oder K₂ enthaltener Reaktivrest ist bevorzugt ein Rest der zuvor angegebenen Formel (2a), (2b), (2c), (2d) oder (2e), worin Hal Brom, R₂ Wasserstoff, n die Zahl 2 oder 3, X Halogen, T C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Alkyl gegebenenfalls durch Hydroxy, Sulfo oder Sulfato und das Phenyl jeweils unsubstituiert oder durch Sulfo, Carboxy, Acetylamino, Methyl oder Methoxy substituiert ist, oder einen faserreaktiven Rest der Formel (3c') oder (3d') 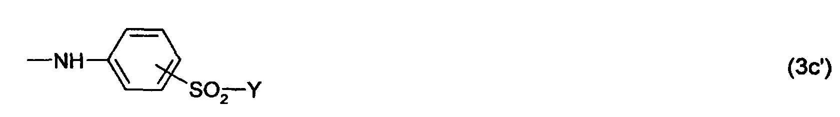 oder 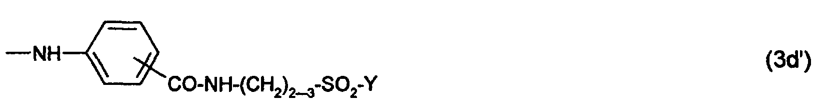 und Y Vinyl oder β-Sulfatoethyl bedeuten.

Besonders bevorzugt tragen die Reste K₁ und K₂ unabhängig voneinander je einen Rest der zuvor angegebenen Formeln (2a), (2b), (2c) oder (2d), vorzugsweise (2a) oder (2b) und insbesondere (2a), worin für R₂, Y und n jeweils die zuvor angegebenen Bedeutungen und Bevorzugungen gelten.

Für die in den Formeln (4a) bis (41) angegebenen Variablen gelten die folgenden Bevorzugungen:
(R₄)₀₋₃ steht bevorzugt für 0 bis 3 gleiche oder verschiedene Reste ausgewählt aus der Gruppe Methyl, Methoxy, im Alkylteil durch Hydroxy, Methoxy, Ethoxy oder Sulfato substituiertes Ethoxy, Chlor, Hydroxy, Amino, N-Mono- oder N,N-Di-C₁-C₂-Alkylamino, Acetylamino, Propionylamino, Sulfo, und Reaktivrest der zuvor angegebenen Formel (2e), worin X Halogen, R₁ₐ Wasserstoff und T gegebenenfalls durch nicht-faserreaktive Reste substituiertes Amino oder Morpholino bedeutet;
(R₄ₐ)₀₋₂ steht bevorzugt für 0 bis 2 gleiche oder verschiedene Reste ausgewählt aus der Gruppe Methyl, Methoxy, Phenoxy, Chlor, Sulfo und Hydroxy steht;
R₅ Wasserstoff, Methyl oder Ethyl ist;
R₅ₐ unabhängig die Bedeutung von R₅ hat oder für Acetyl, Propionyl, 2-Hydroxyethyl oder 2-Sulfatoethyl;
R₆ bedeutet vorzugsweise Wasserstoff;
R₈ ist vorzugsweise Wasserstoff und R₉ bedeutet vorzugsweise Acetyl, Propionyl oder Benzoyl, oder -NR₈R₉ ist ein faserreaktiven Rest der zuvor angegebenen Formel (2e);
R₁₀ steht bevorzugt für Carbamoyl oder Sulfomethyl;
R₁₀ₐ steht bevorzugt für Cyano oder Carbamoyl;
R₁₁ bedeutet bevorzugt Methyl oder Ethyl;
R₁₂ steht bevorzugt für Wasserstoff oder gegebenenfalls durch Hydroxy, Methoxy, Ethoxy, Sulfato oder Sulfo, substituiertes C₁-C₆-Alkyl;
R₁₃ hat vorzugsweise unabhängig die Bedeutung von R₁₂ oder steht für einen Rest der zuvor angegebenen Formel (2e);
R₁₂ und R₁₃ stehen unabhängig voneinander je besonders bevorzugt für Wasserstoff oder unsubstituiertes oder durch Hydroxy, Sulfo oder Sulfato substituiertes C₁-C₆-Alkyl;
R₁₅ bedeutet bevorzugt Hydroxy;
(R₁₆)₀₋₃ steht bevorzugt für 0 bis 3 gleiche oder verschiedene Reste ausgewählt aus der Gruppe Sulfo, Methyl, Methoxy, Hydroxy und Chlor;
(R₁₇)₀₋₂ bedeutet bevorzugt 0 bis 2 gleiche oder verschiedene Reste ausgewählt aus der Gruppe Methyl, Methoxy, im Alkylteil durch Hydroxy oder Sulfato substituiertes C₁-C₂-Alkoxy, Acetylamino, Propionylamino und Sulfo;
D ist bevorzugt ein Phenyl- oder 1- oder 2-Naphthylrest, der 1 bis 3 gleiche oder verschiedene Reste aus der Gruppe Sulfo, Methyl, Methoxy, Chlor und faserreaktiver Rest der Formel (2a), (2b), (2c) oder (2d) trägt; und
Dₐ bedeutet bevorzugt den Rest eines Monoazo- oder Disazochromophors, der Diazokomponenten und Kupplungskomponenten aus der Benzol- oder Naphthalinreihe aufweist, die durch einen oder mehrere Substituenten aus der Gruppe Sulfo, Methyl, Methoxy, Chlor, Amino, Hydroxy, Acetylamino, Propionylamino, Benzoylamino, Ureido, 2-Hydroxyethoxy, 2-Sulfatoethoxy und faserreaktiver Rest der Formel (2e) substituiert sind. Besonders bevorzugt steht Dₐ in Formel (41) für einen Rest der Formel (5a) oder (5b)

   - Dₐ* - N=N - Kₐ (- N=N - Dₐ**)₀₋₁ (5a)

   oder

   - Kₐ- N=N - (Mₐ - N=N -)₀₋₁Dₐ* (5b),
worin Dₐ* ein unsubstituierter oder durch Sulfo substituierter Phenylenrest ist, Dₐ** für unsubstituiertes oder durch Sulfo oder einen Rest der zuvor angegebenen Formel (2a) substituiertes Phenyl oder Naphthyl steht, Kₐ den Rest einer Kupplungskomponente der Aminonaphtholsulfosäure-Reihe, z.B. den Rest von H-, K-, I- oder γ-Säure bedeutet, der gegebenenfalls an der Aminogruppe durch Acetyl, Propionyl, Benzoyl oder einen faserreaktiven Rest der zuvor angegebenen Formel (2e) substituiert ist, und Mₐ gegebenenfalls durch Sulfo, Methyl, Methoxy, Acetylamino, Ureido, 2-Hydroxyethoxy oder 2-Sulfatoethoxy substituiertes Phenylen bedeutet.

K₁ und K₂ stehen unabhängig voneinander je bevorzugt für einen Rest der Formel (4c'), (4c"), (4d'), (4e'), (4f'), (4g'), (4h'), (4i'), (4j') oder (4k') 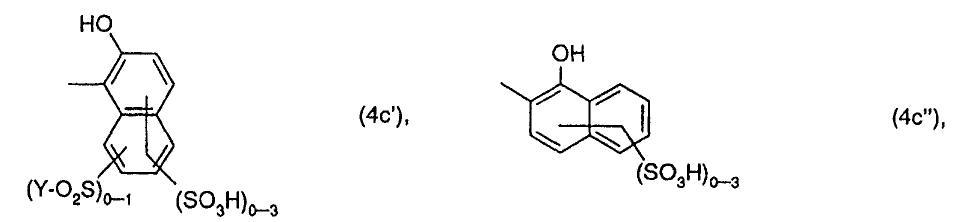 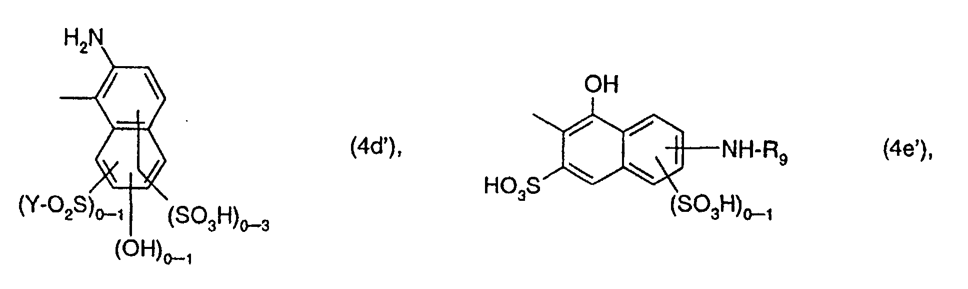 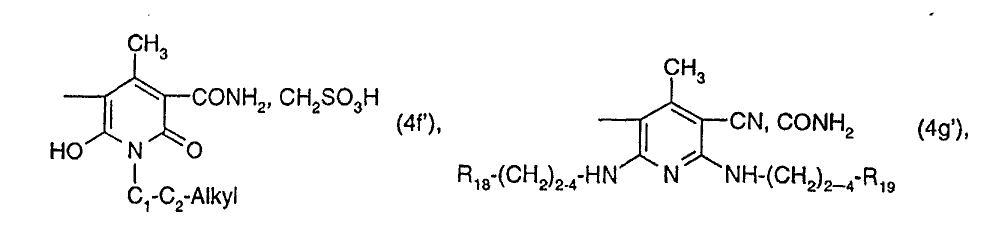 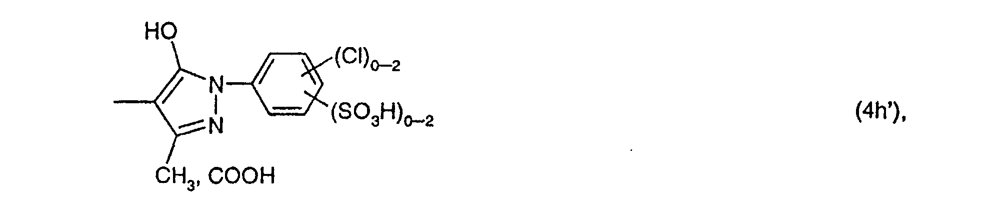 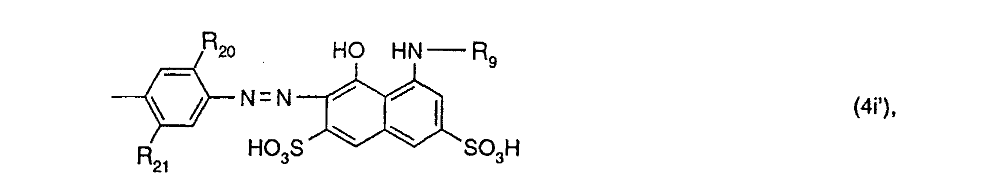 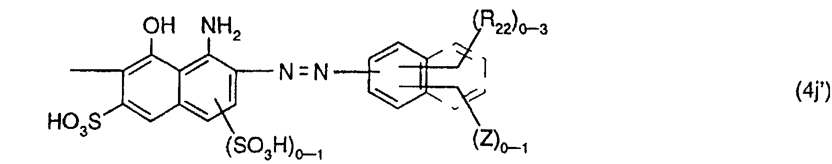 oder 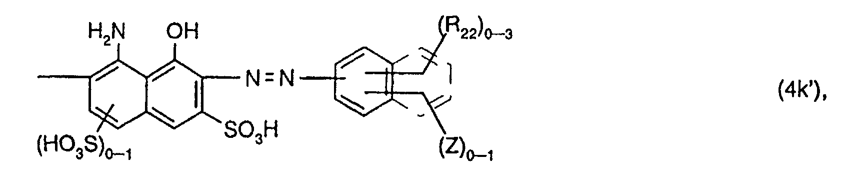 worin
R₉ Acetyl, Benzoyl oder ein Rest der Formel (2e') 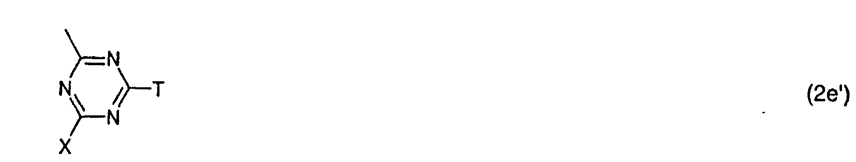 ist,
worin
für X und T jeweils die zuvor angegebenen Bedeutungen und Bevorzugungen gelten,
R₁₈ Wasserstoff, Hydroxy oder Sulfato ist,
R₁₉ unabhängig die Bedeutung von R₁₈ hat oder für einen Rest der Formel (2e) steht,
R₂₀ und R₂₁ unabhängig voneinander je für Wasserstoff, Methyl, Methoxy, 2-Hydroxyethoxy, 2-Sulfatoethoxy, Acetylamino, Propionylamino, Ureido oder Sulfo stehen,
(R₂₂)₀₋₃ 0 bis 3 gleiche oder verschiedene Reste ausgewählt aus der Gruppe Sulfo, Chlor, C₁-C₄-Alkyl und C₁-C₄-Alkoxy bedeutet,
(Z)₀₋₁ gegebenenfalls einen Rest der Formel (2a), (2b), (2c) oder (2d) und
und für Y die zuvor angegebenen Bedeutungen und Bevorzugungen gelten.

Die Reste K₁ und K₂ stehen unabhängig voneinander je besonders bevorzugt für einen Rest der oben angegebenen Formel (4e'), (4j') oder (4k') und ganz besonders bevorzugt der Formel (4j') oder (4k').

Die Reste K₁ und K₂ können verschieden oder, vorzugsweise, gleich sein.

Eine bevorzugte Ausführungsform der vorliegenden Erfindung ist dadurch gekennzeichnet, dass die Verbindungen der Formel (1) Verbindungen der Formel (1a) 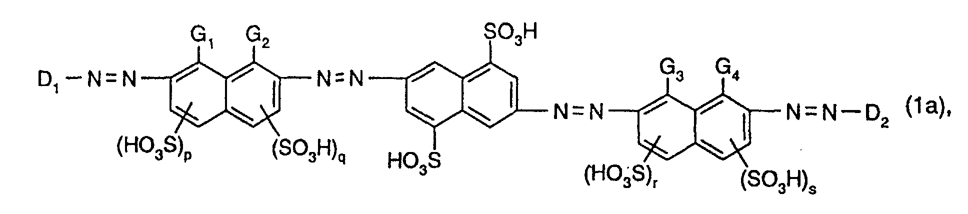 bedeuten, worin
D₁ ein Rest der Formel (6a) 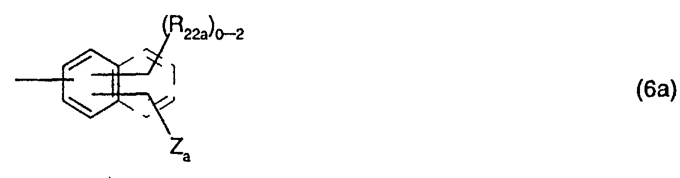 und
D₂ ein Rest der Formel (6b) 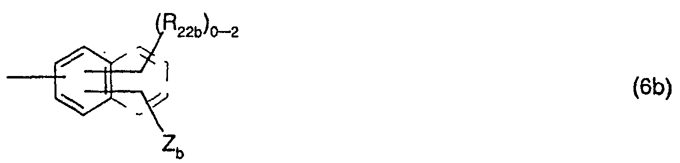 ist, (R₂₂ₐ)₀₋₂ und (R_{22b})₀₋₂ unabhängig voneinander jeweils für 0 bis 2 gleiche oder voneinander verschiedene Substituenten ausgewählt aus der Gruppe Sulfo, Chlor, C₁-C₄-Alkyl oder C₁-C₄-Alkoxy stehen,
von den Resten G₁ und G₂ einer Hydroxy und der andere Amino bedeutet,
von den Resten G₃ und G₄ einer Hydroxy und der andere Amino bedeutet,
p, q, r und s unabhängig voneinander die Zahl 0 oder1 sind, wobei die Summe von p und q die Zahl 1 oder 2, insbesondere 2, ist,
die Summe von r und s die Zahl 1 oder 2, insbesondere 2, ist und
Zₐ und Z_{b} unabhängig voneinander je für einen Rest der zuvor angegebenen Formel (2a), (2b), (2c) oder (2d) stehen.

In einer besonderen Ausführungsform der vorliegenden Erfindung haben die Reste D₁ und D₂ in den erfindungsgemässen Verbindungen der Formel (1a) identische Bedeutungen.

Eine besonders bevorzugte Ausführungsform der vorliegenden Erfindung ist dadurch gekennzeichnet, dass die Verbindungen der Formel (1a) Verbindungen der Formel (1b) oder (1c) 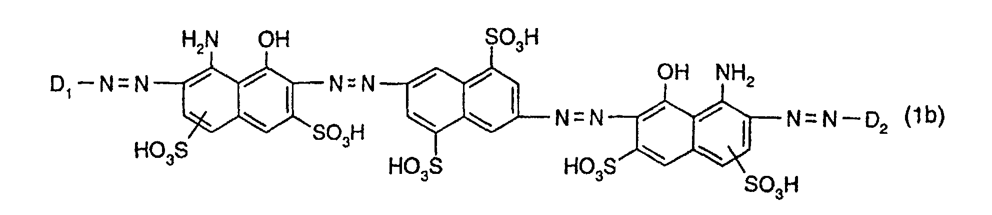 oder 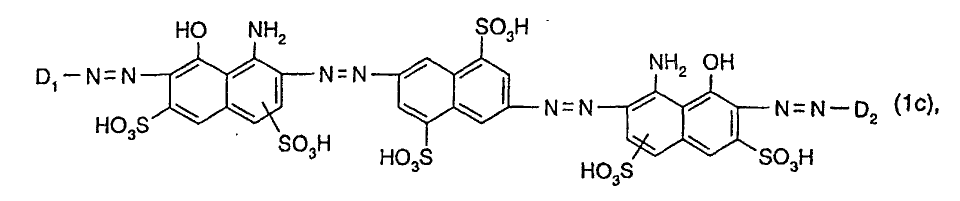 bedeuten, worin
D₁ und D₂ unabhängig voneinander jeweils ein Rest der Formel (6c), (6d), (6e) oder (6f) 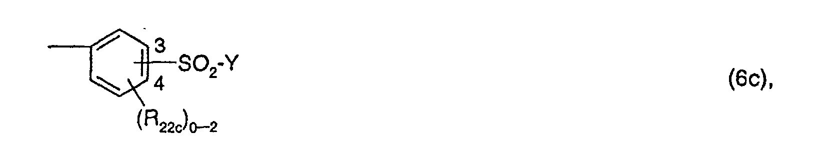 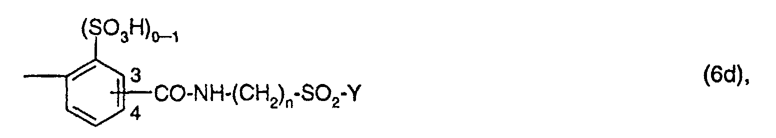 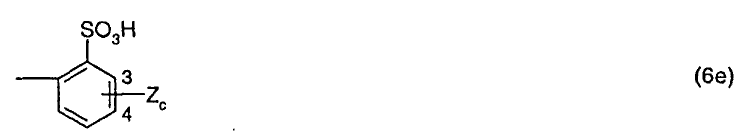 oder 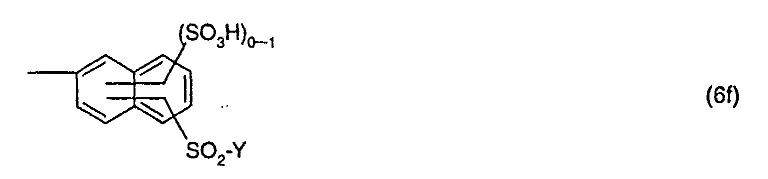 sind, worin
(R_{22c})₀₋₂ für 0 bis 2 gleiche oder voneinander verschiedene Substituenten ausgewählt aus der Gruppe Sulfo, Methyl oder Methoxy steht,
Z_{c} für α,β-Dibrompropionylamino oder α-Bromacryloylamino,
n die Zahl 2, 3 oder 4 ist und
Y Vinyl, β-Chlorethyl oder β-Sulfatoethyl, insbesondere Vinyl oder β-Sulfatoethyl bedeutet.

Bevorzugt sind Verbindungen der Formel (1b) oder (1c), dadurch gekennzeichnet, dass
D₁ und D₂ einen Rest der Formel (6c) bedeuten, worin
(R_{22c})₀₋₂ für 0 bis 2 gleiche oder voneinander verschiedene Substituenten ausgewählt aus der Gruppe Methyl oder Methoxy steht und
Y Vinyl oder β-Sulfatoethyl bedeutet.

Einen weiteren Gegenstand der vorliegenden Erfindung betrifft ein Verfahren zur Herstellung der Verbindungen der Formel (1), dadurch gekennzeichnet, dass
man in etwa 1 Moläquivalent der Verbindung der Formel 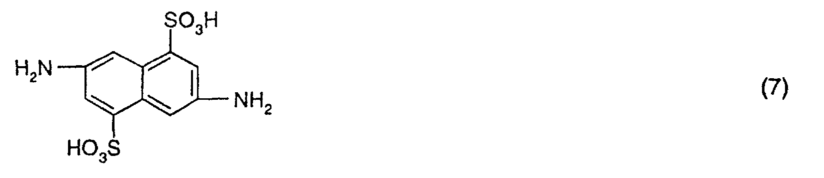 in üblicher Weise mit einem Nitrit, z.B. Natriumnitrit, in einem sauren, z.B. salzsauren, Medium, tetrazotiert und die tetrazotierte Verbindung mit in etwa 1 Moläquivalent einer Kupplungskomponente der Formel

K₁-H (8)

und in etwa 1 Moläquivalent einer Kupplungskomponente der Formel

K₂-H (9)

in einem sauren, neutralen oder alkalischen Medium kuppelt, worin für K₁ und K₂ jeweils die zuvor genannten Bedeutungen und Bevorzugungen gelten.

Handelt es sich bei K₁-H und K₂-H um identische Kupplungskomponenten, setzt man vorteilhaft in etwa 1-Moläquivalent der tetrazotierten Verbindung der Formel (7) mit in etwa 2 Moläquivalenten einer Verbindung der Formel (8) um.

Die Synthese der Verbindungen der Formel (1) kann auch so erfolgen, dass man die tetrazotierte Verbindung der Formel (7) zunächst mit einem Vorprodukt von K₁-H bzw. K₂-H kuppelt und die resultierende Disazoverbindung anschliessend, z.B. durch Kupplung mit einer weiteren diazotierten Diazokomponente, in die Endverbindung umsetzt.

Die bevorzugten Verbindungen der Formel (1b) können vorteilhaft hergestellt werden, indem man z.B. gemäss der Verfahrensvariante "A":
(i) in etwa 1 Moläquivalent einer diazotierten Verbindung der Formel (10a)

   D₁-NH₂ (10a),

   worin D₁ die zuvor angegebenen Bedeutungen hat, mit in etwa 1 Moläquivalent einer Kupplungskomponente der Formel (11) 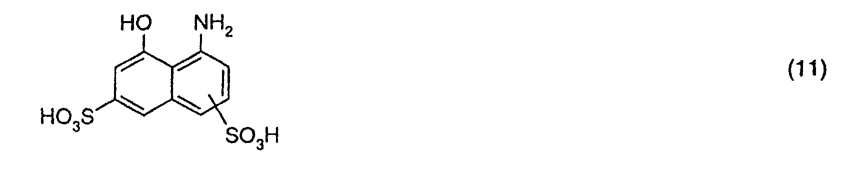 kuppelt,
(ii) unabhängig davon in etwa 1 Moläquivalent einer diazotierten Verbindung der Formel (10b)

   D₂-NH₂ (10b),

   worin D₂ die zuvor angegebenen Bedeutungen hat, mit in etwa 1 Moläquivalent einer Kupplungskomponente der Formel (11) kuppelt, und
(iii) jeweils in etwa 1 Moläquivalent der gemäss (i) und (ii) erhaltenen Monoazoverbindungen mit in etwa 1 Moläquivalent einer tetrazotierten Verbindung der Formel (7) kuppelt.

Handelt es sich bei D₁-NH₂ und D₂-NH₂ in der Verfahrensvariante "A" um identische Verbindungen, setzt man vorteilhaft in etwa 2 Moläquivalent einer diazotierten Verbindung der Formel (10a) mit in etwa 2 Moläquivalenten einer Verbindung der Formel (11) um und kuppelt anschliessend die erhaltene Monoazoverbindung mit in etwa 1 Moläquivalent einer tetrazotierten Verbindung der Formel (7).

Handelt es sich bei D₁-NH₂ und D₂-NH₂ in der Verfahrensvariante "A" um nicht identische Verbindungen, so können die Verfahrensschritte (i) und (ii) derart zusammengefasst werden, dass man in etwa 2 Moläquivalente einer Mischung der Amine D₁-NH₂ und D₂-NH₂, z.B eine 1:1 molare Mischung, diazotiert und mit in etwa 2 Moläquivalenten einer Kupplungskomponente der Formel (11) kuppelt und dann gemäss (iii) weiter verfährt.

Die bevorzugten Verbindungen der Formel (1c) können vorteilhaft hergestellt werden, indem man z.B. gemäss der Verfahrensvariante "B":
(i) in etwa 0,5 Moläquivalente einer zuvor tetrazotierten Verbindung der Formel (7) mit in etwa 1 Moläquivalent einer Verbindung der zuvor genannten Formel (11) kuppelt und
(ii) die erhaltene Disazoverbindung anschliessend mit in etwa 1 Moläquivalent einer diazotierten Verbindung der zuvor angegebenen Formel (10a), falls es sich bei D₁-NH₂ und D₂-NH₂ um identische Verbindungen handelt, bzw. einer beispielsweise 1:1 molaren Mischung von in etwa 1 Moläquivalent der diazotierten Verbindungen der Formeln (10a) und (10b) kuppelt, falls es sich bei D₁-NH₂ und D₂-NH₂ um nicht identische Verbindungen handelt.

In den oben beschriebenen Verfahrensvarianten "A" bzw. "B" findet die erste Kupplung -A(i) und A(ii) bzw. B(i)- in einem sauren Medium und die zweite Kupplung -A(iii) bzw. B(ii)- bei erhöhten pH-Werten, in einem schwach sauren, neutralen oder schwach alkalischen Medium statt.

Handelt es sich bei D₁-NH₂ und D₂-NH₂ in der zuvor beschriebenen Verfahrensvariante "A" oder "B" um nicht identische Verbindungen, so werden Mischungen erhalten, die neben den hinsichtlich der Reste D₁ und D₂ asymmetrischen Verbindungen der Formeln (1b) bzw. (1c) auch die entsprechenden symmetrischen Verbindungen der Formeln 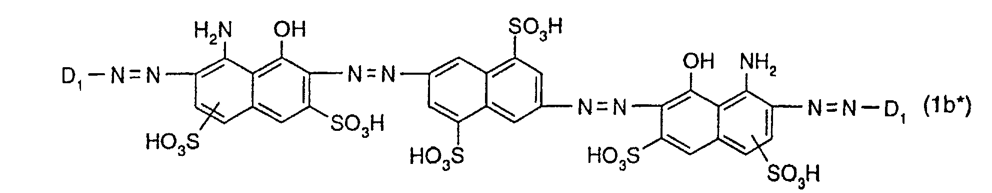 und 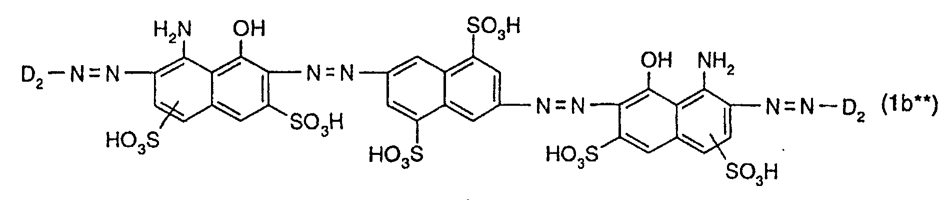 bzw. 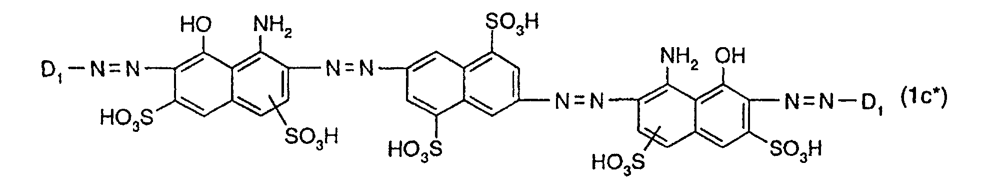 und 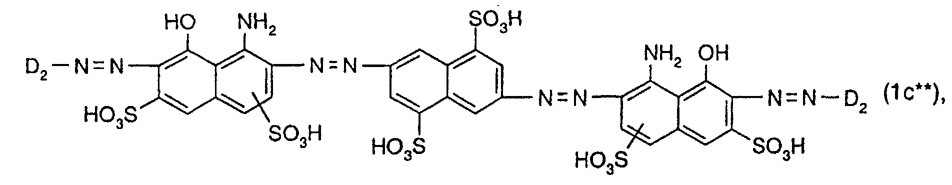 enthalten. In den Formeln (1b*), (1b**), (1c*) und (1c**) gelten für die Reste D₁ und D₂ die zuvor angegebenen Bedeutungen und Bevorzugungen.

Einen weiteren Gegenstand der vorliegenden Erfindung stellen somit Farbstoffmischungen dar, die eine Verbindung der Formel (1b) zusammen mit mindestens einer Verbindung der Formeln (1b*) und (1b**), insbesondere jeweils eine Verbindung der Formeln (1b), (1b*) und (1b**), enthalten sowie Farbstoffmischungen, die eine Verbindung der Formel (1c) zusammen mit mindestens einer Verbindung der Formeln (1c*) und (1c**), insbesondere jeweils eine Verbindung der Formeln (1c), (1c*) und (1c**), enthalten.

Das Verhältnis der Farbstoffe der Formeln (1b), (1b*) und (1b**) bzw. (1c), (1c*) und (1c**) in der jeweiligen Mischung kann in weiten Bereichen varieren und hängt dabei vom Verhältnis der gemäss A(i) und A(ii) bzw. B(ii) eingesetzten Amine D₁-NH₂ und D₂-NH₂ ab.

Die obigen Farbstoffmischungen enthalten z.B. 5 bis 95 Gew.%, insbesondere 10 bis 90 Gew.% und vorzugsweise 20 bis 80 Gew.% eines Farbstoffs der Formel (1b) bzw. (1c), bezogen auf die Gesamtmenge der Farbstoffe der Formeln (1b), (1b*) und (1b**) bzw. (1c), (1c*) und (1c**) in der jeweiligen Mischung.

Setzt man in die obigen Verfahren zur Herstellung der Verbindungen der Formel (1b) und (1c) anstelle eines Moläquivalents einer Verbindung der Formel (11) 1 Moläquivalent einer Mischung zweier verschiedener Verbindungen der Formel (11), z.B. je ca. 0,5 Moläquivalente einer Aminonaphtholdisulfosäure KK₁ und ca. 0,5 Moläquivalente einer Aminonaphtholdisulfosäure KK₂ ein, so werden Mischungen von Verbindungen erhalten, die hinsichtlich der Aminonaphtholdisulfosäuren KK₁ und KK₂ symmetrisch als auch asymmetrisch sind.

Einen weiteren Gegenstand der vorliegenden Erfindung stellen somit Farbstoffmischungen dar, dadurch gekennzeichnet, dass sie
mindestens eine Verbindung der Formeln (12a) und (12b) 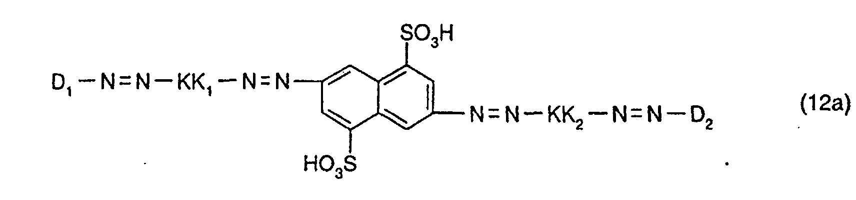 und 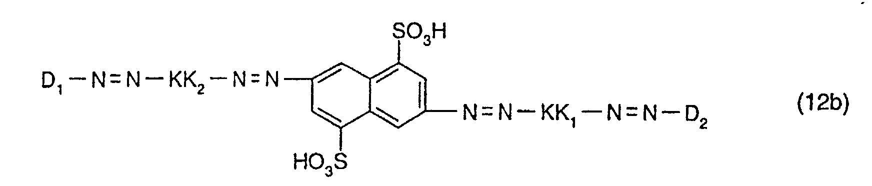 zusammen mit mindestens einer Verbindung der Formeln (12c) und (12d) 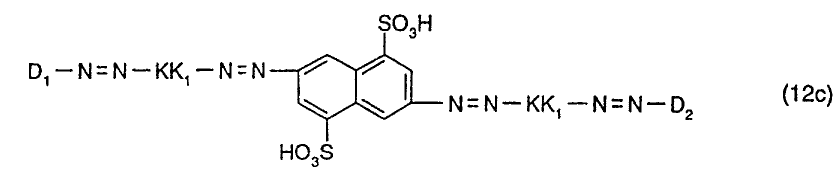 und 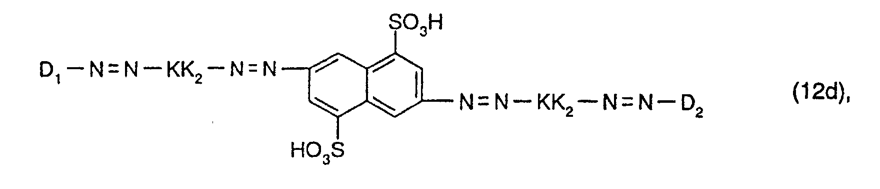 insbesondere jeweils eine Verbindung der Formeln (12a), (12b), (12c) und (12d), enthalten,
worin
für die Reste D₁ und D₂ die zuvor angegebenen Bedeutungen und Bevorzugungen gelten, und KK₁ vorzugsweise für 1-Amino-8-hydroxynaphthalin-3,6-disulfonsäure (H-Säure) und KK₂ vorzugsweise 1-Amino-8-hydroxynaphthalin-4,6-disulfonsäure (K-Säure) steht.

Das Verhältnis der Farbstoffe der Formel (12a), (12b), (12c) und (12d) in den Mischungen kann in weiten Bereichen varieren und hängt dabei vom Verhältnis der gemäss A(i) bzw. A(ii) oder B(i) eingesetzten Aminonaphtholdisulfosäuren KK₁ und KK₂ ab.

Die obigen Farbstoffmischungen enthalten z.B. 5 bis 95 Gew.%, insbesondere 10 bis 90 Gew.% und vorzugsweise 20 bis 80 Gew.% der Farbstoffe der Formel (12a) und (12b) bezogen auf die Gesamtmenge der Farbstoffe der Formeln (12a), (12b), (12c) und (12d).

Die Verbindungen der Formeln (7), (8), (9), (10a), (10b) und (11) sind bekannt oder können in an sich bekannter Weise erhalten werden.

Die erfindungsgemässen Reaktivfarbstoffe sowie die erfindungsgemässen Mischungen von Reaktivfarbstoffen sind faserreaktiv, d.h. sie vermögen mit den Hydroxylgruppen der Cellulose oder mit den reaktiven Zentren von natürlichen und synthetischen Polyamiden unter Bildung kovalenter chemischer Bindungen zu reagieren.

Die erfindungsgemässen Reaktivfarbstoffe und Mischungen von Reaktivfarbstoffen eignen sich zum Färben und Bedrucken der verschiedensten Materialien, insbesondere hydroxylgruppenhaltigen oder stickstoffhaltigen Fasermaterialien. Beispiele sind Seide, Leder, Wolle, Polyamidfasern und Polyurethane sowie insbesondere cellulosehaltige Fasermaterialien aller Art. Solche Fasermaterialien sind beispielsweise die natürliche Celiulosefaser, wie Baumwolle, Leinen und Hanf, sowie Zellstoff und regenerierte Cellulose. Die erfindungsgemässen Reaktivfarbstoffe sowie die erfindungsgemässen Mischungen von Reaktivfarbstoffen sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Reaktivfarbstoffe und Mischungen von Reaktivfarbstoffen lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe und Farbstoffmischungen eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen und Farbstoffmischungen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit, Reibechtheit und insbesondere Chlorechtheit.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis von Kilogramm zu Liter.

### Herstellung der diazotierten Amine der Formel (10a) bzw. (10b)

Beispiel 1: 28 Teile eines Amins der Formel D₁₀-NH₂, worin D₁₀ ein Rest der Formel 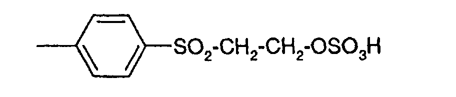 bedeutet, werden in 150 Teile Wasser eingetragen und gut verrührt. Man gibt zu der erhaltenen Suspension 16 Teile konz. Salzsäure, kühlt auf 0 bis 5°C und tropft langsam 7 Teile Natriumnitrit, gelöst in 25 Teilen Wasser, zu. Nachdem die Umsetzung des Amins zur entsprechenden Diazoverbindung komplett ist, wird das überschüssige Nitrit durch Zugabe von Sulfaminsäure zerstört.

Beispiele 2 bis 12: Analog der in Beispiel 1 beschriebenen Vorgehensweise lassen sich die Diazoverbindungen der in Tabelle 1 genannten Amine herstellen, wenn man anstelle von 28 Teilen des Amins der Formel D₁₀-NH₂ eine äquimolare Menge der in Tabelle 1 genannten Amine D_{xy}-NH₂, verwendet.

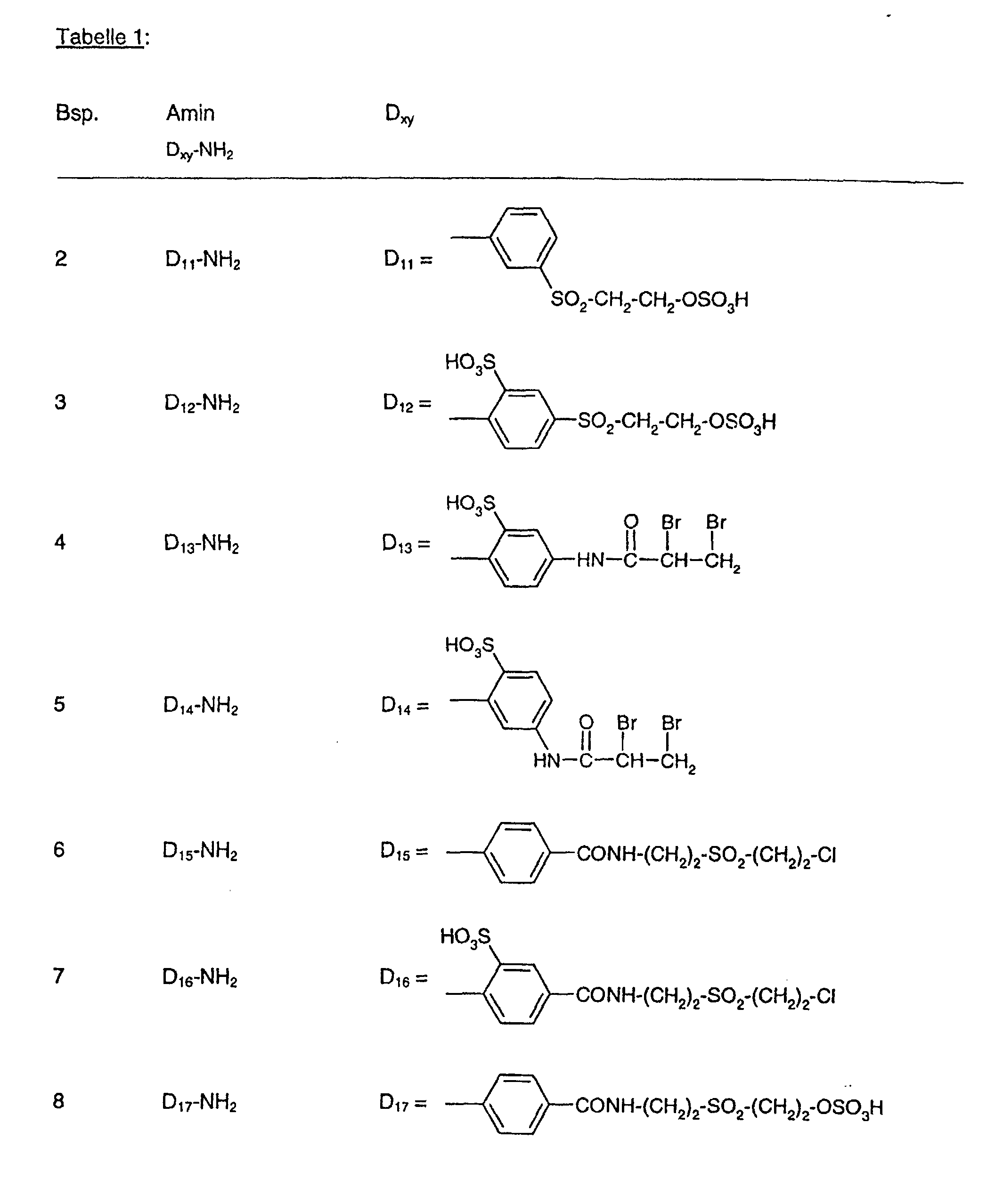

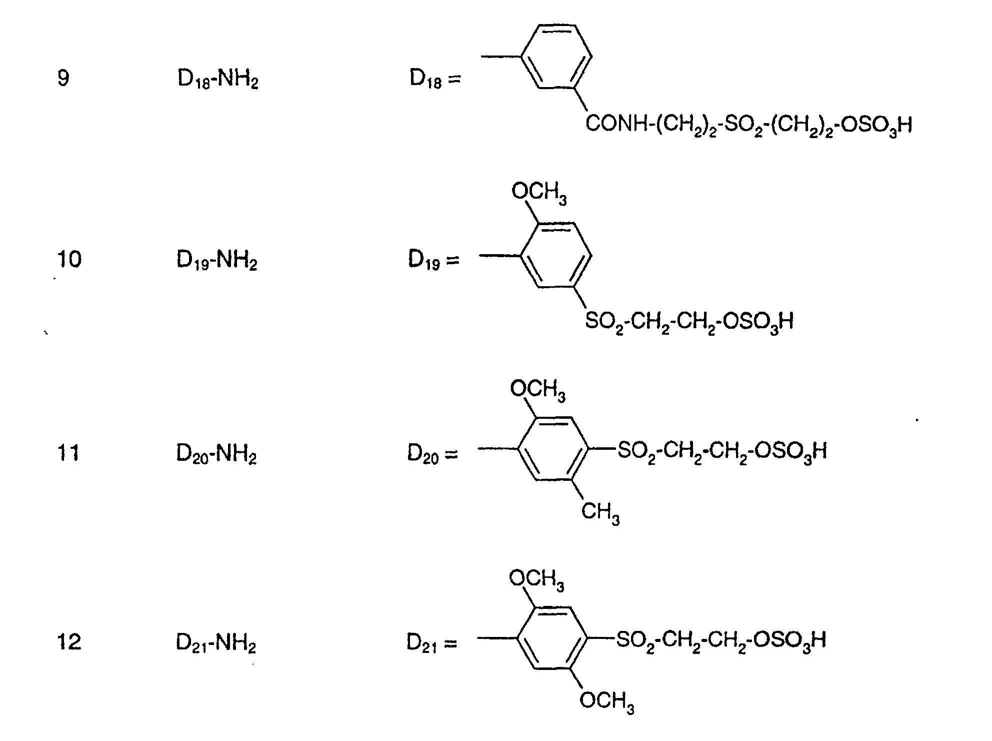

### Herstellung der tetrazotierten Verbindung der Formel (7)

Beispiel 13:16 Teile des Diamins der Formel 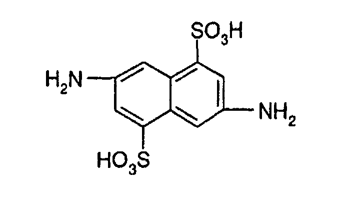 werden in 160 Teilen Wasser neutral gelöst. Nach dem Abkühlen auf ca. 0°C werden 13 Teile konz. Salzsäure zugegeben. Anschliessend tropft man eine Lösung von 5,4 Teilen Natriumnitrit in 20 Teilen Wasser langsam zu. Nach erfolgter Umsetzung des Diamins zur entsprechenden Tetrazoverbindung wird das überschüssige Nitrit durch Zugabe von Sulfaminsäure zerstört.

### Herstellung der Verbindungen der Formel (1b)

Beispiel 14/15: Zu einer Suspension von 32 Teilen 1-Amino-8-hydroxynaphthalin-3,6-disulfonsäure (H-Säure) oder 32 Teilen 1-Amino-8-hydroxynaphthalin-4,6-disulfonsäure (K-Säure) in 100 Teilen Wasser wird bei 0 bis 5°C die gemäss Beispiel 1 erhaltene Lösung der Diazoverbindung des Amins der Formel D₁₀-NH₂ zugetropft. Man lässt anschliessend auf Raumtemperatur erwärmen und rührt bis zur vollständigen Kupplung. Danach wird das Reaktionsgemisch auf 5 bis 10°C gekühlt, der pH-Wert mit Natriumhydrogencarbonat auf ca. 4,5 erhöht und die gemäss Beispiel 13 erhaltene Lösung der Tetrazoverbindung langsam zugetropft, wobei der pH-Wert während des Zutropfens durch Zugabe von Natriumhydrogencarbonat bei ca. 6,5 gehalten wird. Nach beendeter Kupplung wird die Farbstofflösung dialytisch von Salz befreit und im Vakuum eingedampft. Man erhält die Verbindung, die in Form der freien Säure der Formel 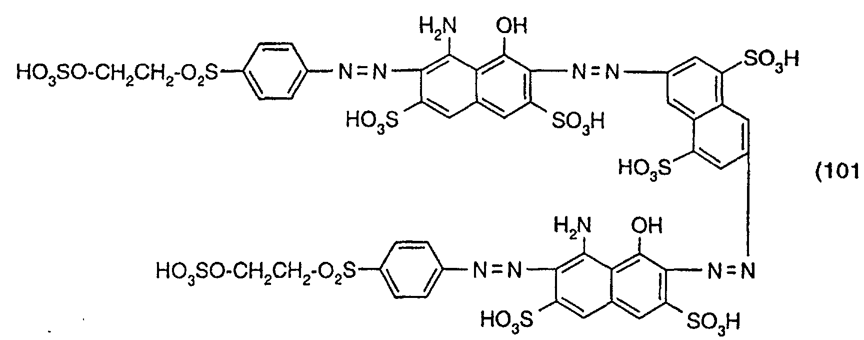 oder 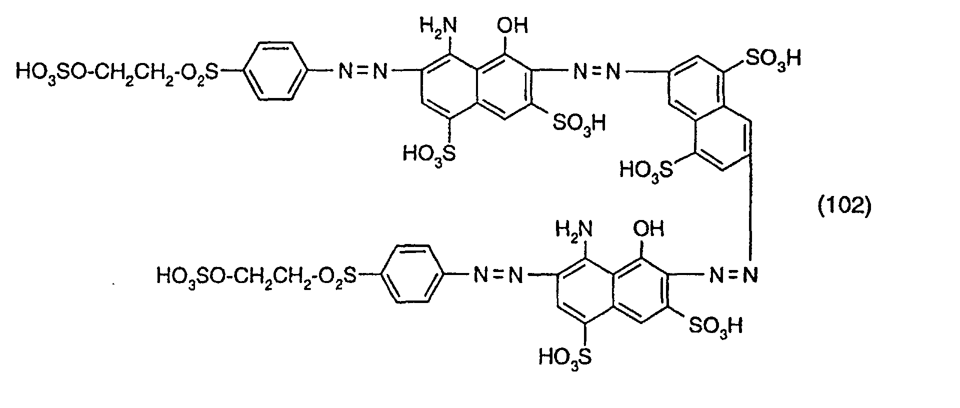 entspricht, als dunkles Pulver, welches Cellulose in grünem Farbton mit guten Allgemeinechtheiten färbt.

Beispiele 16 bis 37: Analog der in Beispiel 14 oder 15 beschriebenen Vorgehensweise lassen sich aus den in den Beispielen 2 bis 12 beschriebenen Diazoverbindungen die Farbstoffe der folgenden allgemeinen Formel 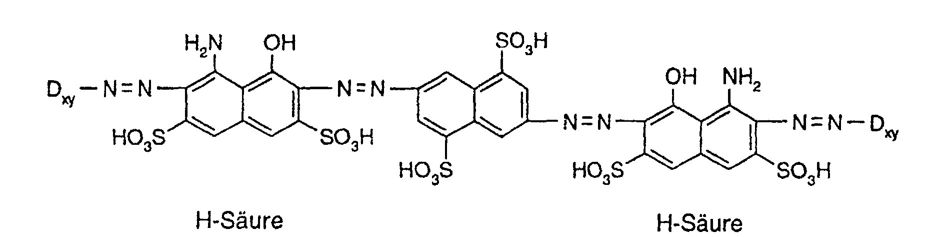 oder 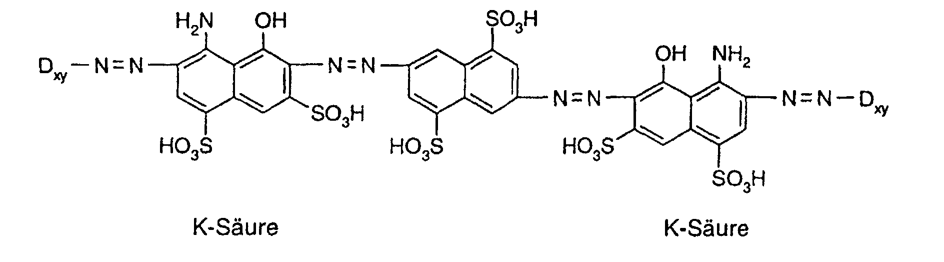 herstellen, je nachdem ob man H- oder K-Säure als Kupplungskomponente im ersten Kupplungsschritt verwendet, worin D_{xy} die in Tabelle 2 genannten Bedeutungen hat. Die Farbstoffe färben Cellulose in den in Tabelle 2 angegebenen Farbtönen mit guten Allgemeinechtheiten.

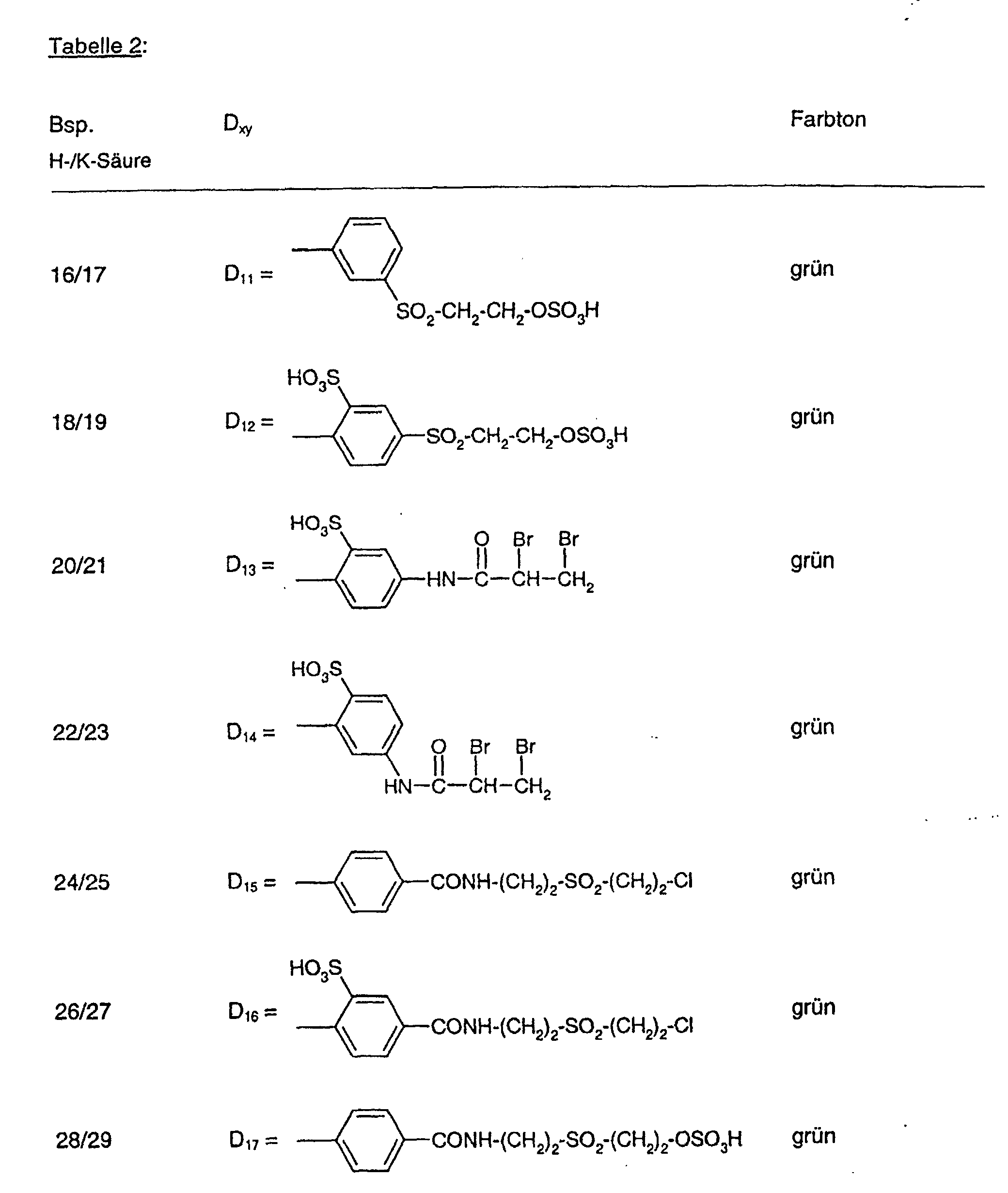

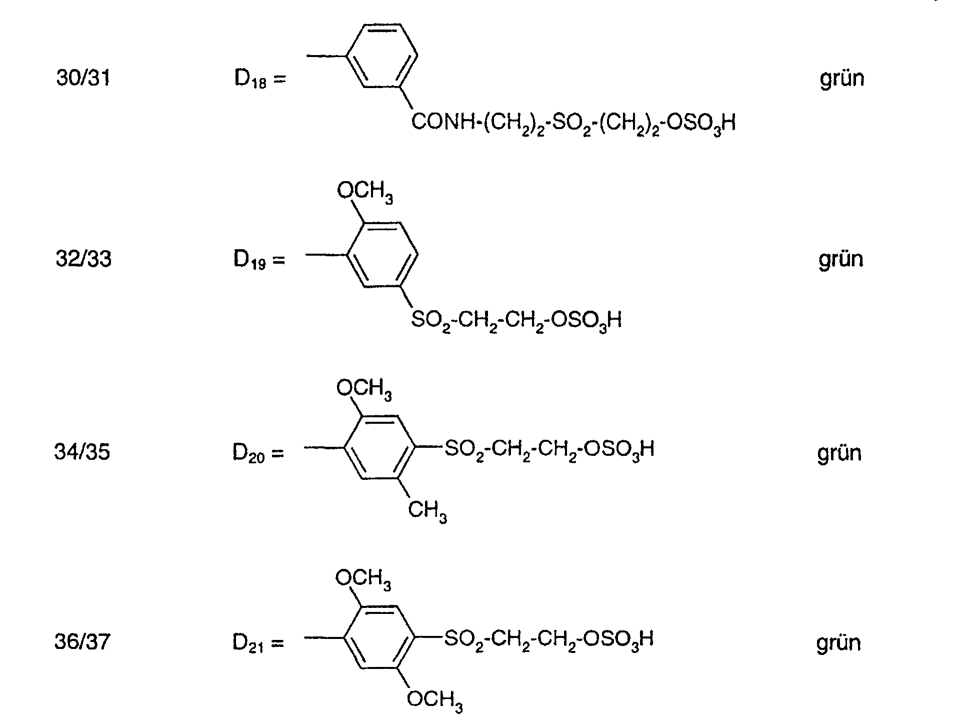

### Herstellung einer Mischung aus den Verbindungen der Formeln (1b), (1b*) und (1b**)

Verfährt man wie in Beispiel 14 beschrieben, verwendet jedoch anstelle einer Lösung des diazotierten Amins gemäss Beispiel 1 eine Lösung enthaltend eine Mischung, z.B. eine 1:1 molare Mischung, der diazotierten Amine gemäss Beispiel 1 und Beispiel 2 in äquimolarer Menge, so erhält man eine Mischung der Verbindungen gemäss den Beispielen 14 und 16 und einer Verbindung, die in Form der freien Säure der Formel 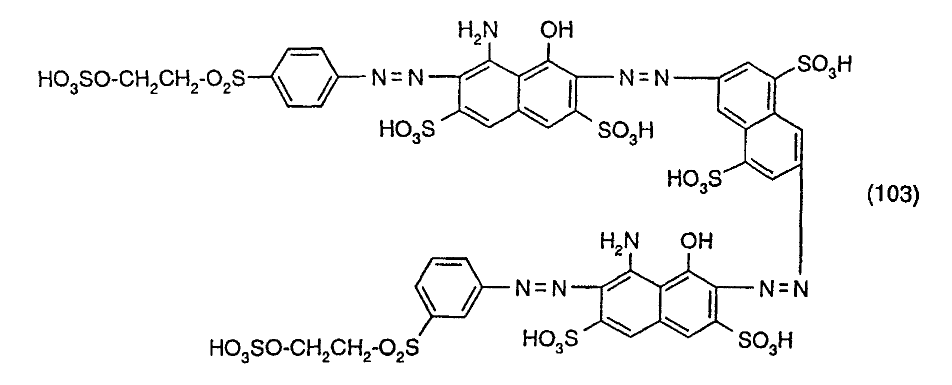 entspricht, als dunkles Pulver, welches Cellulose in grünem Farbton mit guten Allgemeinechtheiten färbt.

Die Lösung enthaltend eine Mischung der diazotierten Amine gemäss Beispiel 1 und Beispiel 2 lässt sich beispielsweise herstellen, indem man wie in Beispiel 1 beschrieben vorgeht, jedoch statt eines Amins der Formel D₁₀-NH₂ die äquimolare Menge einer Mischung, z.B. eine 1:1 molare Mischung, der Amine der Fomeln D₁₀-NH₂ und D₁₁-NH₂ verwendet, wobei die Reste D₁₀ und D₁₁ die in Tabelle 1 angegebenen Bedeutungen haben.

Analog zu der oben beschriebenen Vorgehensweise lassen sich weitere Farbstoffmischungen herstellen, welche Cellulose in grünen Farbtönen mit guten Allgemeinechtheiten färben, indem man statt einer Mischung der Amine der Formel D₁₀-NH₂ und D₁₁-NH₂ beispielsweise eine Mischung aus den Aminen der Formel D₁₀-NH₂ und D₁₉-NH₂ oder D₁₀-NH₂ und D₂₀-NH₂ oder D₁₀-NH₂ und D₂₁-NH₂ verwendet, wobei die Reste D₁₀, D₁₉, D₂₀ und D₂₁ die in Tabelle 1 angegebenen Bedeutungen haben.

### Herstellung der Verbindungen der Formel (1c)

Beispiel 38/39: Zu einer Suspension von 32 Teilen 1-Amino-8-hydroxynaphthalin-3,6-disulfonsäure (H-Säure) oder 32 Teilen 1-Amino-8-hydroxynaphthalin-4,6-disulfonsäure (K-Säure) in 100 Teilen Wasser wird bei 0 bis 5°C die gemäss Beispiel 13 erhaltene Lösung der Tetrazoverbindung zugetropft. Man lässt anschliessend auf Raumtemperatur erwärmen und rührt bis zur vollständigen Kupplung. Danach wird das Reaktionsgemisch auf 5 bis 10°C gekühlt, der pH-Wert mit Natriumhydrogencarbonat auf 3 bis 4 erhöht und die gemäss Beispiel 1 erhaltene Lösung der Diazoverbindung des Amins der Formel D₁₀-NH₂ langsam zugetropft, wobei der pH-Wert während des Zutropfens durch Zugabe von Natriumhydrogencarbonat bei ca. 3 bis 4 gehalten wird. Nach beendeter Kupplung wird die Farbstofflösung dialytisch von Salz befreit und im Vakuum eingedampft. Man erhält die Verbindung, die in Form der freien Säure der Formel 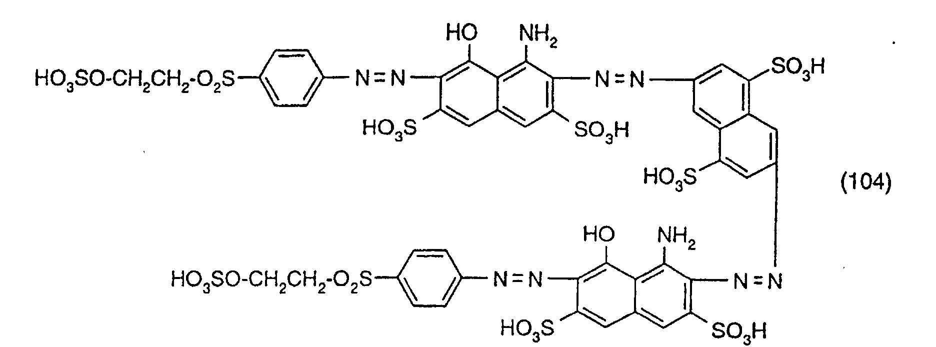 oder 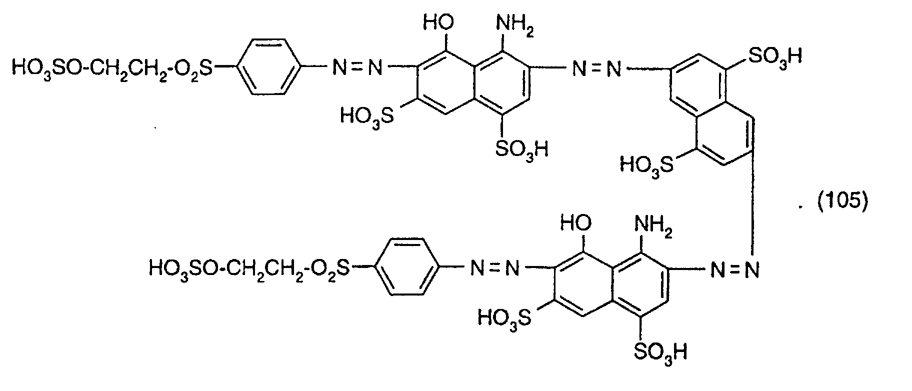 entspricht, als dunkles Pulver, welches Cellulose in grünem Farbton mit guten Allgemeinechtheiten färbt.

Beispiele 40 bis 61: Analog der in Beispiel 38 oder 39 beschriebenen Vorgehensweise lassen sich aus den in den Beispielen 2 bis 12 beschriebenen Diazoverbindungen die Farbstoffe der folgenden allgemeinen Formel 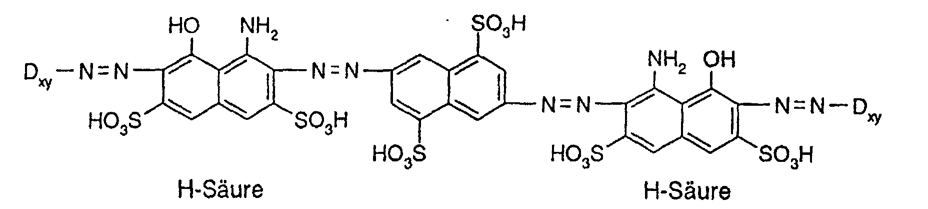 oder 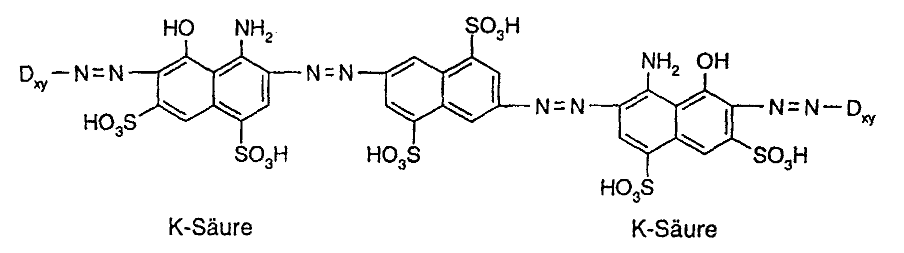 herstellen, je nachdem ob man H- oder K-Säure als Kupplungskomponente im ersten Kupplungsschritt verwendet, worin D_{xy} die in Tabelle 3 genannten Bedeutungen hat. Die Farbstoffe färben Cellulose in den in Tabelle 3 angegebenen Farbtönen mit guten Allgemeinechtheiten.

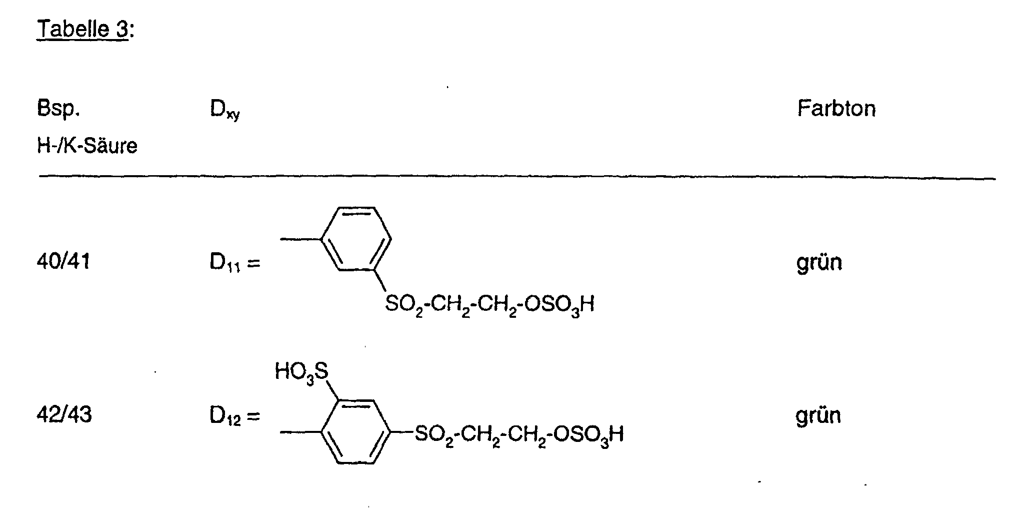

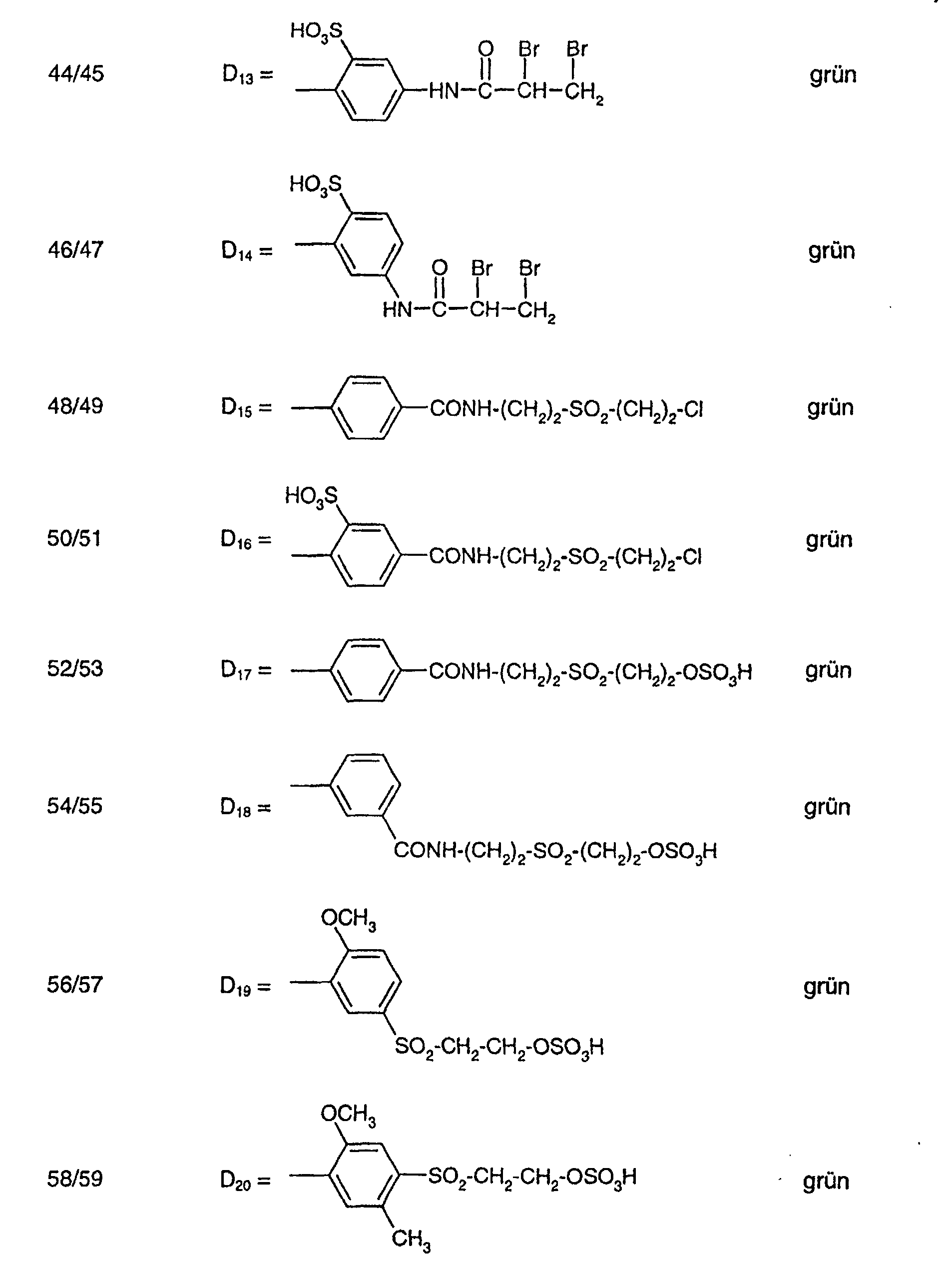

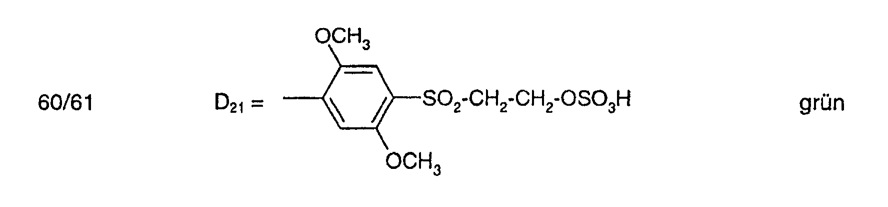

### Herstellung von weiteren diazotierten Aminen der Formel (10a) bzw. (10b)

Beispiel 62: 35 Teile des Amins der Formel D₂₂-NH₂, worin D₂₂ der Rest der Formel 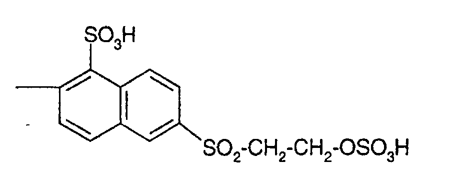 ist, werden in 200 Teile Wasser eingetragen und gut verrührt. Man gibt zu der erhaltenen Suspension 16 Teile konz. Salzsäure, kühlt auf 0 bis 5°C und tropft langsam 7 Teile Natriumnitrit, gelöst in 25 Teilen Wasser, zu. Nach vollständiger Umsetzung des Amins zur entsprechenden Diazoverbindung wird das überschüssige Nitrit durch Zugabe von Sulfaminsäure zerstört.

Beispiele 63 bis 65: Analog der in Beispiel 62 beschriebenen Vorgehensweise lassen sich die Diazoverbindungen der in Tabelle 4 genannten Amine herstellen, wenn man anstelle von 35 Teilen des Amins der Formel D₂₂-NH₂ eine äquimolare Menge der in Tabelle 4 genannten Amine D_{xy}-NH₂ verwendet.

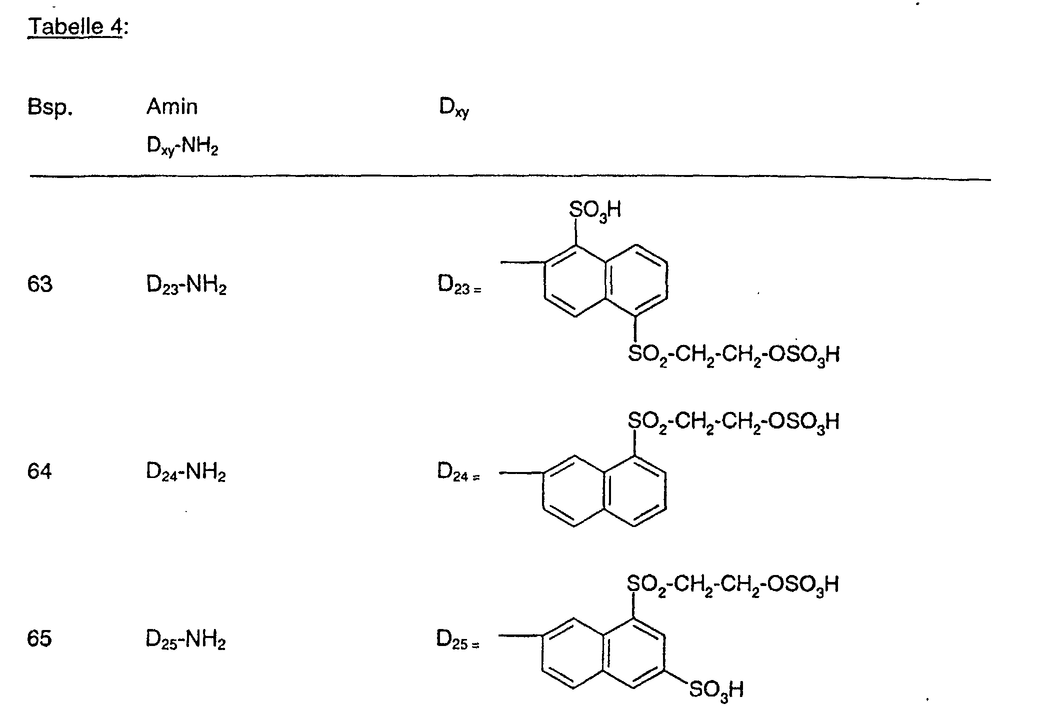

### Herstellung von weiteren Verbindungen der Formel (1b)

Beispiel 66/67: Zu einer Suspension von 32 Teilen 1-Amino-8-hydroxynaphthalin-3,6-disulfonsäure (H-Säure) oder 32 Teilen 1-Amino-8-hydroxynaphthalin-4,6-disulfonsäure (K-Säure) in 100 Teilen Wasser wird bei 0 bis 5°C die gemäss Beispiel 62 erhaltene Lösung der Diazoverbindung des Amins der Formel D₂₂-NH₂ zugetropft. Man lässt anschliessend auf Raumtemperatur erwärmen und rührt bis zur vollständigen Kupplung. Danach wird das Reaktionsgemisch auf 5 bis 10°C gekühlt, der pH-Wert mit Natriumhydrogencarbonat auf ca. 4,5 erhöht und die gemäss Beispiel 13 erhaltene Lösung der Tetrazoverbindung langsam zugetropft, wobei der pH-Wert während des Zutropfens durch Zugabe von.
Natriumhydrogencarbonat bei ca. 6,5 gehalten wird. Nach beendeter Kupplung wird die Farbstofflösung dialytisch von Salz befreit und im Vakuum eingedampft. Man erhält die Verbindung, die in Form der freien Säure der Formel 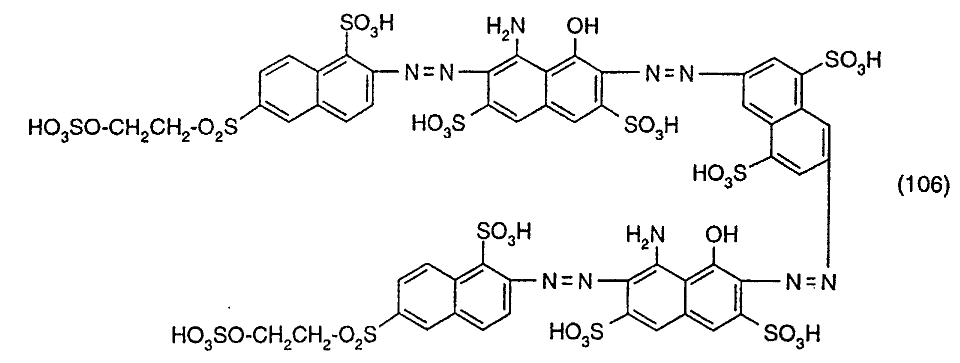 oder 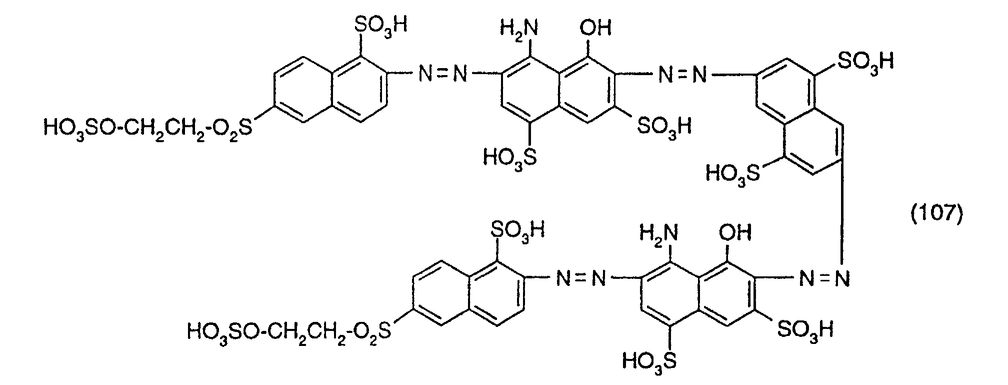 entspricht, als dunkles Pulver, welches Cellulose in grünem Farbton mit guten Allgemeinechtheiten färbt.

Beispiele 68 bis 73: Analog der in Beispiel 66 oder 67 beschriebenen Vorgehensweise lassen sich aus den in den Beispielen 63 bis 65 beschriebenen Diazoverbindungen die Farbstoffe der folgenden allgemeinen Formel 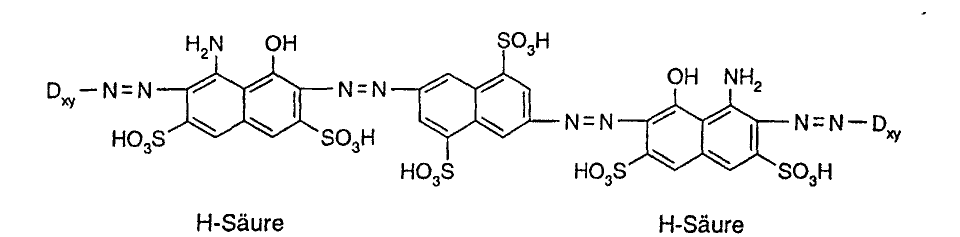 oder 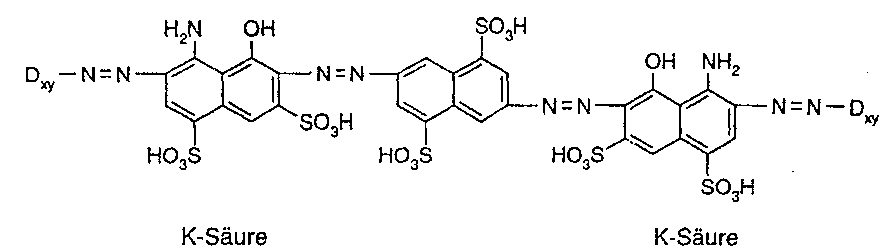 herstellen, je nachdem ob man H- oder K-Säure als Kupplungskomponente im ersten Kupplungsschritt verwendet, worin D_{xy} die in Tabelle 5 genannten Bedeutungen hat. Die Farbstoffe färben Cellulose in den in Tabelle 5 angegebenen Farbtönen mit guten Allgemeinechtheiten.

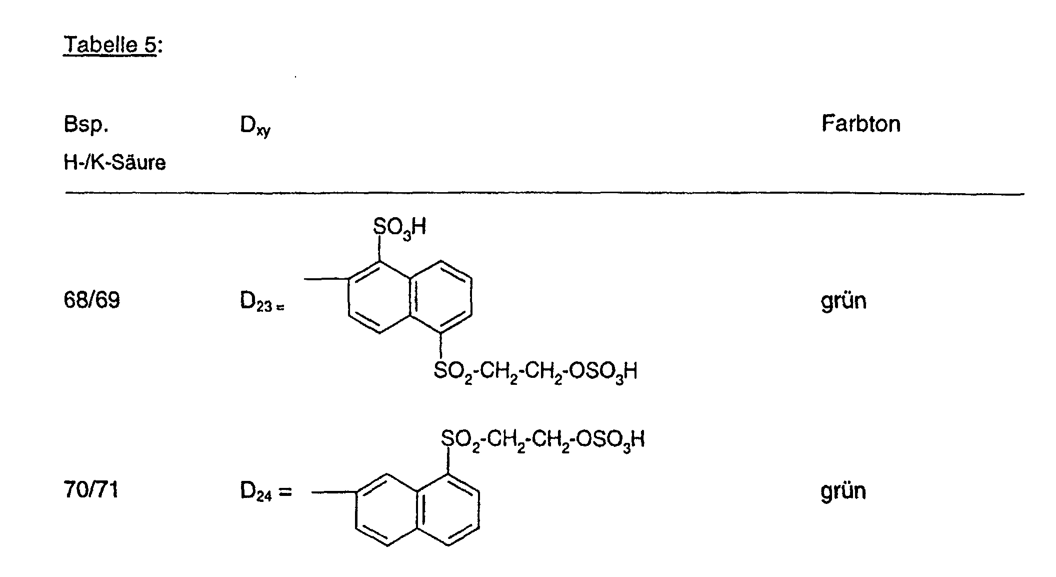

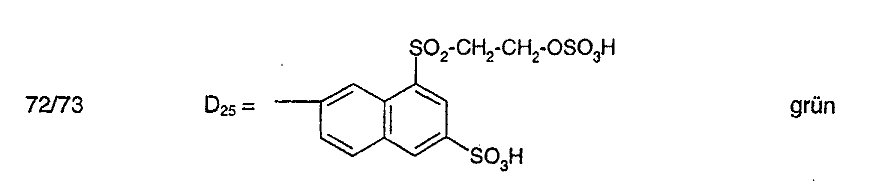

### Herstellung von weiteren Verbindungen der Formel (1c)

Beispiel 74/75: Zu einer Suspension von 32 Teilen 1-Amino-8-hydroxynaphthalin-3,6-disulfonsäure (H-Säure) oder 32 Teilen 1-Amino-8-hydroxynaphthalin-4,6-disulfonsäure (K-Säure) in 100 Teilen Wasser wird bei 0 bis 5°C die gemäss Beispiel 13 erhaltene Lösung der Tetrazoverbindung zugetropft. Man lässt anschliessend auf Raumtemperatur erwärmen und rührt bis zur vollständigen Kupplung. Danach wird das Reaktionsgemisch auf 5 bis 10°C gekühlt, der pH-Wert mit Natriumhydrogencarbonat auf 3 bis 4 erhöht und die gemäss Beispiel 62 erhaltene Lösung der Diazoverbindung des Amins der Formel D₂₂-NH₂ langsam zugetropft, wobei der pH-Wert während des Zutropfens durch Zugabe von Natriumhydrogencarbonat bei ca. 3 bis 4 gehalten wird. Nach beendeter Kupplung wird die Farbstofflösung dialytisch von Salz befreit und im Vakuum eingedampft. Man erhält die Verbindung, die in Form der freien Säure der Formel 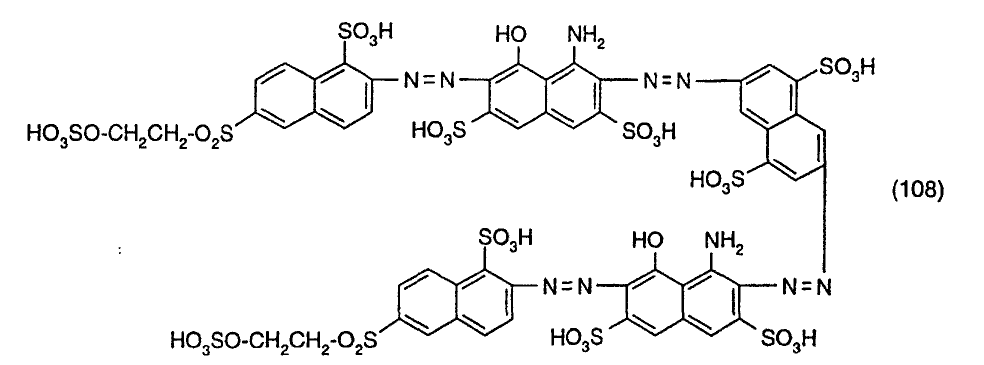 oder 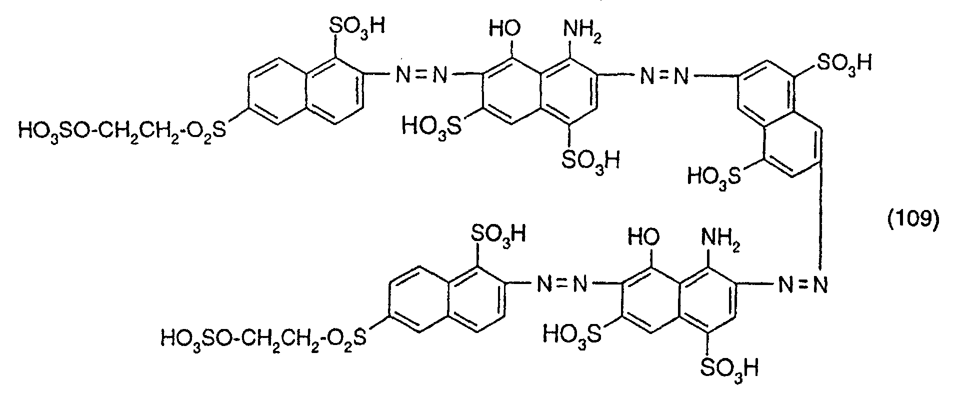 entspricht, als dunkles Pulver, welches Cellulose in grünem Farbton mit guten Allgemeinechtheiten färbt.

Beispiele 76 bis 81: Analog der in Beispiel 74 oder 75 beschriebenen Vorgehensweise lassen sich aus den in den Beispielen 63 bis 65 beschriebenen Diazoverbindungen die Farbstoffe der folgenden allgemeinen Formel 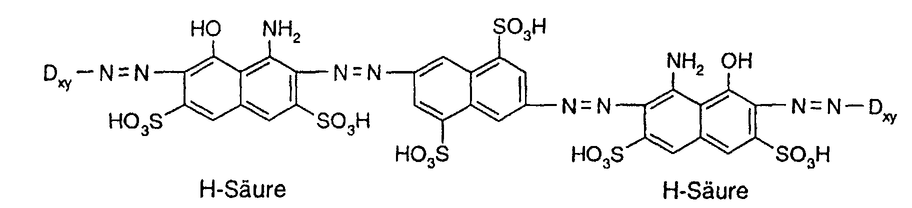 oder 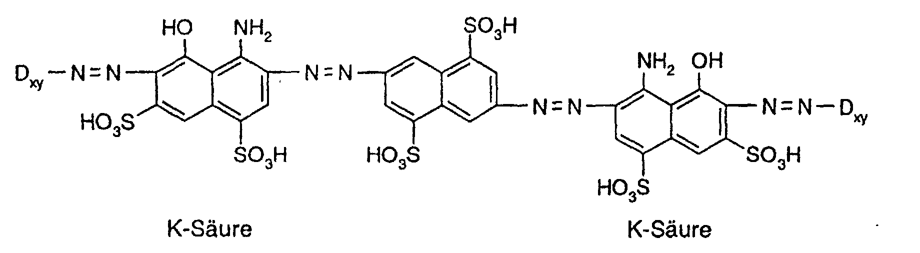 herstellen, je nachdem ob man H- oder K-Säure als Kupplungskomponente im ersten Kupplungsschritt verwendet, worin D_{xy} die in Tabelle 6 genannten Bedeutungen hat. Die Farbstoffe färben Cellulose in den in Tabelle 6 angegebenen Farbtönen mit guten Allgemeinechtheiten.

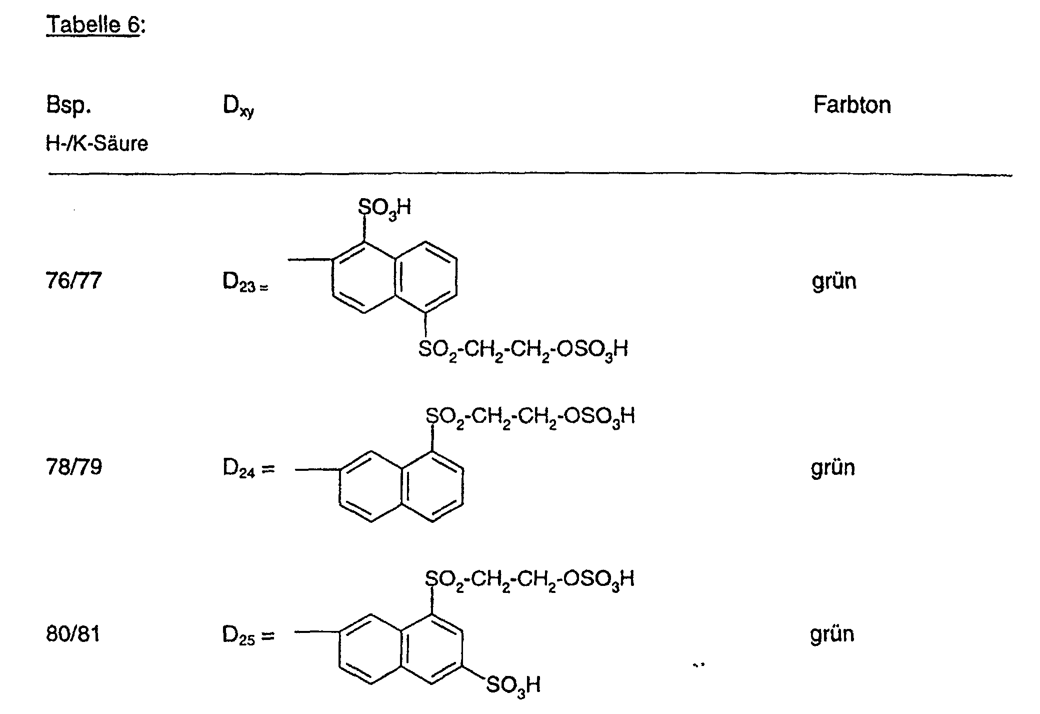

Beispiel 82: In Analogie zu der in Beispiel 14 beschriebenen Vorgehensweise erhält man den Farbstoff, welcher in Form der freien Säure der Formel (110) 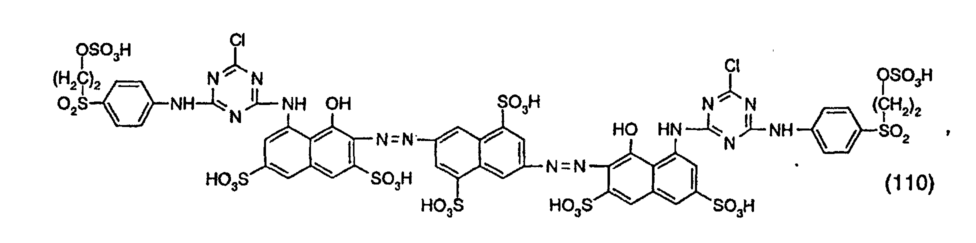 entspricht, wenn man als Kupplungskomponente anstelle der aus H-Säure und des Amins der Formel D₁₀-NH₂ hergestellten Azoverbindung eine äquimolare Menge der Verbindung der folgenden Formel 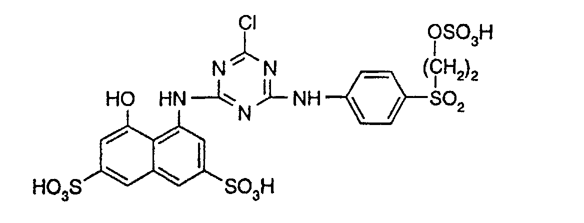 verwendet. Der Farbstoff der Formel (110) färbt Cellulose mit guten Allgemeinechtheiten.

Beispiel 83: In Analogie zu der in Beispiel 14 beschriebenen Vorgehensweise erhält man den Farbstoff, welcher in Form der freien Säure der Formel (111) 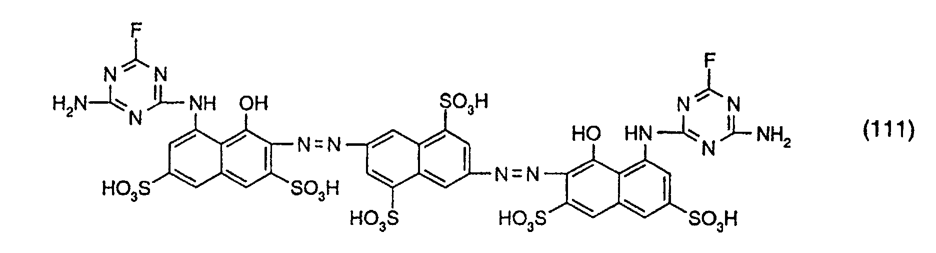 entspricht, wenn man als Kupplungskomponente anstelle der aus H-Säure und des Amins der Formel D₁₀-NH₂ hergestellten Azoverbindung eine äquimolare Menge der Verbindung der folgenden Formel 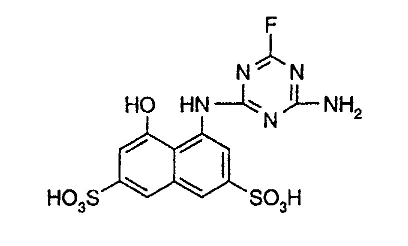 verwendet. Der Farbstoff der Formel (111) färbt Cellulose mit guten Allgemeinechtheiten.

### Herstellung von Farbstoffmischungen der Formeln (12a) bis (12d)

Beispiel 84: Zu einer Suspension von (32 - n) Teilen 1-Amino-8-hydroxynaphthalin-3,6-disulfonsäure (H-Säure) und n Teilen 1-Amino-8-hydroxynaphthalin-4,6-disulfonsäure (K-Säure) (n = 1 - 31) in 100 Teilen Wasser wird bei 0 bis 5°C die gemäss Beispiel 1 erhaltene Lösung der Diazoverbindung des Amins der Formel D₁₀-NH₂ zugetropft. Man lässt anschliessend auf Raumtemperatur erwärmen und rührt bis zur vollständigen Kupplung. Danach wird das Reaktionsgemisch auf 5 bis 10°C gekühlt, der pH-Wert mit Natriumhydrogencarbonat auf ca. 4,5 erhöht und die gemäss Beispiel 13 erhaltene Lösung der Tetrazoverbindung langsam zugetropft, wobei der pH-Wert während des Zutropfens durch Zugabe von Natriumhydrogencarbonat bei ca. 6,5 gehalten wird. Nach beendeter Kupplung wird die Farbstofflösung dialytisch von Salz befreit und im Vakuum eingedampft. Man erhält ein Gemisch der Verbindungen, die in Form der freien Säure den Formeln 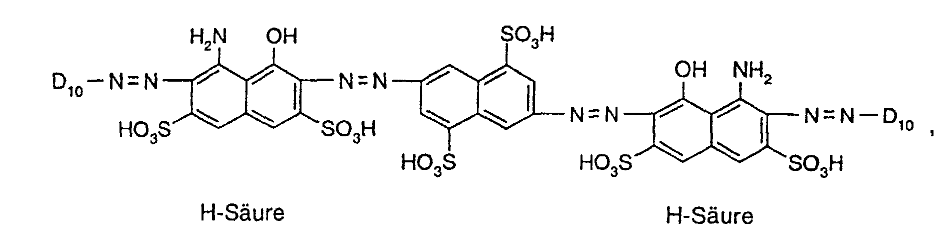 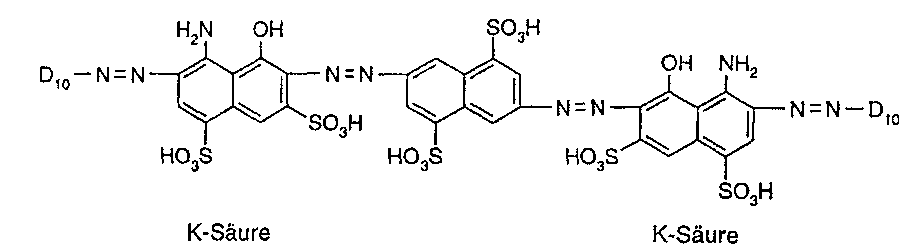 und 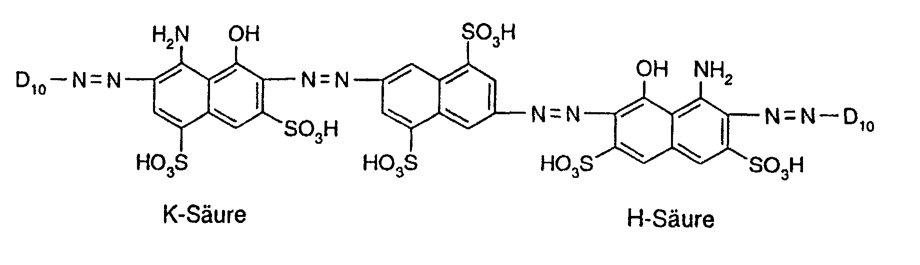 entsprechen und Cellulose in grünem Farbton mit guten Allgemeinechtheiten färbt.

Färbevorschrift I: 2 Teile des gemäss Beispiel 14 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II: 2 Teile des gemäss Beispiel 14 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III: 8 Teile des gemäss Beispiel 14 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV: 4 Teile des gemäss Beispiel 14 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V: 6 Teile des gemäss Beispiel 14 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI: 2 Teile des gemäss Beispiel 14 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I: 3 Teile des gemäss Beispiel 14 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitro benzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 14 erhaltenen Reaktivfarbstoffes werden unter schnellem Rühren in 100 Teile einer Stammverdickung, enthaltend 50 Teile 5%ige Natriumalginverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel (1) 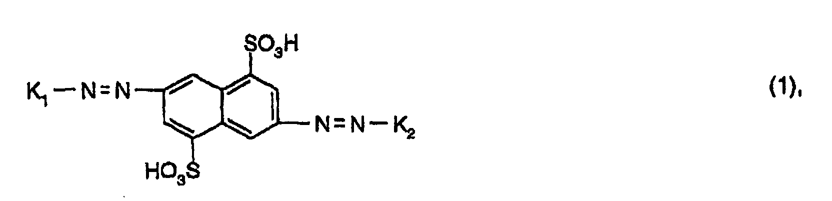 worin
K₁ und K₂ unabhängig voneinander je einen Rest der Formel 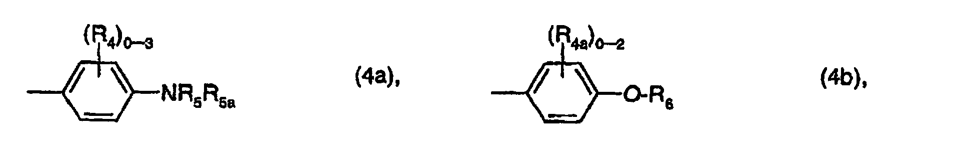 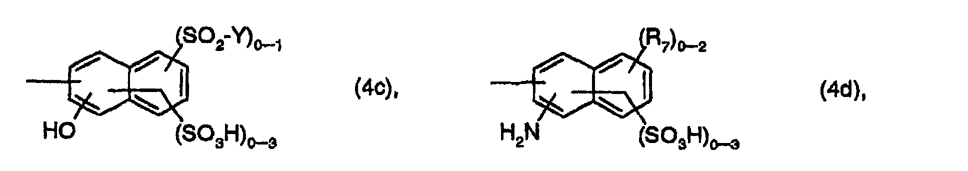 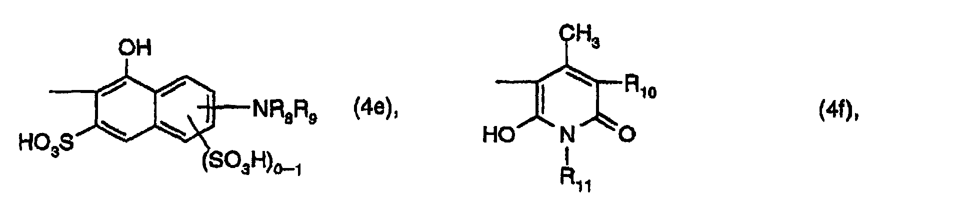 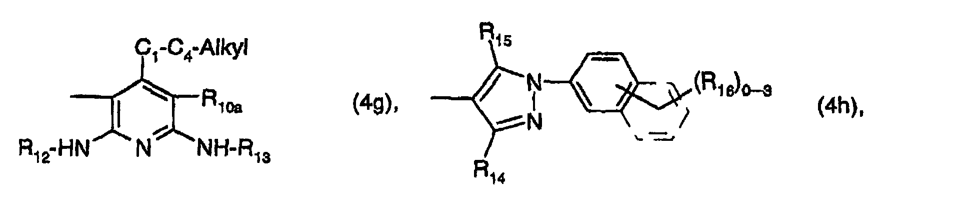 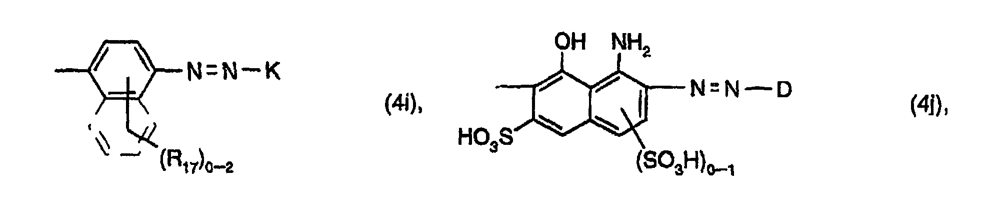 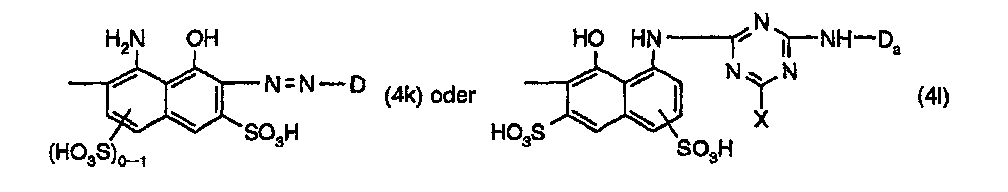 bedeuten, worin
(R₄)₀₋₃ für 0 bis 3 gleiche oder verschiedene Reste ausgewählt aus der Gruppe C₁-C₄-Alkyl, C₁-C₄-Alkoxy, Im Alkylteil durch Hydroxy, C₁-C₄-Alkoxy oder Sulfato substituiertes C₁-C₄-Alkoxy, Halogen, Carboxy, Hydroxy, Amino, N-Mono- oder N,N-Di-C₁-C₂-Alkylamino, C₂-C₄-Alkanoylamino, Ureldo, Sulfo, C₁-C₄-Alkylsulfonyloxy, C₁-C₄-Alkylsulfonylamino und Reaktivrest der Formel (2e) 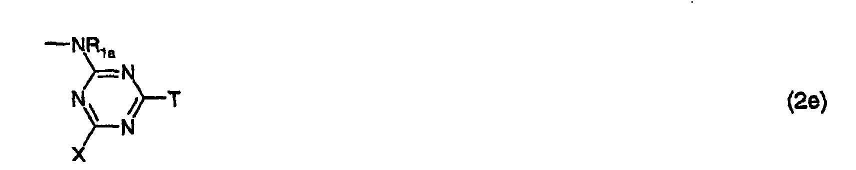 steht, worin
X Halogen, 3-Carboxypyrldin-1-yl oder 3-Carbamoylpyridin-1-yl bedeutet,
T unabhängig die Bedeutung von X hat oder für Hydroxy, C₁-C₄-Alkoxy, Phenoxy, C₁-C₄-Alkylthlo, Morpholino, gegebenenfalls durch nicht-faserreaktive Reste substituiertes Amino oder für einen faserreaktiven Rest der Formel (3a), (3b), (3c), (3d), (3e) oder (3f) 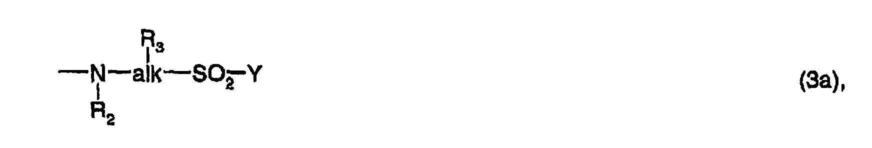 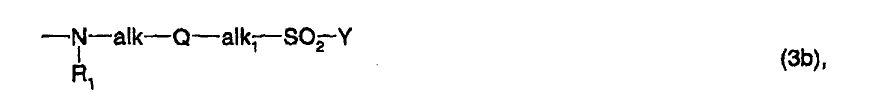 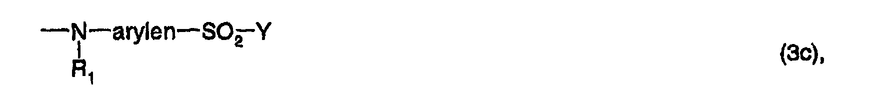 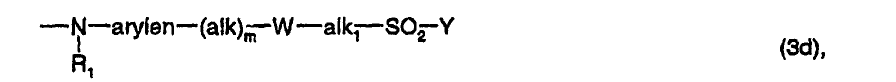 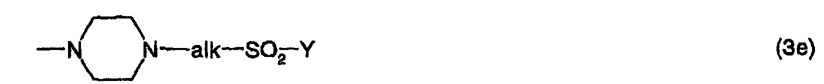 oder 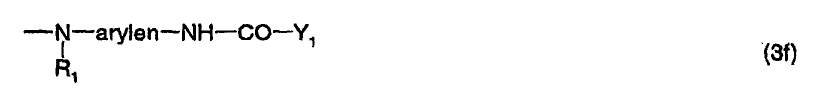 steht,
R₁ und R₁ₐ unabhängig voneinander je Wasserstoff oder C₁-C₄-Alkyl sind,
R₂ Wasserstoff, gegebenenfalls durch Hydroxy, Suifo, Sulfato, Carboxy oder Cyano substituiertes C₁-C₄-Alkyl oder einen Rest 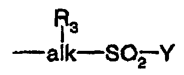 bedeutet,
R₃ Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Y ist,
alk und alk₁ unabhängig voneinander C₁-C₆-Alkylen sind,
arylen einen unsubstltuierten oder durch Sulfo, Carboxy, C₁-C₄-Alkyl, C₁-C₄-Alkoxy oder Halogen substitulerten Phenylen- oder Naphthylenrest bedeutet,
Y₁ für eine Gruppe -CH(Hal)-CH₂-Hal oder -C(Hal)=CH₂ steht und Hal Chlor oder Brom bedeutet,
Q ein Rest -O- oder -NR₁-, worin R₁ die oben angegebene Bedeutung hat, ist,
W für eine Gruppe -SO₂-NR₂-, -CONR₂- oder -NR₂CO- steht,
m die Zahl 0 oder 1 ist, und
Y Vinyl oder einen Rest -CH₂-CH₂-U bedeutet und U eine alkalisch abspaltbare Gruppe ist;
(R₄ₐ)₀₋₂ für 0 bis 2 gleiche oder verschiedene Reste ausgewählt aus der Gruppe C₁-C₄-Alkyl, C₁-C₄-Alkoxy, Phenoxy, Halogen, Sulfo und Hydroxy steht;
R₅ Wasserstoff oder C₁-C₄-Alkyl ist;
R₅ₐ unabhängig die Bedeutung von R₅ hat oder für C₂-C₄-Alkanoyl, C₁-C₄-Hydroxyalkyl, C₁-C₄-Sulfatoalkyl, C₁-C₄-Alkoxyalkyl oder gegebenenfalls durch Methyl, Methoxy, Chlor oder Sulfo substituiertes Phenyl steht;
R₆ Wasserstoff, C₁-C₄-Alkyl oder Phenyl bedeutet;
(R₇)₀₋₂ für 0 bis 2 gleiche oder verschiedene Substituenten ausgewählt aus der Gruppe Hydroxy und faserreaktiver Rest der Formel (2a)
-SO₂-Y (2a),
steht, worin Y die zuvor angegebene Bedeutung hat;
R₈ Wasserstoff oder gegebenenfalls durch Hydroxy, C₁-C₄-Alkoxy, Sulfato, Sulfo, Halogen oder Cyano substituiertes C₁-C₄-Alkyl ist;
R₉ unabhängig die Bedeutung von R₈ hat oder C₂-C₄-Alkanoyl oder Benzoyl ist, oder worin -NR₈R₉ einen faserreaktiven Rest der zuvor angegebenen Formel (2e) bedeutet;
R₁₀ und R₁₀ₐ unabhängig voneinander je Carbamoyl, Sultomethyl oder Cyano sind;
R₁₁ für Wasserstoff oder C₁-C₄-Alkyl, welches gegebenenfalls durch einen Rest der zuvor angegebenen Formel (2e) substituiert ist, steht;
R₁₂ und R₁₃ unabhängig voneinander je für Wasserstoff oder gegebenenfalls durch Hydroxy, C₁-C₄-Alkoxy, Phenoxy, Sutfato, Sulfo, Carboxy, Amino oder N-Mono- oder N,N-Di-C₁-C₄-Alkylamino, welches seinerseits im Alkylteil durch Hydroxy, C₁-C₄-Alkoxy, Phenoxy, Sulfato, Sulfo, Carboxy oder einen faserreaktiven Rest der zuvor angegebenen Formel (2e) substituiert sein kann, substituiertes und/oder mit Ausnahme von Methyl gegebenenfalls durch -O- unterbrochenes C₁-C₁₂-Alkyl stehen;
R₁₄ Methyl oder Carboxy bedeutet;
R₁₅ Hydroxy oder Amino ist;
(R₁₆)₀₋₃ für 0 bis 3 gleiche oder verschiedene Reste ausgewählt aus der Gruppe Sulfo, Halogen, Hydroxy, C₁-C₄-Alkoxy und C₁-C₄-Alkyl steht;
(R₁₇)₀₋₂ für 0 bis 2 gleiche oder verschiedene Reste ausgewählt aus der Gruppe C₁-C₄-Alkyl, C₁-C₄-Alkoxy, im Alkylteil durch Hydroxy, C₁-C₄-Alkoxy oder Sulfato substituiertes C₁-C₄-Alkoxy, C₂-C₄-Alkanoylamino, Ureldo, Halogen und Sulfo steht;
K einen Rest der zuvor angegebenen Formel (4a), (4b), (4c), (4d), (4e), (4f), (4g) oder (4h) oder (4j), (4k) oder (4l) und vorzugsweise einen Rest der Formel (4e) bedeutet;
D ein Phenyl- oder 1- oder 2-Naphthylrest ist, der 1 bis 3 gleiche oder verschiedene Reste aus der Gruppe Sulfo, C₁-C₄-Alkyl, C₁-C₄-Alkoxy, Halogen und faserreaktiver Rest der Formel (2a), (2b), (2c) oder (2d)
-SO₂-Y (2a),
-CONR₂-(CH₂)ₙ-SO₂-Y (2b),
-NH-CO-CH(Hal)-CH₂-Hal (2c)
oder
-NH-CO-C(Hal)=CH₂ (2d)
trägt, worin
n eine ganze Zahl von 1 bis 6, und R₂, Hal und Y jeweils die zuvor angegebene Bedeutung haben;
Dₐ der Rest eines Monoazo- oder Disazochromophors ist;
und X und Y jeweils die zuvor angegebene Bedeutung haben;
wobei mindestens einer der Reste K₁ und K₂ eine faserreaktive Gruppe trägt.

2. Verbindungen gemäss Anspruch 1, **dadurch gekennzeichnet, dass** jeder der Reste K₁ und K₂ mindestens eine faserreaktive Gruppe trägt.

3. Verbindungen gemäss einem der Ansprüche 1 und 2, **dadurch gekennzeichnet, dass** K₁ und K₂ unabhängig voneinander jeweils für einen Rest der Formel (4c'), (4c"), (4d'), (4e'), (4f'), (4g'), (4h'), (4i'), (4j') oder (4k') 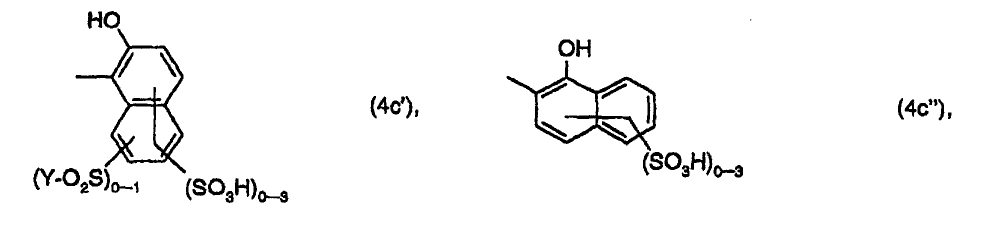 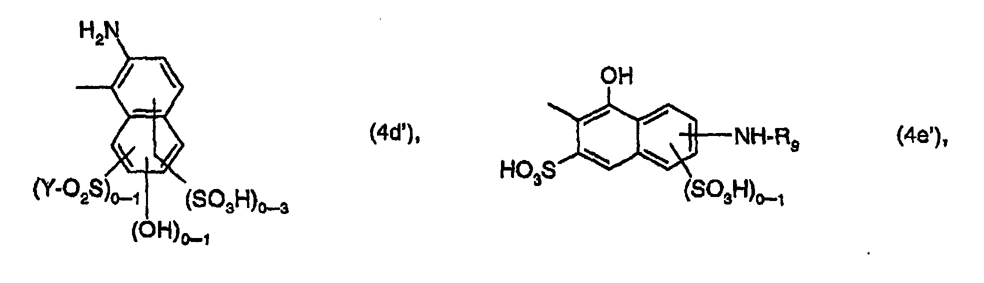 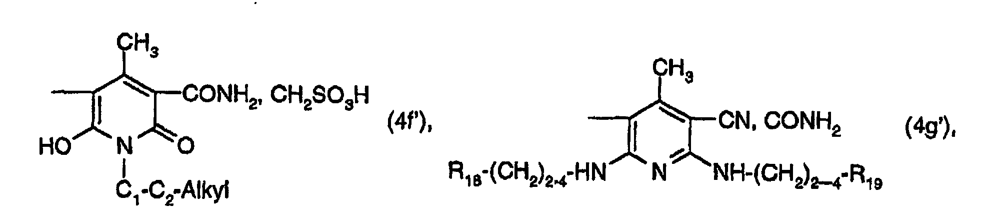 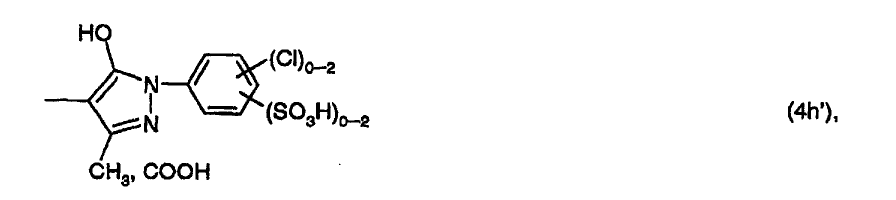 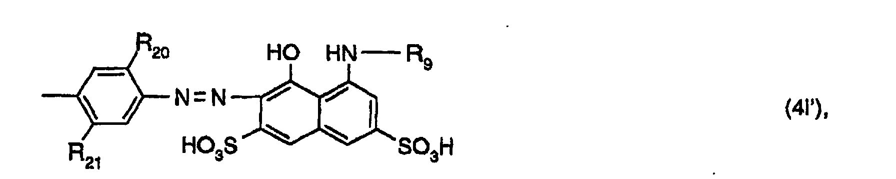 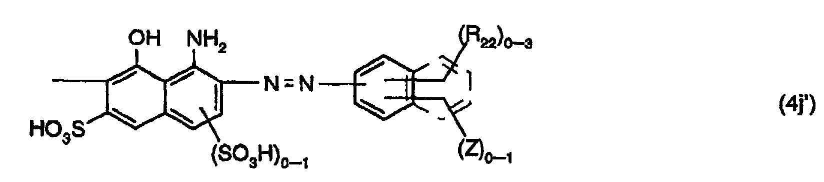 oder 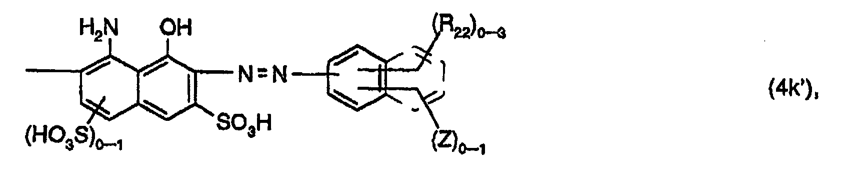 stehen, worin
R₉ Acetyl, Benzoyl oder ein Rest der Formel (2e') 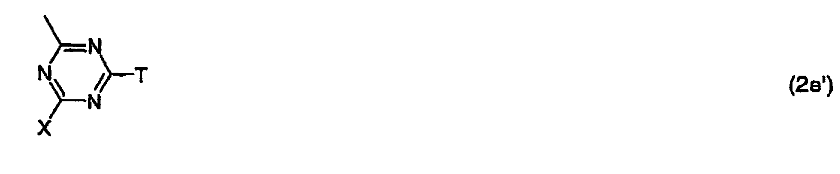 ist, worin
X Halogen und
T C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morphollno, Phenylamino oder N-C₁-C₄-Alkyl-N-phenylamino, worin das Alkyl gegebenenfalls durch Hydroxy, Sulfo oder Sulfato und das Phenyl jeweils unsubstituiert oder durch Sulfo, Carboxy, Acetylamino, Methyl oder Methoxy substituiert ist, oder
einen faserreaktiven Rest der Formel (3c') oder (3d') 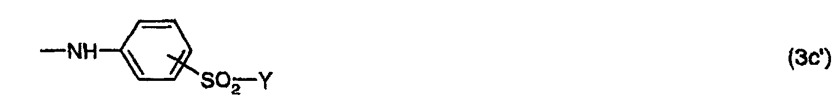 oder 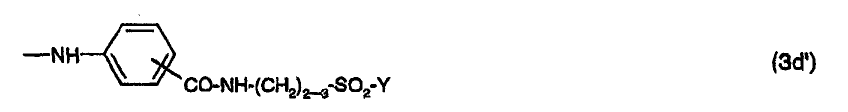 bedeuten,
R₁₈ Wasserstoff, Hydroxy oder Sulfato ist,
R₁₉ unabhängig die Bedeutung von R₁₈ hat oder für einen Rest der Formel (2c) steht,
R₂₀ und R₂₁ unabhängig voneinander je für Wasserstoff, Methyl, Methoxy, 2-Hydroxyethoxy, 2-Sulfatoethoxy, Acetylamino, Propionylamlno, Ureido oder Sulfo stehen,
(R₂₂)₀₋₃ 0 bis 3 gleiche oder verschiedene Reste ausgewählt aus der Gruppe Sulfo, Chlor, C₁-C₄-Alkyl und C₁-C₄-Alkoxy bedeutet,
(Z)₀₋₁ gegebenenfalls einen Rest der Formel (2a), (2b), (2c) oder (2d) und
Y Vinyl, β-Brom- oder β-Chlorethyl, β-Acetoxyethyl, β-Benzoyloxyethyl, β-Phosphatoethyl, β-Sulfatoethyl und β-Thiosulfatoethyl und Insbesondere bevorzugt Vinyl oder β-Sulfatoethyl ist.

4. Verbindungen gemäss Anspruch 3, **dadurch gekennzeichnet, dass** K₁ und K₂ unabhängig voneinander je einen Rest der Formel (4e'), (4j') oder (4k') bedeuten.

5. Verbindungen gemäss einem der Ansprüche 1 bis 4, **dadurch gekennzeichnet, dass** K₁ und K₂ identisch sind.

6. Verbindungen gemäss einem der Ansprüche 1 bis 5, **dadurch gekennzeichnet, dass** die Verbindungen der Formel (1) Verbindungen der Formel (1a) 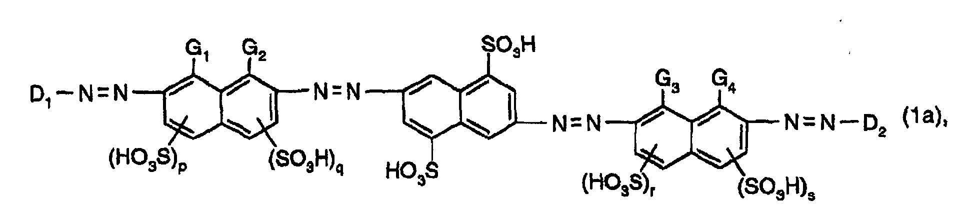 bedeuten, worin
D₁ ein Rest der Formel (6a) 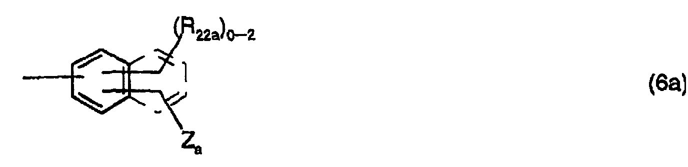 und D₂ ein Rest der Formel (6b) 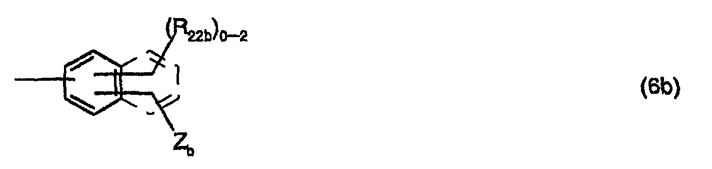 ist, (R₂₂ₐ)₀₋₂ und (R_{22b})₀₋₂ unabhängig voneinander jeweils für 0 bis 2 gleiche oder voneinander verschiedene Substituenten ausgewählt aus der Gruppe Sulfo, Chlor, C₁-C₄-Alkyl oder C₁-C₄-Alkoxy stehen,
von den Resten G₁ und G₂ einer Hydroxy und der andere Amino bedeutet,
von den Resten G₃ und G₄ einer Hydroxy und der andere Amino bedeutet,
p, q, r und s unabhängig voneinander die Zahl 0 oder1 sind, wobei
die Summe von p und q die Zahl 1 oder 2 ist,
die Summe von r und s die Zahl 1 oder 2 Ist und
Zₐ und Z_{b} unabhängig voneinander jeweils für einen Rest der Formel (2a), (2b), (2c) oder (2d)
-SO₂-Y (2a),
-CONR₂-(CH₂)ₙ-SO₂-Y (2b),
-NH-CO-CH(Hal)-CH₂-Hal (2c)
oder
-NH-CO-C(Hal)=CH₂ (2d)
stehen, worin
n die Zahl 2, 3 oder 4 ist,
Hal Chlor oder Brom und
Y Vinyl oder einen Rest -CH₂-CH₂-U bedeutet und U eine alkalisch abspaltbare Gruppe ist.

7. Verbindungen gemäss Anspruch 6, **dadurch gekennzeichnet, dass**
die Summe von p und q die Zahl 2 und
die Summe von r und s die Zahl 2 ist.

8. Verbindungen gemäss einem der Ansprüche 6 und 7, **dadurch gekennzeichnet, dass** die Verbindungen der Formel (1a) Verbindungen der Formel (1b) oder (1c) 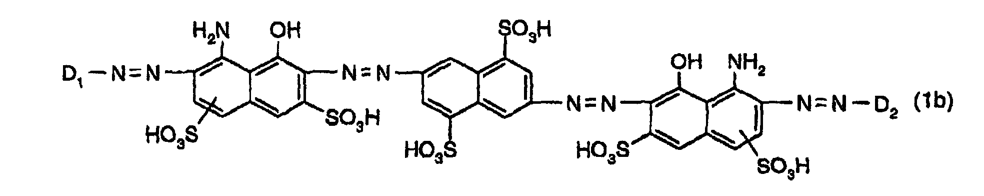 oder 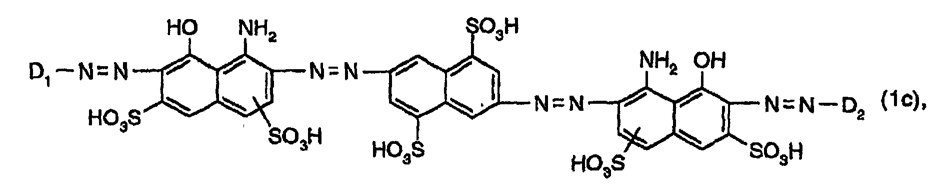 bedeuten, worin
D₁ und D₂ unabhängig voneinander jeweils ein Rest der Formel (6c), (6d), (6e) oder (6f) 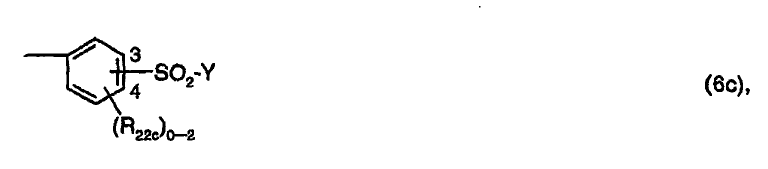 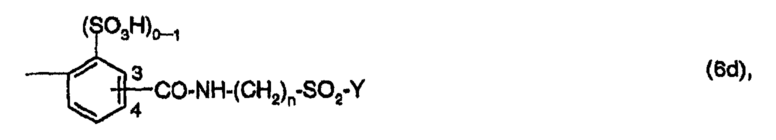 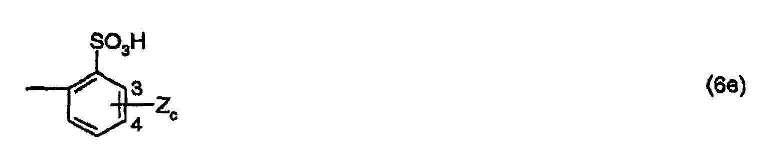 oder 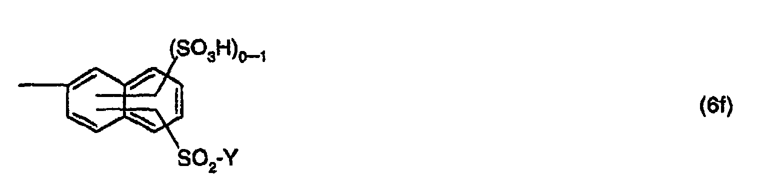 sind, worin
(R_{22c})₀₋₂ für 0 bis 2 gleiche oder voneinander verschiedene Substituenten ausgewählt aus der Gruppe Sulfo, Methyl oder Methoxy steht,
Z_{c} für α,β-Dibrompropionylamino oder α-Bromacryloylamino,
n die Zahl 2, 3 oder 4 Ist und
Y Vinyl, β-Chlorethyl oder β-Sulfatoethyl bedeutet.

9. Verbindungen gemäss Anspruch 8, **dadurch gekennzeichnet, dass**
D₁ und D₂ einen Rest der Formel (6c) bedeuten, worin
(R_{22c})₀₋₂ für 0 bis 2 gleiche oder voneinander verschiedene Substituenten ausgewählt aus der Gruppe Methyl oder Methoxy steht und
Y Vinyl oder β-Sulfatoethyl bedeutet.

10. Verfahren zur Herstellung von Verbindungen der Formel (1) gemäss Anspruch 1, **dadurch gekennzeichnet, dass** man In etwa 1 Moläquivalent der Verbindung der Formel 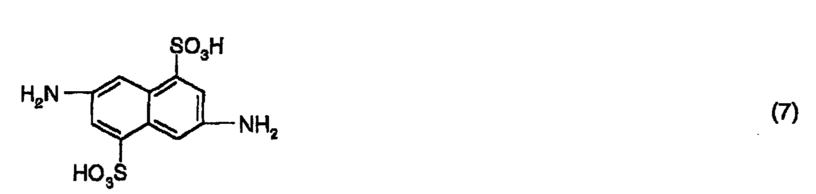 mit einem Nitrit in einem sauren Medium, tetrazotiert und die tetrazotierit Verbindung mit in etwa 1 Moläquivalent einer Kupplungskomponente der Formel
K₁-H (8)
und in etwa 1 Moläquivalent einer Kupplungskomponente der Formel
K₂-H (9)
kuppelt, worin für K₁ und K₂ jeweils die im Anspruch 1 genannten Bedeutungen gelten.

11. Farbstoffmischung **dadurch gekennzeichnet, dass** sie
zwei oder mehrere Verbindungen der Formel (1) gemäss Anspruch 1 enthalten.

12. Farbstoffmischung gemäss Anspruch 11, **dadurch gekennzeichnet, dass** sie mindestens eine Verbindung der Formeln (12a) und (12b) 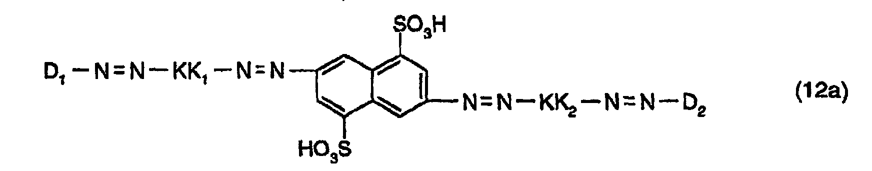 und 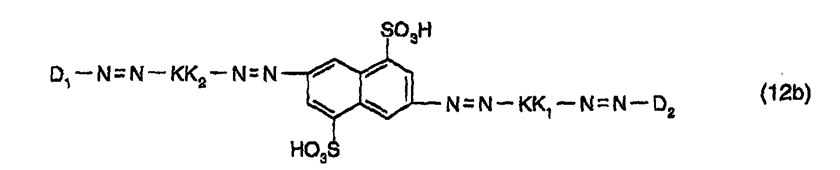 zusammen mit mindestens einer Verbindung der Formeln (12c) und (12d) 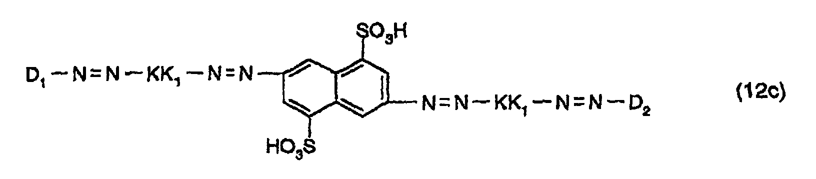 und 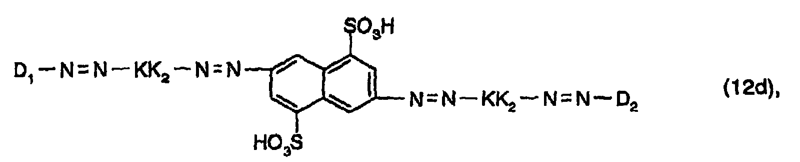 enthalten, worin
D₁ und D₂ unabhängig voneinander jeweils ein Rest der Formel (6c), (6d), (6e) oder (6f) 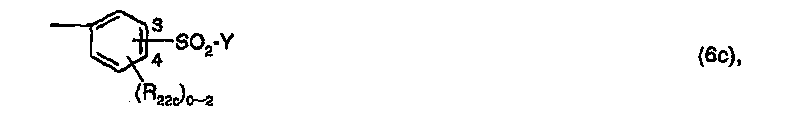 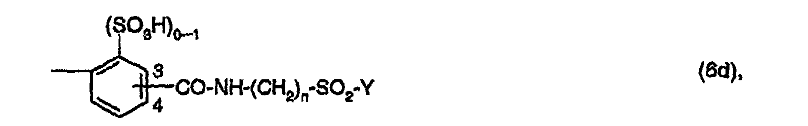 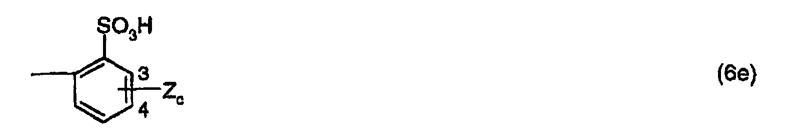 oder 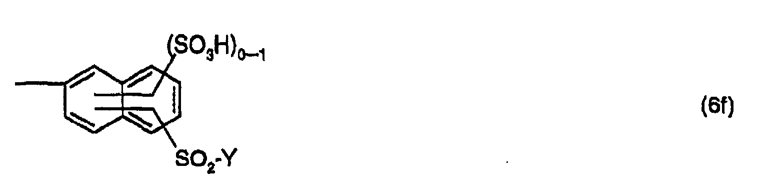 sind, worin
(R_{22c})₀₋₂ für 0 bis 2 gleiche oder voneinander verschiedene Substituenten ausgewählt aus der Gruppe Sulfo, Methyl oder Methoxy steht,
Z_{c} für α,β-Dibrompropionylamino oder α-Bromacryloylamino,
n die Zahl 2, 3 oder 4 und
Y Vinyl, β-Chlorethyl oder β-Sulfatoethyl bedeutet,
KK₁ für den Rest von 1-Amino-8-hydroxynaphthalin-3,6-disulfonsäure (H-Säure) und
KK₂ für den Rest von 1-Amino-8-hydroxynaphthalin-4,6-disulfonsäure (K-Säure) steht.

13. Verwendung von Verbindungen der Formel (1) als faserreaktive Farbstoffe zum Färben oder Bedrucken von hydroxylgruppenhaltigen oder stickstoffhaltigen Fasermaterialien.

14. Verwendung gemäss Anspruch 13, **dadurch gekennzeichnet, dass** man cellulosehaltige Fasermaterialien, insbesondere baumwollhaltige Fasermaterialien, färbt oder bedruckt.

## Claims

1. A compound of formula (1) 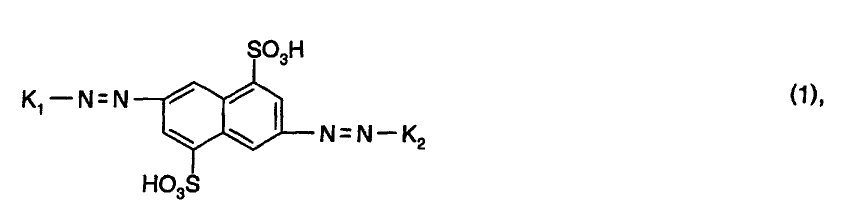 wherein
K₁ and K₂ are each independently of the other a radical of formula 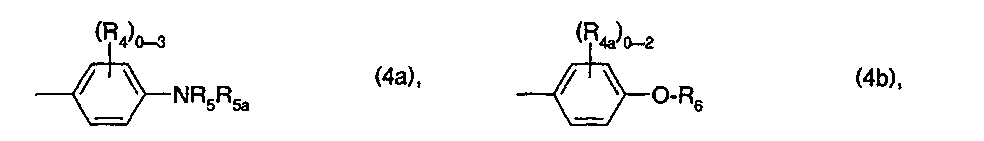 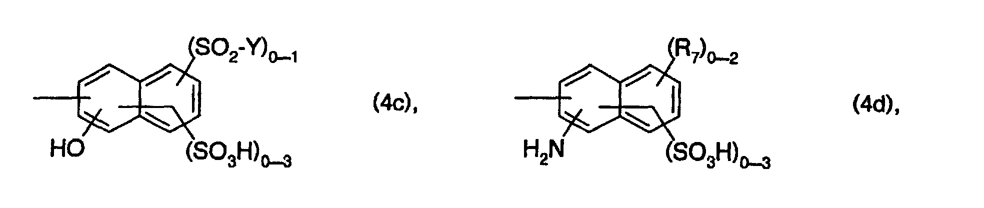 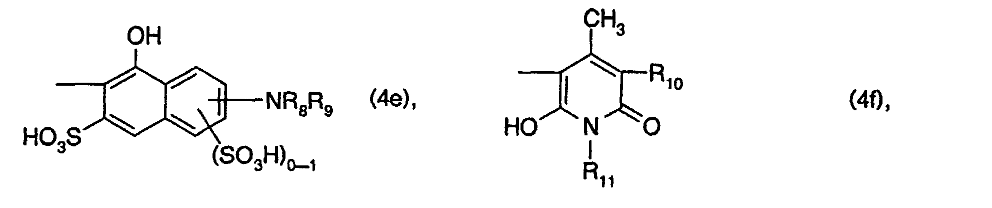 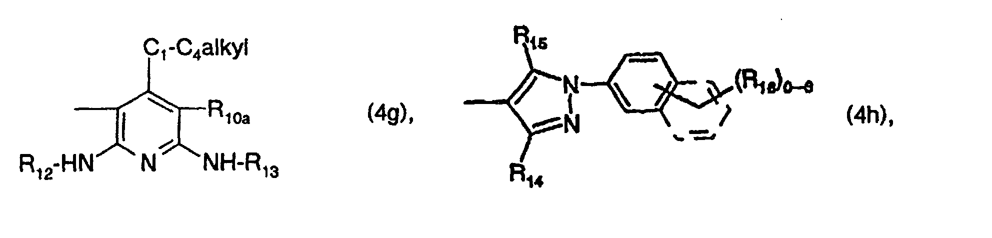 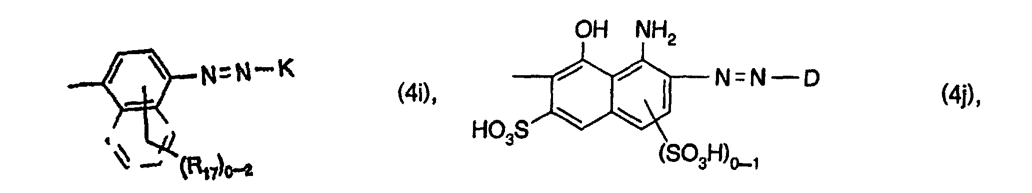 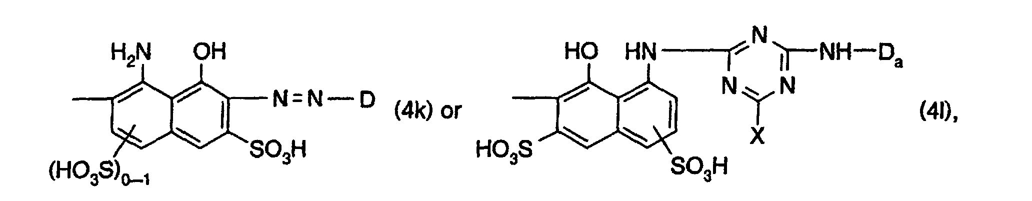 wherein
(R₄)₀₋₃ denotes from 0 to 3 identical or different radicals selected from the group C₁-C₄alkyl, C₁-C₄alkoxy, C₁-C₄alkoxy substituted in the alkyl moiety by hydroxy, C₁-C₄alkoxy or by sulfato; halogen, carboxy, hydroxy, amino, N-mono- or N,N-di-C₁-C₂alkylamino, C₂-C₄-alkanoylamino, ureido, sulfo, C₁-C₄alkylsulfonyloxy, C₁-C₄alkylsulfonylamino and reactive radical of formula (2e) 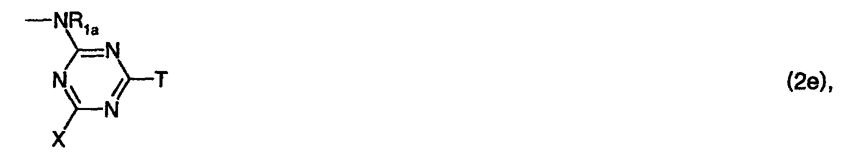 wherein
X is halogen, 3-carboxypyridin-1-yl or 3-carbamoylpyridin-1-yl,
T independently thereof has a meaning given for X or is hydroxy, C₁-C₄alkoxy, phenoxy, C₁-C₄alkylthio, morpholino, amino unsubstituted or substituted by non-fibre-reactive radicals, or a fibre-reactive radical of formula (3a), (3b), (3c), (3d), (3e) or (3f) 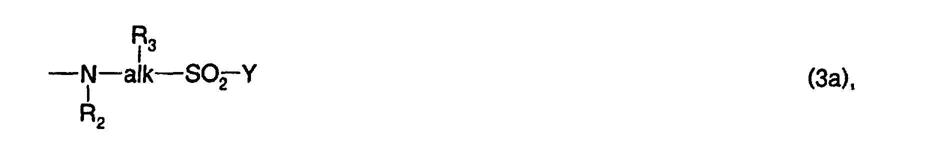 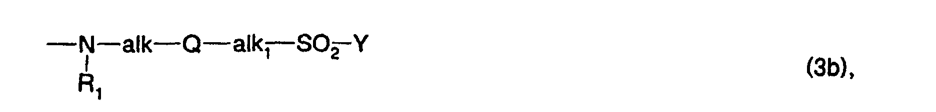 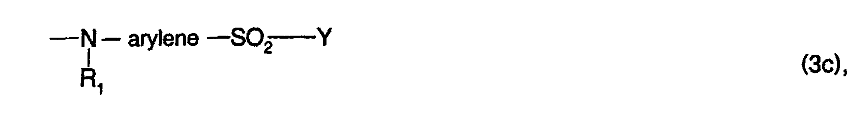 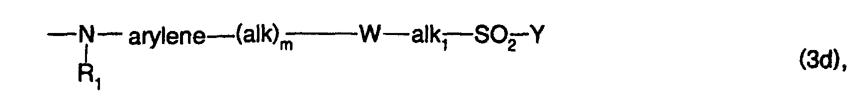 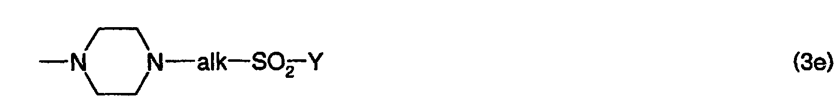 or 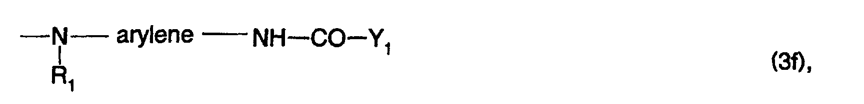 R₁ and R₁ₐ are each independently of the other hydrogen or C₁-C₄alkyl,
R₂ is hydrogen, C₁-C₄alkyl unsubstituted or substituted by hydroxy, sulfo, sulfato, carboxy or by cyano, or a radical 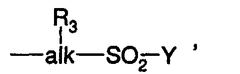 R₃ is hydrogen, hydroxy, sulfo, sulfato, carboxy, cyano, halogen, C₁-C₄alkoxycarbonyl, C₁-C₄alkanoyloxy, carbamoyl or the group -SO₂-Y,
alk and alk₁ are each independently of the other C₁-C₆alkylene,
arylene is a phenylene or naphthylene radical unsubstituted or substituted by sulfo, carboxy, C₁-C₄alkyl, C₁-C₄alkoxy or by halogen,
Y₁ is a group -CH(Hal)-CH₂-Hal or -C(Hal)=CH₂ and Hal is chlorine or bromine,
Q is a radical -O- or -NR₁-, wherein R₁ is as defined above,
W is a group -SO₂-NR₂-, -CONR₂- or -NR₂CO-,
m is the number 0 or 1, and
Y is vinyl or a radical -CH₂-CH₂-U and U is a group removable under alkaline conditions;
(R₄ₐ)₀₋₂ denotes from 0 to 2 identical or different radicals selected from the group C₁-C₄-alkyl, C₁-C₄alkoxy, phenoxy, halogen, sulfo and hydroxy;
R₅ is hydrogen or C₁-C₄alkyl;
R₅ₐ independently thereof has a meaning given for R₅ or is C₂-C₄alkanoyl, C₁-C₄hydroxyalkyl, C₁-C₄sulfatoalkyl, C₁-C₄alkoxyalkyl or unsubstituted or methyl-, methoxy-, chloro- or sulfo-substituted phenyl;
R₆ is hydrogen, C₁-C₄alkyl or phenyl;
(R₇)₀₋₂ denotes from 0 to 2 identical or different substituents selected from the group hydroxy and fibre-reactive radical of formula (2a)
-SO₂-Y (2a),
wherein Y is as defined above;
R₈ is hydrogen or C₁-C₄alkyl unsubstituted or substituted by hydroxy, C₁-C₄alkoxy, sulfato, sulfo, halogen or by cyano;
R₉ independently thereof has a meaning given for R₈ or is C₂-C₄alkanoyl or benzoyl, or -NR₈R₉ is a fibre-reactive radical of formula (2e) given above;
R₁₀ and R₁₀ₐ are each independently of the other carbamoyl, sulfomethyl or cyano;
R₁₁ is hydrogen or C₁-C₄alkyl unsubstituted or substituted by a radical of formula (2e) given above;
R₁₂ and R₁₃ are each independently of the other hydrogen or C₁-C₁₂alkyl unsubstituted or substituted by hydroxy, C₁-C₄alkoxy, phenoxy, sulfato, sulfo, carboxy, amino or by N-mono- or N,N-di-C₁-C₄-alkylamino (the alkyl moiety or moieties of which may itself or themselves be substituted by hydroxy, C₁-C₄alkoxy, phenoxy, sulfato, sulfo, carboxy or by a fibre-reactive radical of formula (2e) given above) and/or uninterrupted or, with the exception of methyl, interrupted by -O-;
R₁₄ is methyl or carboxy;
R₁₅ is hydroxy or amino;
(R₁₆)₀₋₃ denotes from 0 to 3 identical or different radicals selected from the group sulfo, halogen, hydroxy, C₁-C₄alkoxy and C₁-C₄alkyl;
(R₁₇)₀₋₂ denotes from 0 to 2 identical or different radicals selected from the group C₁-C₄-alkyl, C₁-C₄alkoxy, C₁-C₄alkoxy substituted in the alkyl moiety by hydroxy, C₁-C₄alkoxy or by sulfato; C₂-C₄alkanoylamino, ureido, halogen and sulfo;
K is a radical of formula (4a), (4b), (4c), (4d), (4e), (4f), (4g) or (4h) or (4j), (4k) or (4l) given above and is preferably a radical of formula (4e);
D is a phenyl or 1- or 2-naphthyl radical containing from 1 to 3 identical or different radicals from the group sulfo, C₁-C₄alkyl, C₁-C₄alkoxy, halogen and fibre-reactive radical of formula (2a), (2b), (2c) or (2d)
-SO₂-Y (2a),
-CONR₂-(CH₂)ₙ-SO₂-Y (2b),
-NH-CO-CH(Hal)-CH₂-Hal (2c)
or
-NH-CO-C(Hal)=CH₂ (2d),
wherein n is an integer from 1 to 6, and each of R₂, Hal and Y has the meanings given above;
Dₐ is the radical of a monoazo or disazo chromophore;
and each of X and Y has the meanings given above;
at least one of the radicals K₁ and K₂ containing a fibre-reactive group.

2. A compound according to claim 1, wherein
each of the radicals K₁ and K₂ contains at least one fibre-reactive group.

3. A compound according to either claim 1 or claim 2, wherein
K₁ and K₂ are each independently of the other a radical of formula (4c'), (4c"), (4d'), (4e'), (4f'), (4g'), (4h'), (4i'), (4j') or (4k') 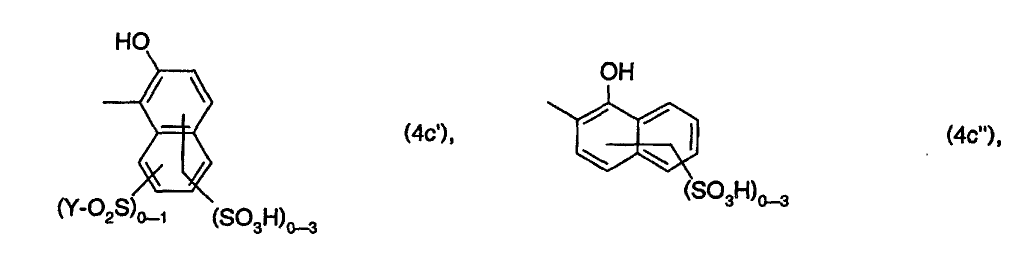 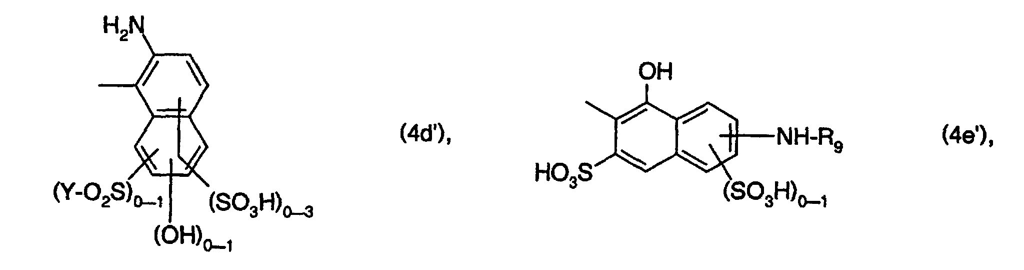 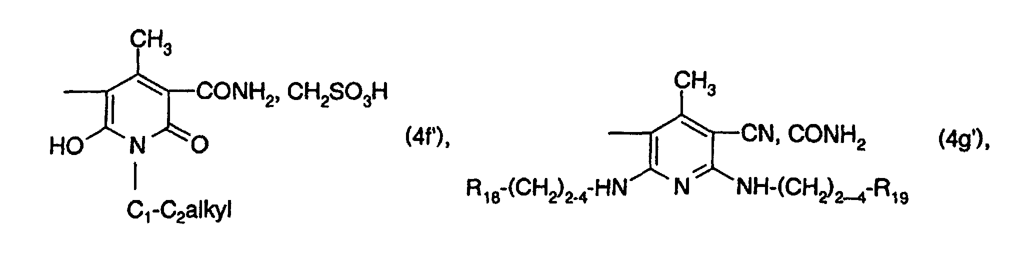 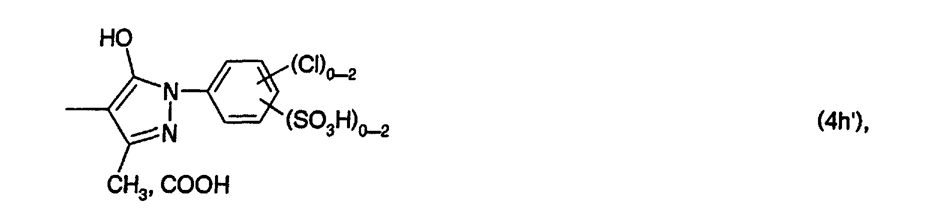 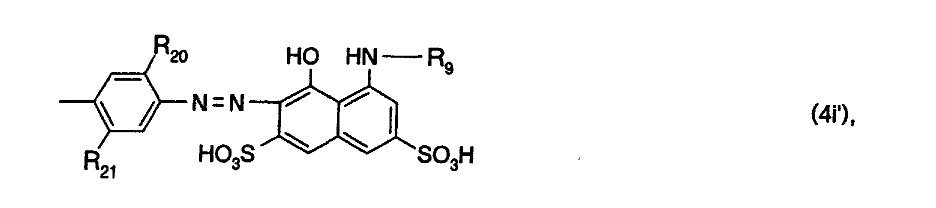 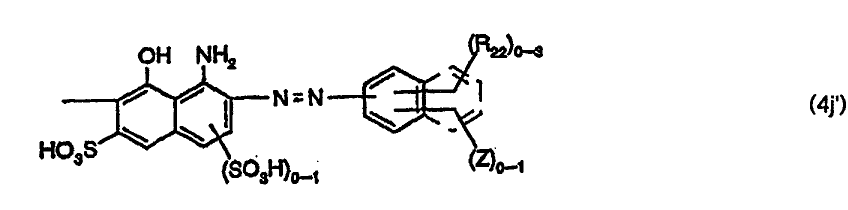 or 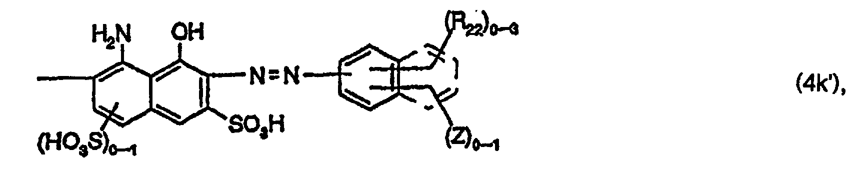 wherein
R₉ is acetyl, benzoyl or a radical of formula (2e') 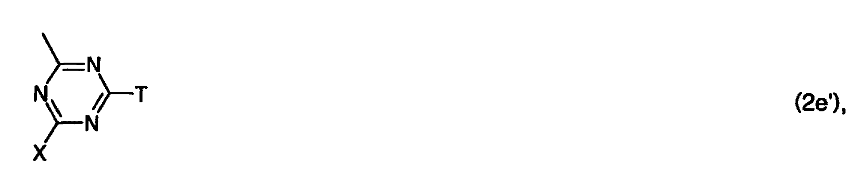 wherein
X is halogen and
T is C₁-C₄alkoxy, C₁-C₄alkylthio, hydroxy, amino, N-C₁-C₄alkylamino unsubstituted or substituted in the alkyl moiety by hydroxy, sulfato or by sulfo; morpholino, phenylamino or N-C₁-C₄alkyl-N-phenylamino wherein the alkyl is unsubstituted or substituted by hydroxy, sulfo or by sulfato and the phenyl is in each case unsubstituted or substituted by sulfo, carboxy, acetylamino, methyl or by methoxy, or
a fibre-reactive radical of formula (3c') or (3d') 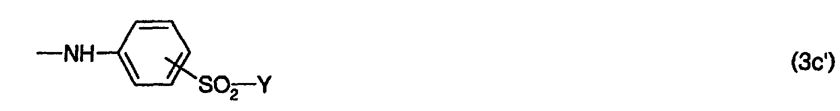 or 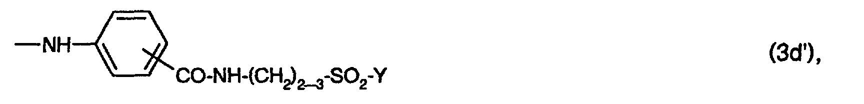 R₁₈ is hydrogen, hydroxy or sulfato,
R₁₉ independently thereof has a meaning given for R₁₈ or is a radical of formula (2c), R₂₀ and R₂₁ are each independently of the other hydrogen, methyl, methoxy, 2-hydroxyethoxy, 2-sulfatoethoxy, acetylamino, propionylamino, ureido or sulfo,
(R₂₂)₀₋₃ denotes from 0 to 3 identical or different radicals selected from the group sulfo, chlorine, C₁-C₄alkyl and C₁-C₄alkoxy,
(Z)₀₋₁, where present, denotes a radical of formula (2a), (2b), (2c) or (2d) and
Y is vinyl, β-bromo- or β-chloro-ethyl, β-acetoxyethyl, β-benzoyloxyethyl, β-phosphatoethyl, β-sulfatoethyl or β-thiosulfatoethyl and especially vinyl or β-sulfatoethyl.

4. A compound according to claim 3, wherein K₁ and K₂ are each independently of the other a radical of formula (4e'), (4j') or (4k').

5. A compound according to any one of claims 1 to 4, wherein K₁ and K₂ are identical.

6. A compound according to any one of claims 1 to 5, wherein the compound of formula (1) is a compound of formula (1a) 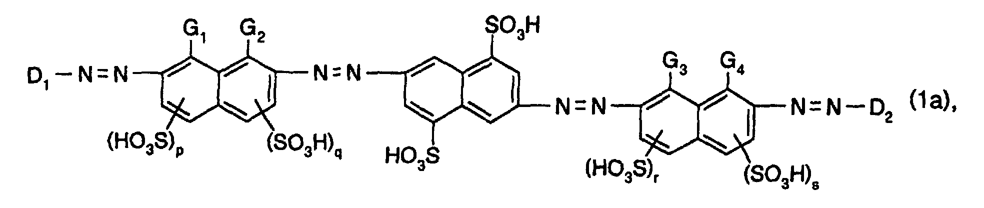 wherein
D₁ is a radical of formula (6a) 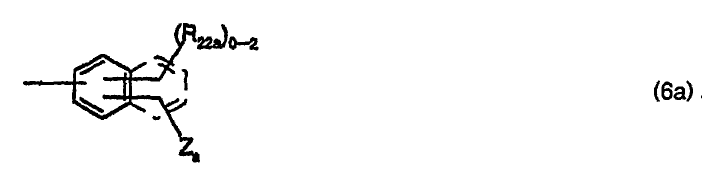 and
D₂ is a radical of formula (6b) 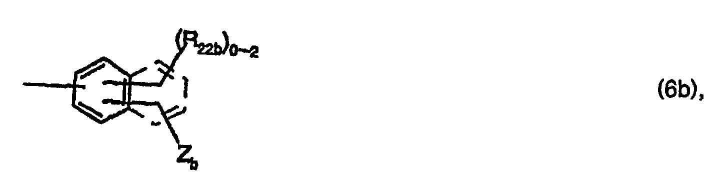 (R₂₂ₐ)₀₋₂ and (R_{22b})₀₋₂ each independently of the other denote from 0 to 2 identical or different substituents selected from the group sulfo, chlorine, C₁-C₄alkyl and C₁-C₄alkoxy,
of the radicals G₁ and G₂ one is hydroxy and the other is amino,
of the radicals G₃ and G₄ one is hydroxy and the other is amino,
p, q, r and s are each independently of the others the number 0 or 1,
the sum of p and q being the number 1 or 2,
the sum of r and s being the number 1 or 2, and
Zₐ and Z_{b} are each independently of the other a radical of formula (2a), (2b), (2c) or (2d)
-SO₂-Y (2a),
-CONR₂-(CH₂)ₙ-SO₂-Y (2b),
-NH-CO-CH(Hal)-CH₂-Hal (2c)
or
-NH-CO-C(Hal)=CH₂ (2d),
wherein
n is the number 2, 3 or 4,
Hal is chlorine or bromine and
Y is vinyl or a radical -CH₂-CH₂-U and U is a group removable under alkaline conditions.

7. A compound according to claim 6, wherein
the sum of p and q is the number 2 and
the sum of r and s is the number 2.

8. A compound according to either claim 6 or claim 7, wherein the compounds of formula (1a) are compounds of formula (1b) or (1c) 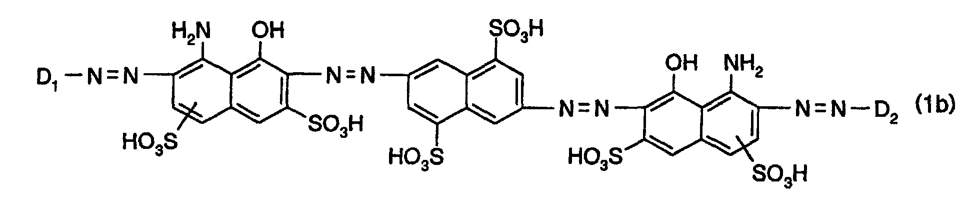 or 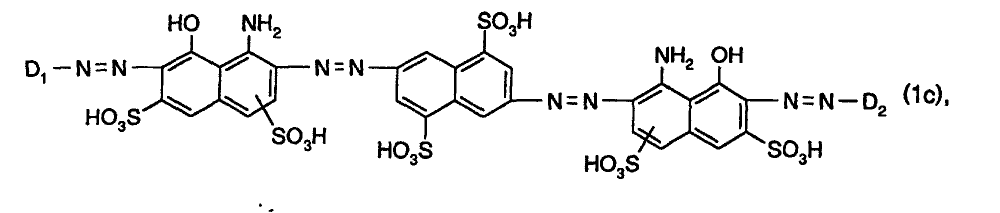 wherein
D₁ and D₂ are each independently of the other a radical of formula (6c), (6d), (6e) or (6f) 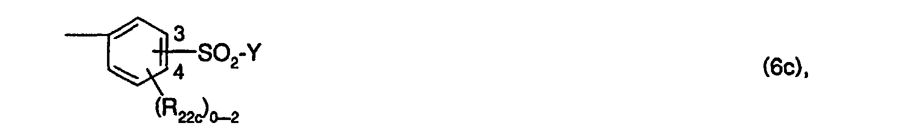 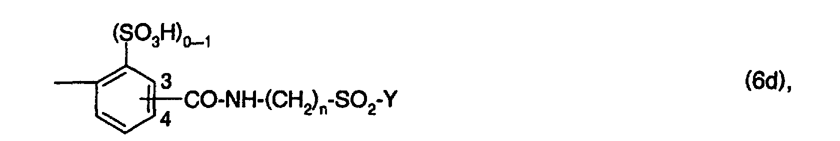 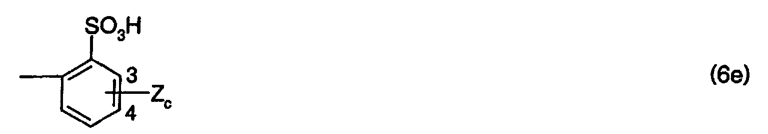 or 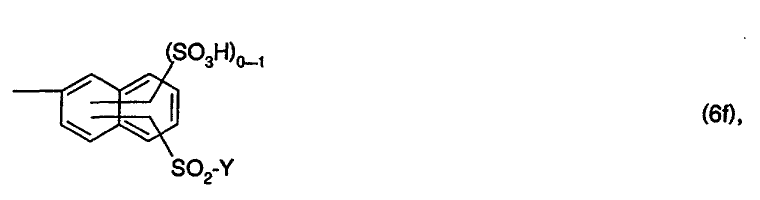 wherein
(R_{22c})₀₋₂ denotes from 0 to 2 identical or different substituents selected from the group sulfo, methyl and methoxy,
Z_{c} is α,β-dibromopropionylamino or α-bromoacryloylamino,
n is the number 2, 3 or 4 and
Y is vinyl, β-chloroethyl or β-sulfatoethyl.

9. A compound according to claim 8, wherein
D₁ and D₂ are radicals of formula (6c), wherein
(R_{22c})₀₋₂ denotes from 0 to 2 identical or different substituents selected from the group methyl and methoxy and
Y is vinyl or β-sulfatoethyl.

10. A process for the preparation of a compound of formula (1) according to claim 1, wherein approximately 1 molar equivalent of the compound of formula 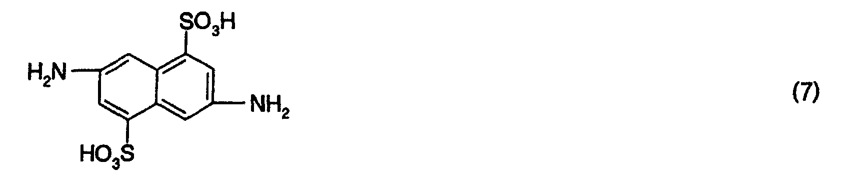 is tetraazotised with a nitrite in an acid medium, and the tetraazotised compound is coupled with approximately 1 molar equivalent of a coupling component of formula
K₁-H (8)
and with approximately 1 molar equivalent of a coupling component of formula
K₂-H (9)
wherein the definitions given in claim 1 for each of K₁ and K₂ apply.

11. A dye mixture comprising two or more compounds of formula (1) according to claim 1.

12. A dye mixture according to claim 11 comprising at least one compound from formulae (12a) and (12b) 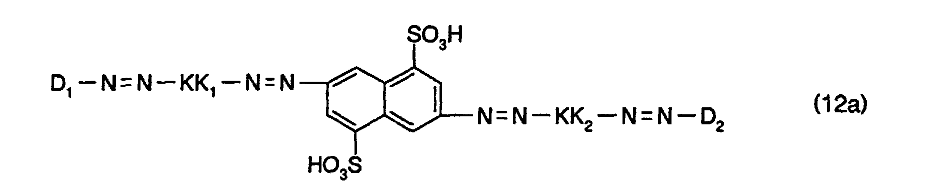 and 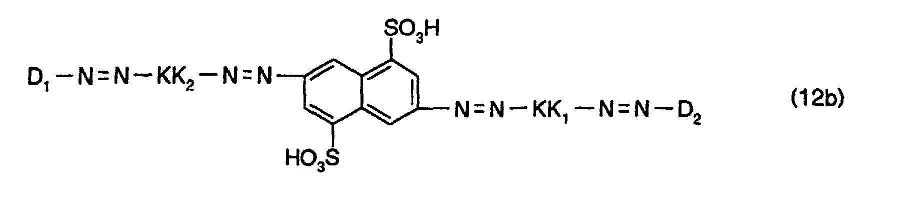 together with at least one compound from formulae (12c) and (12d) 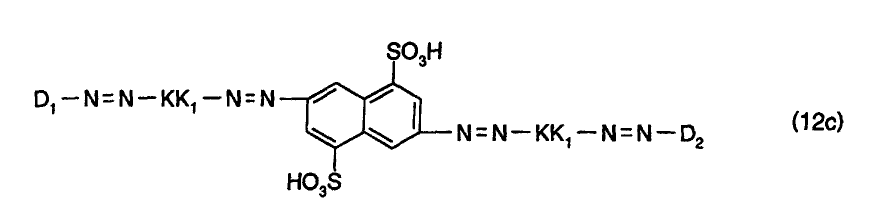 and 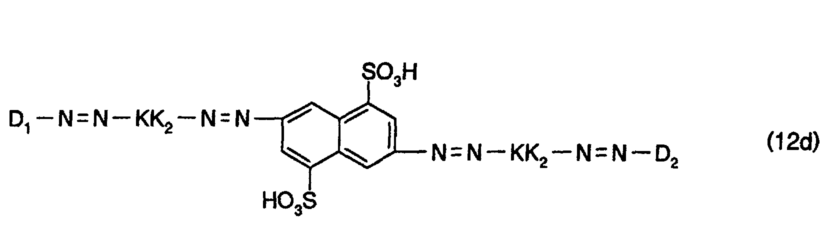 wherein
D₁ and D₂ are each independently of the other a radical of formula (6c), (6d), (6e) or (6f) 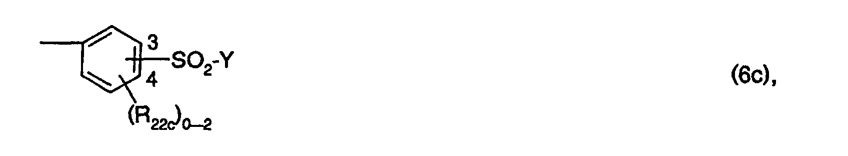 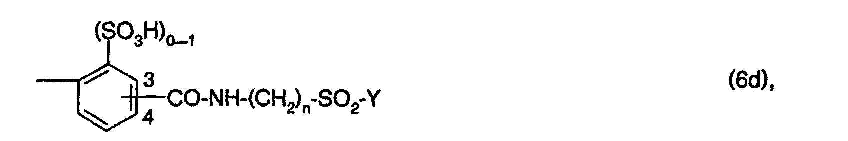 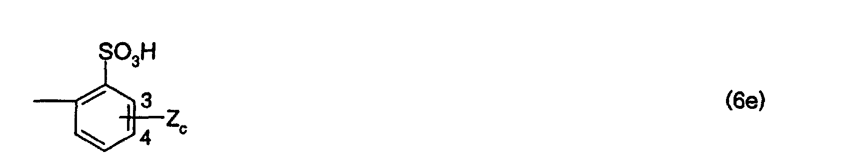 or 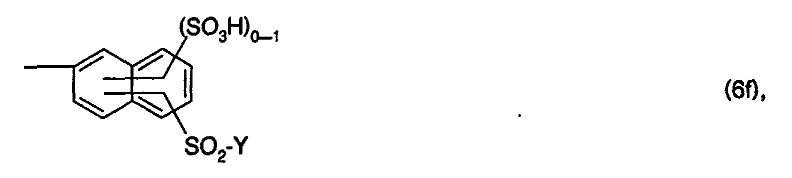 wherein
(R_{22c})₀₋₂ denotes from 0 to 2 identical or different substituents selected from the group sulfo, methyl and methoxy,
Z_{c} is α,β-dibromopropionylamino or α-bromoacryloylamino,
n is the number 2, 3 or 4 and
Y is vinyl, β-chloroethyl or β-sulfatoethyl,
KK₁ is the radical of 1-amino-8-hydroxynaphthalene-3,6-disulfonic acid (H acid) and
KK₂ is the radical of 1-amino-8-hydroxynaphthalene-4,6-disulfonic acid (K acid).

13. Use of a compound of formula (1) as a fibre-reactive dye for the dyeing or printing of hydroxyl-group-containing or nitrogen-containing fibre materials.

14. Use according to claim 13, wherein cellulosic fibre materials, especially cotton-containing fibre materials, are dyed or printed.

## Revendications

1. Composés de formule (1) 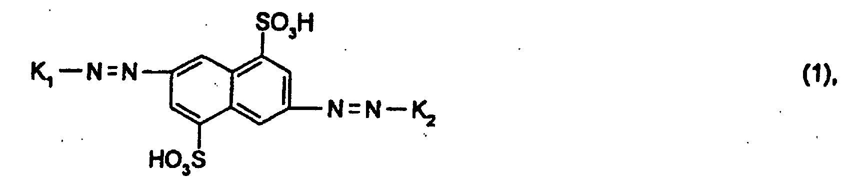 dans laquelle
K₁ et K₂ représentent, indépendamment l'un de l'autre, un groupe de formule : 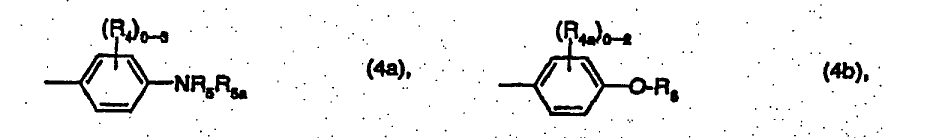 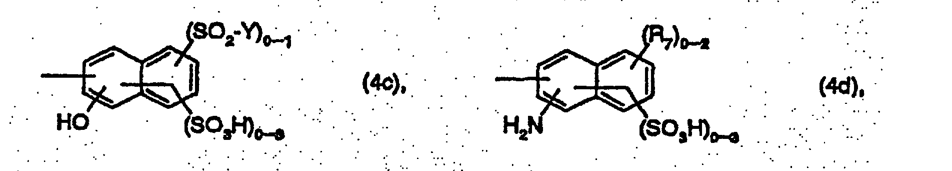 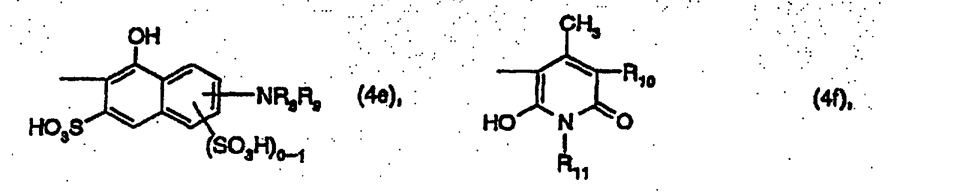 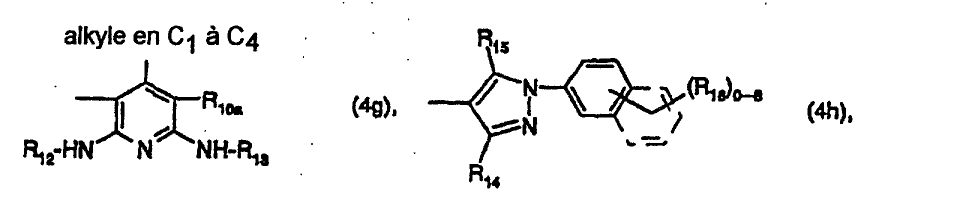 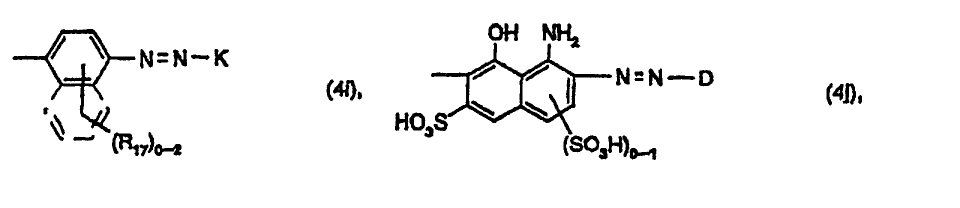 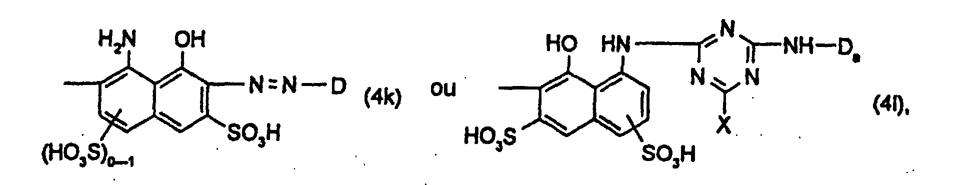 où
(R₄)_{0 à 3} représente 0 à 3 groupes, identiques ou différents, choisis parmi des groupes alkyle en C₁ à C₄, alcoxy en C₁ à C₄, alcoxy en C₁ à C₄ substitué par un groupe hydroxy, alcoxy en C₁ à C₄ ou sulfato dans sa partie alkyle, halogéno, carboxy, hydroxy, amino, N-mono- ou N,N-di-(alkyle en C₁ à C₂)amino, (alcanoyle en C₂ à C₄)amino, uréido, sulfo, (alkyle en C₁ à C₄)sulfonyloxy, (alkyle en C₁ à C₄)sulfonylamino et le groupe réactif de formule (2e) : 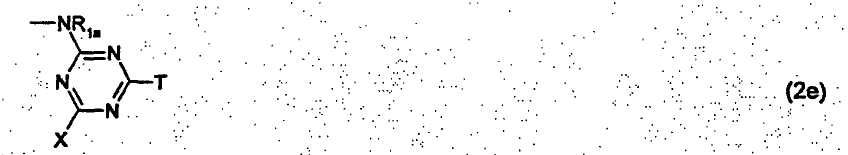 dans laquelle
X est un atome d'halogène, un groupe 3-carboxypyridin-1-yle ou 3-carbamoylpyridin-1-yle,
T, indépendamment de X, a la signification de X ou représente un groupe hydroxy, alcoxy en C₁ à C₄, phénoxy, (alkyle en C₁ à C₄)thio, morpholino, amino éventuellement substitué par un groupe non réactif aux fibres, ou un groupe réactif avec les fibres de formule (3a), (3b), (3c), (3d), (3e) ou (3f) : 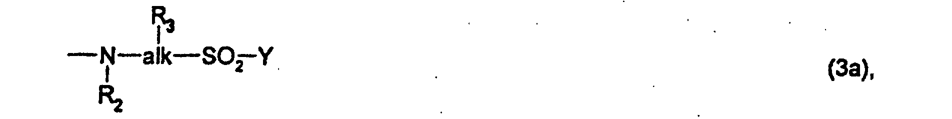 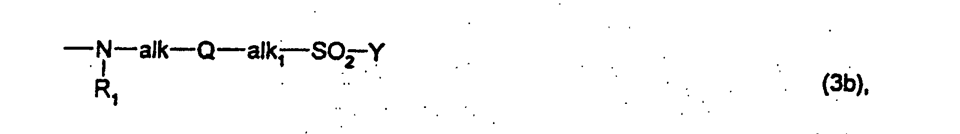 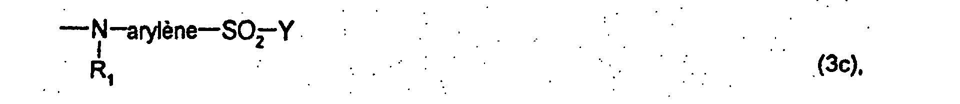 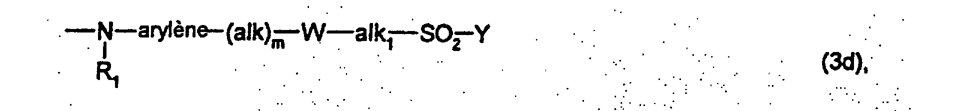 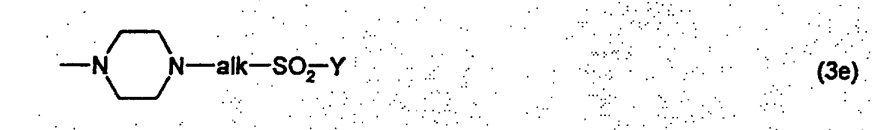 ou 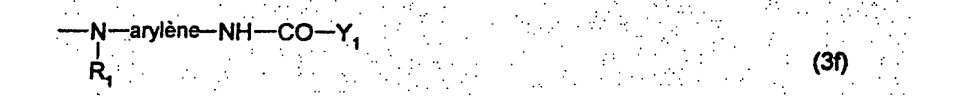 où
R₁ et R₁ₐ sont, indépendamment l'un de l'autre, un atome d'hydrogène ou un groupe alkyle en C₁ à C₄,
R₂ représente un atome d'hydrogène, un groupe alkyle en C₁ à C₄ éventuellement substitué par un groupe hydroxy, sulfo, sulfato, carboxy ou cyano, ou un groupe : 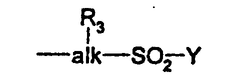 R₃ est un atome d'hydrogène, un groupe hydroxy, sulfo, sulfato, carboxy, cyano, halogéno, (alcoxy en C₁ à C₄)carbonyle, (alcanoyle en C₁ à C₄)oxy, carbamoyle ou le groupe -SO₂-Y,
alk et alk₁, indépendamment l'un de l'autre, sont des groupes alkylène en C₁ à C₆,
arylène représente un groupe phénylène ou naphtylène non substitué ou substitué par un groupe sulfo, carboxy, alkyle en C₁ à C₄, alcoxy en C₁ à C₄ ou halogéno,
Y₁ représente un groupe -CH(Hal)-CH₂-Hal ou -C(Hal)=CH₂ et Hal représente un atome de chlore ou de brome,
Q est un groupe -O- ou -NR₁-, dans lequel R₁ a la signification indiquée ci-dessus,
W représente un groupe -SO₂-NR₂, -CONR₂- ou -NR₂CO,
m vaut 0 ou 1, et
Y représente un groupe vinyle ou -CH₂-CH₂-U et U est un groupe quittant basique ;
(R₄ₐ)_{0 à 2} représente 0 ou 2 groupes, identiques ou différents, choisis parmi des groupes alkyle en C₁ à C₄, alcoxy en C₁ à C₄, phénoxy, halogéno, sulfo et hydroxy ;
R₅ est un atome d'hydrogène ou un groupe alkyle en C₁ à C₄ ;
R₅ₐ, indépendamment de R₅, a la signification de R₅ ou représente un groupe alcanoyle en C₂ à C₄, hydroxyalkyle en C₁ à C₄, sulfatoalkyle en C₁ à C₄, (alcoxy en C₁ à C₄)alkyle ou un groupe phényle éventuellement substitué par un groupe méthyle, méthoxy, chloro ou sulfo ;
R₆ représente un atome d'hydrogène, un groupe alkyle en C₁ à C₄ ou phényle ;
(R₇)_{0 à 2} représente 0 ou 2 groupes identiques ou différents, choisis parmi un groupe hydroxy et un groupe réactif avec les fibres de formule (2a)
-SO₂-Y (2a),
dans laquelle Y a la signification indiquée précédemment ;
R₈ est un atome d'hydrogène ou un groupe alkyle en C₁ à C₄ éventuellement substitué par un groupe hydroxy, alcoxy en C₁ à C₄, sulfato, sulfo, halogéno ou cyano ;
R₉, indépendamment de R₈, a la signification de R₈ ou est un groupe alcanoyle en C₂ à C₄ ou benzoyle, ou -NR₈R₉ représente un groupe réactif avec les fibres de formule (2e) indiquée précédemment ;
R₁₀ et R₁₀ₐ sont, indépendamment l'un de l'autre, un groupe carbamoyle, sulfométhyle ou cyano ;
R₁₁ représente un atome d'hydrogène ou un groupe alkyle en C₁ à C₄, lequel est éventuellement substitué par un groupe de formule (2e) mentionnée ci-dessus ;
R₁₂ et R₁₃ représentent, indépendamment l'un de l'autre, un atome d'hydrogène ou un groupe alkyle en C₁ à C₁₂ éventuellement substitué par un groupe hydroxy, alcoxy en C₁ à C₄, phénoxy, sulfato, sulfo, carboxy, amino ou N-mono- ou N,N-di-(alkyle en C₁ à C₄)amino, lequel peut être lui-même substitué, dans sa partie alkyle, par un groupe hydroxy, alcoxy en C₁ à C₄, phénoxy, sulfato, sulfo, carboxy ou par un groupe réactif avec les fibres de formule (2e) indiquée précédemment, et/ou, à l'exception du groupe méthyle, éventuellement interrompu par -O- ;
R₁₄ signifie un groupe méthyle ou carboxy ;
R₁₅ est un groupe hydroxy ou amino ;
(R₁₆)_{0 à 3} représente 0 à 3 groupes, identiques ou différents, choisis parmi un groupe sulfo, halogéno, hydroxy, alcoxy en C₁ à C₄, et alkyle en C₁ à C₄ ;
(R₁₇)_{0 à 2} représente 0 à 2 groupes identiques ou différents, choisis parmi des groupes alkyle en C₁ à C₄, alcoxy en C₁ à C₄, alcoxy en C₁ à C₄ substitué, dans sa partie alkyle, par un groupe hydroxy, alcoxy en C₁ à C₄ ou sulfato, (alcanoyle en C₂ à C₄)amino, uréido, halogéno et sulfo ;
K représente un groupe de formule indiquée précédemment (4a), (4b), (4c), (4d), (4e), (4f), (4g) ou (4h) ou (4j), (4k) ou (4l), et de préférence un groupe de formule (4e) ;
D est un groupe phényle ou 1- ou 2-naphtyle, qui porte 1 à 3 groupes identiques ou différents, choisis parmi des groupes sulfo, alkyle en C₁ à C₄, alcoxy en C₁ à C₄, halogéno et un reste réactif avec les fibres de formule (2a), (2b), (2c) ou (2d)
-SO₂-Y (2a),
-CONR₂-(CH₂)ₙ-SO₂-Y (2b),
-NH-CO-CH(Hal)-CH₂-Hal (2c)
ou
-NH-CO-C(Hal)=CH₂ (2d),
où
n est un chiffre entier de 1 à 6, et R₂, Hal et Y ont chacun la signification sus-mentionnée ;
Dₐ est le groupe d'un chromophore mono- ou diazoïque ; et
X et Y ont chacun la signification indiquée précédemment ;
au moins un des groupes K₁ et K₂ portant un groupe réactif avec les fibres.

2. Composés selon la revendication 1, **caractérisés en ce que** chacun des groupes K₁ et K₂ porte au moins un groupe réactif avec les fibres.

3. Composés selon l'un quelconque des revendications 1 et 2, **caractérisés en ce que** K₁ et K₂, indépendamment l'un de l'autre, représentent un groupe de formule (4c'), (4c''), (4d'), (4e'), (4f'), (4g'), (4h'), (4i'), (4j') ou (4k') : 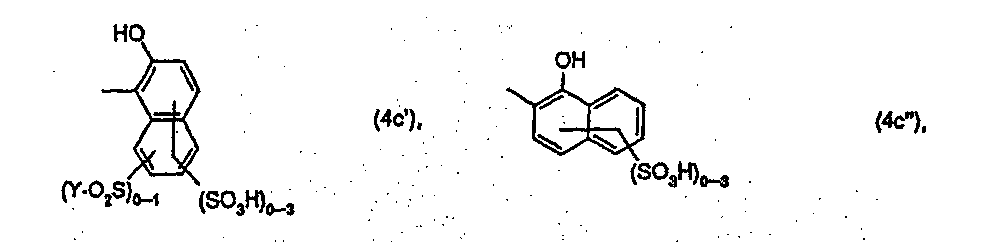 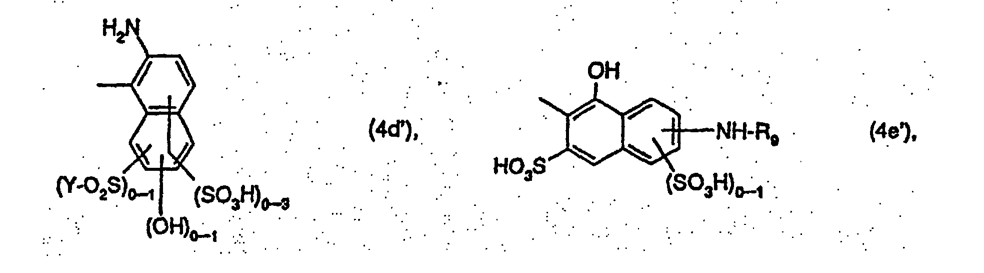 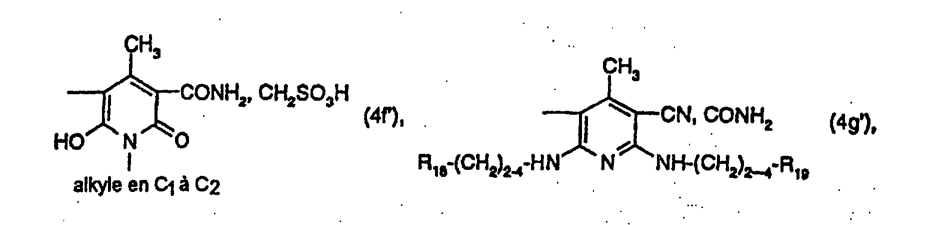 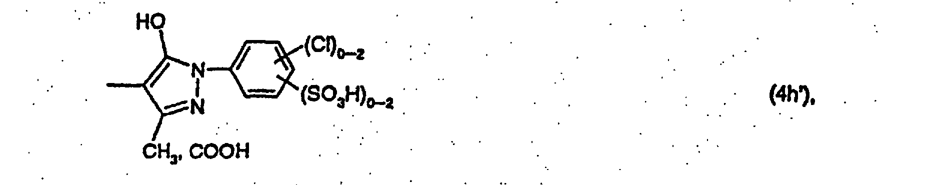 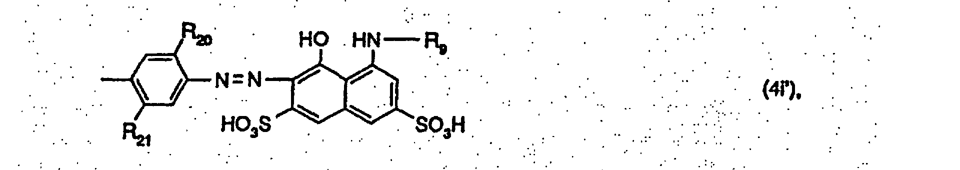 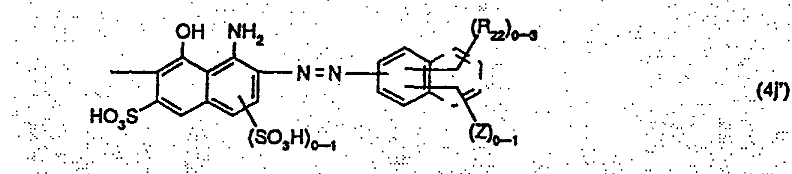 ou 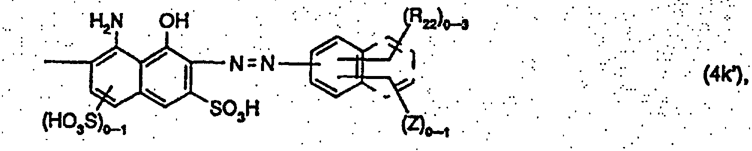 où
R₉ est un groupe acétyle ou un groupe de formule (2e') 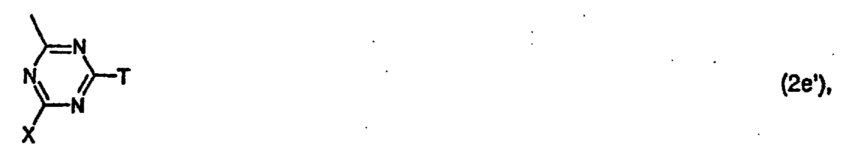 dans laquelle,
X est un atome d'halogène, et
T représente un groupe alcoxy en C₁ à C₄, (alkyle en C₁ à C₄)thio, hydroxy, amino, N-(alkyle en C₁ à C₄)amino, non substitué ou substitué par un groupe hydroxy, sulfato ou sulfo, morpholino, phénylamino ou N-(alkyle en C₁ à C4)amino, dans lequel l'alkyle est éventuellement substitué par un groupe hydroxy, sulfato ou sulfo, et le phényle est non substitué ou éventuellement substitué par un groupe sulfo, carboxy, acétylamino, méthyle ou méthoxy, ou un groupe réactif avec les fibres de formule (3c') ou (3d') 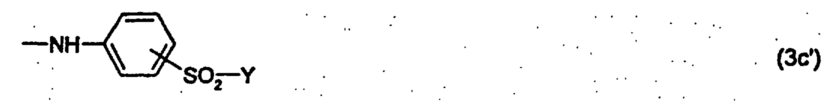 ou 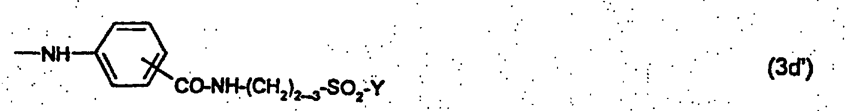 R₁₈ est un atome d'hydrogène, un groupe hydroxy ou sulfato,
R₁₉, indépendamment de R₁₈, a la signification de R₁₈ ou représente un groupe de formule (2c),
R₂₀ et R₂₁ représentent, indépendamment l'un de l'autre, un atome d'hydrogène, un groupe méthyle, méthoxy, 2-hydroxyéthoxy, 2-sulfatoéthoxy, acétylamino, propionylamino, uréido ou sulfo,
(R₂₂)_{0 à 3} signifie 0 à 3 groupes, identiques ou différents, choisis parmi des groupes sulfo, chloro, alkyle en C₁ à C₄ et alcoxy en C₁ à C₄,
(Z)_{0 à 1} représente éventuellement un groupe de formule (2a), (2b), (2c) ou (2d), et
Y est un groupe vinyle, β -bromo ou β -chloroéthyle, β -acétoxyéthyle, β -benzoyloxyéthyle, β -phosphatoéthyle, β -sulfatoéthyle et β -thiosulfatoéthyle, et de manière particulièrement préférée un groupe vinyle ou β -sulfatoéthyle.

4. Composés selon la revendication 3, **caractérisés en ce que** K₁ et K₂ représentent, indépendamment l'un de l'autre, un groupe de formule (4e'), (4j') ou (4k').

5. Composés selon l'une quelconque des revendications 1 à 4, **caractérisé en ce que** K₁ et K₂ sont identiques.

6. Composés selon l'une quelconque des revendications 1 à 5, **caractérisés en ce que** les composés de formule (1) sont des composés de formule (1a) 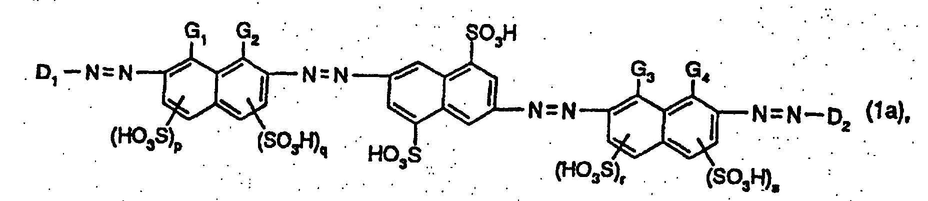 dans lesquels
D₁ est un groupe de formule (6a) 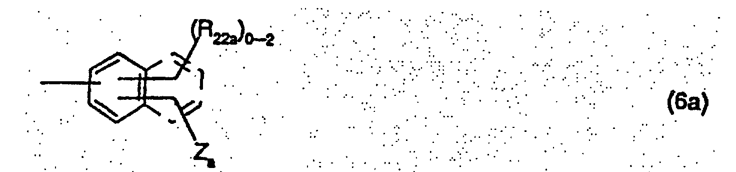 et D₂ est un groupe de formule (6b) 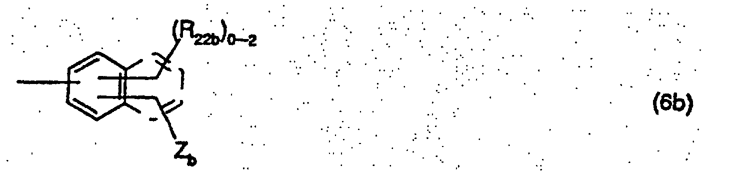 (R₂₂ₐ)_{0 à 2} et (R_{22b})_{0 à 2} représentent chacun, indépendamment l'un de l'autre, 0 à 2 substituants, identiques ou différents, choisis parmi des groupes sulfo, chloro, alkyle en C₁ à C₄ ou alcoxy en C₁ à C₄,
pour les groupes G₁ et G₂, l'un représente un groupe hydroxy et l'autre un groupe amino,
pour les groupes G₃ et G₄, l'un représente un groupe hydroxy et l'autre un groupe amino,
p, q, r et s valent, indépendamment les uns des autres, 0 ou 1, la somme de p et q étant égale à 1 ou 2, la somme de r et s étant égale à 1 où 2, et
Zₐ et Z_{b}, représentent, indépendamment l'un de l'autre, un groupe de formule (2a), (2b), (2c) ou (2d) :
-SO₂-Y (2a),
-CONR₂-(CH₂)ₙ-SO₂-Y (2b),
-NH-CO-CH(Hal)-CH₂-Hal (2c)
ou
-NH-CO-C(Hal)=CH₂ (2d),
où
n vaut 2, 3 ou 4,
Hal est un atome de chlore ou de brome, et
Y est un groupe vinyle ou un groupe -CH₂-CH₂-U, et U est un groupe quittant basique.

7. Composés selon la revendication 6, **caractérisés en ce que**
la somme de p et q vaut 2 et
la somme de r et s vaut 2.

8. Composés selon l'une quelconque des revendications 6 et 7, **caractérisés en ce que** les composés de formule (1a) sont des composés de formule (1b) ou (1c) 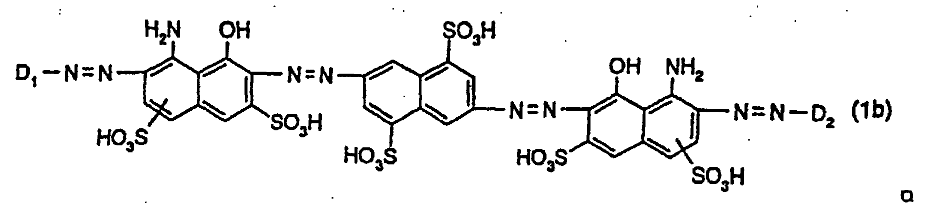 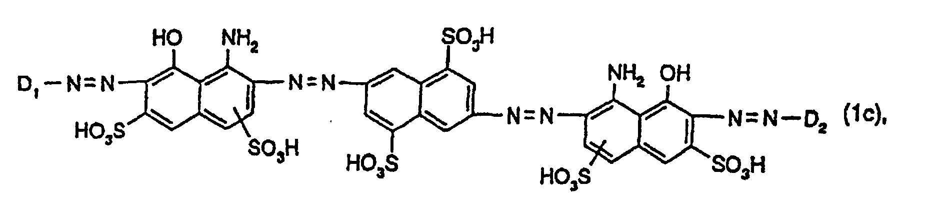 où
D₁ et D₂ sont, indépendamment l'un de l'autre, un groupe de formule (6c), (6d), (6e) ou (6f) 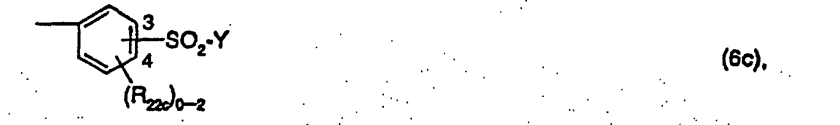 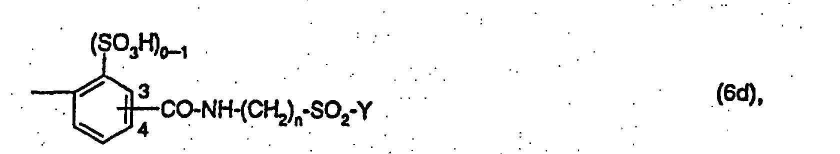 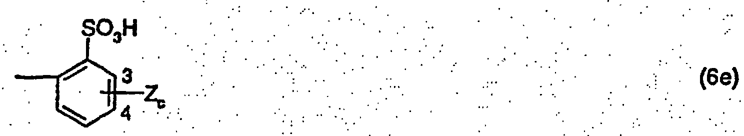 ou 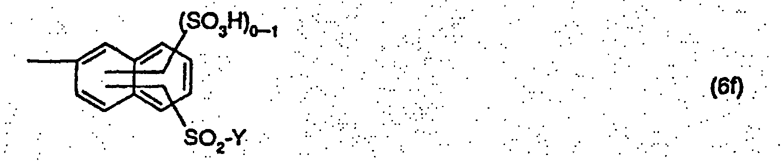 dans lesquelles
(R_{22c})_{0 à 2} représente 0 à 2 substituants, identiques ou différents, choisis parmi des groupes sulfo, méthyle ou méthoxy,
Z_{c} représente un groupe α, -dibromopropionylamino ou α-bromoacryloylamino,
n vaut 2, 3 ou 4, et
Y représente un groupe vinyle, β β -chloroéthyle ou β -sulfatoéthyle.

9. Composés selon la revendication 8, **caractérisés en ce que** :
D₁ et D₂ représentent un groupe de formule (6c), où (R_{22c})_{0 à 2} représente 0 à 2 substituants identiques ou différents l'un de l'autre, choisis parmi des groupes méthyle ou méthoxy, et
Y représente un groupe vinyle ou β -sulfatoéthyle.

10. Procédé de préparation des composés de formule (1) selon la revendication 1, **caractérisé par** les étapes consistant à tétraazoter l'équivalent d'une mole du composé de formule 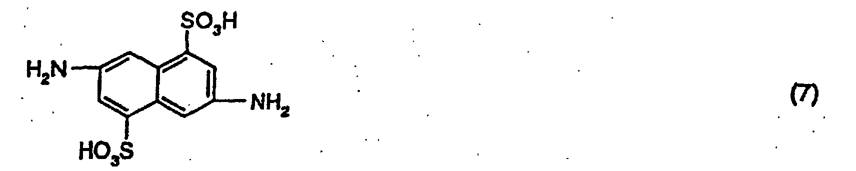 avec un nitrite, en milieu acide, et à copuler le composé tétraazoté avec l'équivalent d'environ 1 mole d'un composant de copulation de formule
K₁-H (8)
et l'équivalent d'environ 1 mole d'un composant de copulation de formule
K₂-H (9)
dans lequel K₁ et K₂ ont chacun les significations citées dans la revendication 1.

11. Mélange de colorants **caractérisé en ce qu'**il contient deux ou plusieurs composés de formule (1) selon la revendication 1.

12. Mélange de colorants selon la revendication 11, **caractérisé en ce qu'**il contient au moins un composé de formule (12a) et de formule (12b) 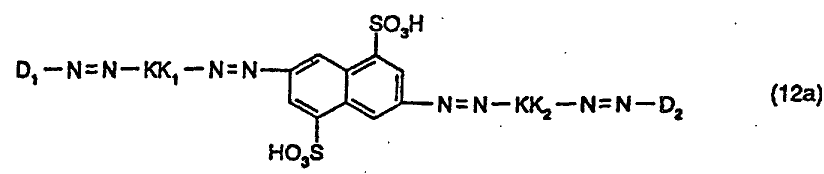 et 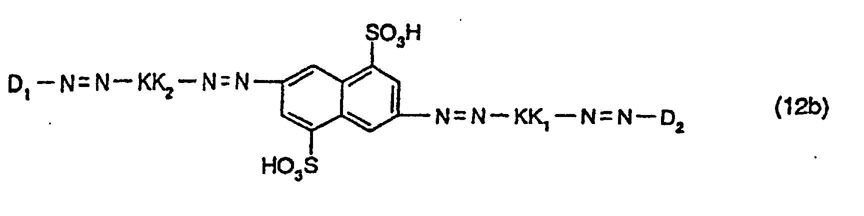 conjointement avec au moins un composé de formule (12c) et de formule (12d) : 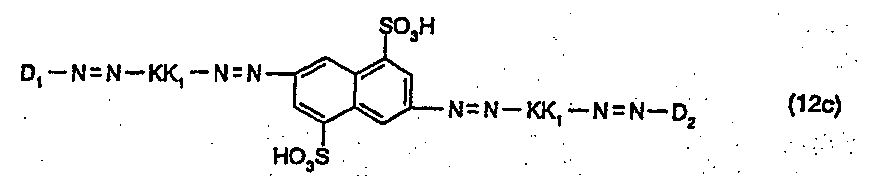 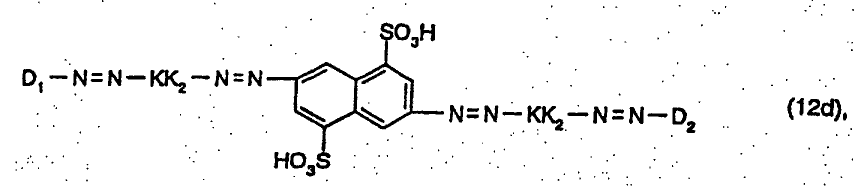 dans lesquels
D₁ et D₂ représentent, indépendamment l'un de l'autre, un groupe de formule (6c), (6d), (6e) ou (6f) 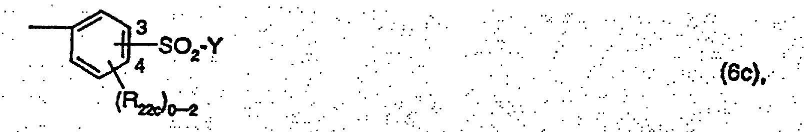 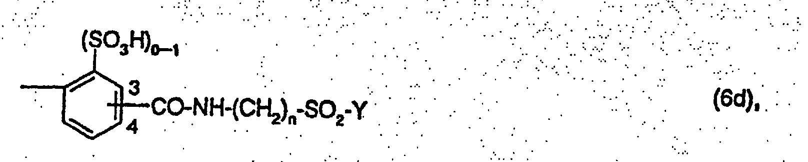 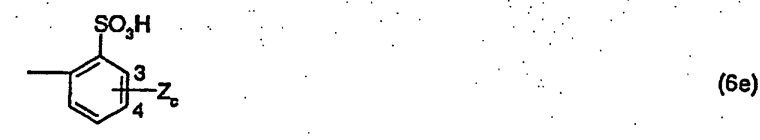 ou 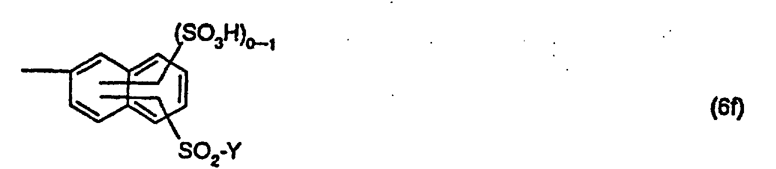 où
(R_{22c})_{0 à 2} représente 0 à 2 substituants identiques ou différents l'un de l'autre, choisis parmi des groupes méthyle ou méthoxy, et
Z_{c} représente un groupe α,β -dibromopropionylamino ou β -bromoacryloylamino,
n vaut 2, 3 ou 4 et
Y représente un groupe vinyle ou β -sulfatoéthyle.
KK₁, représente le groupe acide 1-amino-8-hydroxy-naphtalène-3,6-disulfonique (acide H) et
KK₂, représente le groupe acide 1-amino-8-hydroxy-naphtalène-4,6-disulfonique (acide K).

13. Utilisation des composés de formule (1) en tant que colorants réactifs pour la teinture ou l'impression de matières fibreuses contenant des groupes hydroxyle ou des atomes d'azote.

14. Utilisation selon la revendication 13, **caractérisée en ce que** l'on teinte ou l'on imprime des matières fibreuses contenant de la cellulose, en particulier des matières fibreuses contenant du coton.
